# EUROPÄISCHE PATENTSCHRIFT

(11) **EP 4 327 510 B1**
(45) Veröffentlichungstag und Bekanntmachung des Hinweises auf die Patenterteilung: **28.05.2025**
(21) Anmeldenummer: 22720385.8
(22) Anmeldetag: 01.04.2022
(51) Int. Cl.: H04L 9/40, H04L 9/32, H04L 9/14

(54) **ERSTELLEN EINER KRYPTOGRAPHISCH ABGESICHERTEN ELEKTRONISCHEN IDENTITÄT**
CREATION OF A CRYPTOGRAPHICALLY SECURE ELECTRONIC IDENTITY
CRÉATION D'UNE IDENTITÉ ÉLECTRONIQUE SÉCURISÉE PAR CRYPTOGRAPHIE

(30) Priorität: 21.04.2021 DE 102021110143
(43) Veröffentlichungstag der Anmeldung: 28.02.2024
(73) Patentinhaber: Bundesdruckerei GmbH, 10969 Berlin (DE)
(72) Erfinder: DIETRICH, Frank, 12437 Berlin (DE); SCHWAN, Matthias, 13086 Berlin (DE)
(74) Vertreter: Richardt Patentanwälte PartG mbB
(86) Internationale Anmeldenummer: PCT/EP2022/058739
(87) Internationale Veröffentlichungsnummer: WO 2022/223262

(56) Entgegenhaltungen:
- DE-A1- 102010 030 590
- DE-A1- 102013 202 001
- US-A1- 2019 036 688
- US-A1- 2021 067 338

## Beschreibung

Die Erfindung betrifft ein Verfahren zum Erstellen einer kryptographisch abgesicherten elektronischen Identität eines Nutzers auf einem mobilen Endgerät, sowie ein mobiles Endgerät und ein System zum Ausführen des Verfahrens.

Mobile Endgeräte, wie beispielsweise Smartphones, sind allgegenwärtig. Sie werden in vielen Lebensbereichen und Situationen zur Erfüllung verschiedenster Aufgaben im digitalen Bereich bzw. unter Zuhilfenahme digitaler Hilfsmittel verwendet. Mithin müssen entsprechende mobile Endgeräte in der Lage sein, auch hohen Sicherheitsanforderungen zu erfüllen. Die Sicherheit mobiler Endgeräte, wie Smartphones, ist daher zu einer relevanten Anforderung geworden für die Hersteller der Geräte, für die Hersteller der auf den Geräten installierten Programmen sowie Anbieter von Dienstleistungen, welche unter Verwendung der Geräte genutzt werden können. Um die kryptographische Sicherheit solcher mobilen Endgeräte sicherzustellen, werden diese Endgeräte von den Herstellern mit Mitteln, wie etwa Sicherheitselementen, zum Bereitstellen von kryptographischen Verfahren und von Schlüsselmaterial versehen. Diese Mittel stehen aber in der ausschließlichen Verfügungshoheit der Gerätehersteller. Für die Hersteller und Anbieter von Anwendungen für derartige mobile Endgeräte stellt sich mithin die Herausforderung, wie sie eigenständig die kryptographische Sicherheit der von ihnen bereitgestellten Anwendungsprogramme sicherstellen können. Diese Herausforderung stellt sich insbesondere, wenn ein entsprechendes Anwendungsprogramm als ID-Anwendungsprogramm eine elektronische Identität eines Nutzers des mobilen Endgeräts verwalten soll.

Die US 2019/036688 A1 beschreibt Verfahren, System und Gerät zur Bereitstellung sicherer Kommunikation. Das Gerät enthält ein Sicherheitselement zum Erzeugen von Anwendungsschlüsselpaaren. Das Gerät umfasst eine vertrauenswürdige Umgebung, die physisch oder logisch von einer nicht vertrauenswürdigen Umgebung isoliert ist. Die vertrauenswürdige Umgebung umfasst einen oder mehrere Prozessoren, die für die Ausführung von Vorgängen einer Anwendung konfiguriert sind. Zu den Vorgängen gehört das Erzeugen eines Anwendungsschlüsselpaars. Das Anwendungsschlüsselpaar umfasst einen privaten Schlüssel des Sicherheitselements und einen öffentlichen Schlüssel des Sicherheitselements. Zu den Vorgängen gehört das Senden einer Anwendungsauthentifizierungsanforderung einschließlich einer oder mehrerer Gerätekennungen und des öffentlichen Schlüssels des Sicherheitselements an einen Server. Zu den Vorgängen gehört das Erhalten eines digitalen Zertifikats, das den öffentlichen Schlüssel des Sicherheitselements und die eine oder mehreren Gerätekennungen enthält. Zu den Vorgängen gehören die Bereitstellung des digitalen Zertifikats für ein zweites Gerät und die Einrichtung eines sicheren Kommunikationskanals zwischen dem Gerät und dem zweiten Gerät unter Verwendung des digitalen Zertifikats.

Der Erfindung liegt die Aufgabe zugrunde, ein verbessertes Verfahren zum Erstellen einer kryptographisch abgesicherten elektronischen Identität auf einem mobilen Endgerät zu schaffen.

Die der Erfindung zugrunde liegende Aufgabe wird jeweils mit den Merkmalen der unabhängigen Patentansprüche gelöst. Ausführungsformen der Erfindung sind in den abhängigen Patentansprüchen angegeben.

Ausführungsformen umfassen ein Verfahren zum Erstellen einer kryptographisch abgesicherten elektronischen Identität eines Nutzers auf einem mobilen Endgerät, welches ein Sicherheitselement umfasst. Auf dem mobilen Endgerät ist ein ID-Anwendungsprogramm zum Bereitstellen der elektronischen Identität installiert. Das ID-Anwendungsprogramm umfasst eine Kontrollkomponente zum Kontrollieren des Erstellens der elektronischen Identität. Das ID-Anwendungsprogramm umfasst ferner eine Provisionierungskomponente zum Ausführen eines Provisionierens des ID-Anwendungsprogramms im Zuge des Erstellens der kryptographisch abgesicherten elektronischen Identität.

Das Provisionieren des ID-Anwendungsprogramms umfasst:
- auf eine Sicherheitsinspektionsanfrage der Provisionierungskomponente hin, Ausführen einer Remote-Sicherheitsinspektion der Sicherheitsinfrastruktur des mobilen Endgeräts unter Verwendung der Kontrollkomponente durch einen Personalisierungsserver über ein Netzwerk,
- Empfangen eines Ergebnisses der Remote-Sicherheitsinspektion des Personalisierungsservers, welches die Kontrollkomponente an die Provisionierungskomponente weiterleitet,
- auf ein positives Ergebnis der Remote-Sicherheitsinspektion hin, Senden einer Schlüsselerzeugungsanfrage der Provisionierungskomponente an die Kontrollkomponente, welche die Kontrollkomponente an das Sicherheitselement weiterleitet,
- in Antwort auf die Schlüsselerzeugungsanfrage, Erzeugen eines dem ID-Anwendungsprogramm zugeordneten ersten asymmetrischen Schlüsselpaars und eines dem ID-Anwendungsprogramm zugeordneten zweiten asymmetrischen Schlüsselpaars durch das Sicherheitselement, wobei das erste asymmetrische Schlüsselpaar einen ersten privaten kryptographischen Schlüssel und einen ersten öffentlichen kryptographischen Schlüssel umfasst, wobei das zweite asymmetrische Schlüsselpaar einen zweiten privaten kryptographischen Schlüssel und einen zweiten öffentlichen kryptographischen Schlüssel umfasst, wobei das Sicherheitselement den ersten und zweiten öffentlichen kryptographischen Schlüssel an die Kontrollkomponente sendet, welche die beiden öffentlichen kryptographischen Schlüssel an die Provisionierungskomponente weiterleitet,
- auf einen Empfang der beiden öffentlichen kryptographischen Schlüssel hin, Erstellen einer Zertifikatsanfrage durch die Provisionierungskomponente zum Erstellen eines den ersten öffentlichen kryptographischen Schlüssel umfassenden Zertifikats des ID-Anwendungsprogramms, wobei die Zertifikatsanfrage den ersten öffentlichen kryptographischen Schlüssel umfasst,
- Senden der Zertifikatsanfrage durch die Provisionierungskomponente über das Netzwerk an den Personalisierungsserver, wobei die Zertifikatsanfrage den ersten öffentlichen kryptographischen Schlüssel umfasst, wobei die Provisionierungskomponente zusätzlich zu der Zertifikatsanfrage den zweiten öffentlichen kryptographischen Schlüssel an den Personalisierungsserver sendet,
- in Antwort auf die Zertifikatsanfrage, Empfangen des von dem Personalisierungsserver erstellten Zertifikats mit dem ersten öffentlichen kryptographischen Schlüssel sowie eines Wurzelzertifikats einer Wurzelinstanz einer PKI durch die Personalisierungskomponente,
- Speichern des Zertifikats des ID-Anwendungsprogramms und des Wurzelzertifikats auf dem mobilen Endgerät.

Ausführungsformen können den Vorteil haben, dass sie ein Erstellen einer kryptographisch abgesicherten elektronischen Identität eines Nutzers auf einem mobilen Endgerät, genauer gesagt in einem ID-Anwendungsprogramm, ermöglichen. Hierzu stellt das mobile Endgerät ein Sicherheitselement bereit. Ein solches Sicherheitselement stellt beispielsweise kryptographische Schlüssel sowie kryptographische Algorithmen zur kryptographischen Absicherung des mobilen Endgeräts und der darauf installierten Anwendungsprogramme zur Verfügung. Das Erstellen der kryptographisch abgesicherten elektronischen Identität umfasst beispielsweise ein Provisionieren des ID-Anwendungsprogramms, d.h. ein Bereitstellen kryptographischer Infrastruktur, insbesondere kryptographischer Schlüssel, welche für ein Personalisieren, d.h. ein Einbringen der elektronischen Identität in das ID-Anwendungsprogramm, benötigt werden. Zum Ausführen des Provisionierens umfasst das ID-Anwendungsprogramm eine Provisionierungskomponente. Ferner umfasst das ID-Anwendungsprogramm eine Kontrollkomponente. Die entsprechende Kontrollkomponente ist beispielsweise dazu konfiguriert, das Einrichten des ID-Anwendungsprogramms sowie dessen Ausführung zu kontrollieren.

Ausführungsformen können den Vorteil haben, dass im Zuge des Provisionierens zunächst eine externe Sicherheitsinspektion der Sicherheitsinfrastruktur des mobilen Endgeräts erfolgt. Auf eine Sicherheitsinspektionsanfrage der Provisionierungskomponente hin, führt ein Personalisierungsserver unter Verwendung der Kontrollkomponente eine Sicherheitsinspektion der Sicherheitsinfrastruktur des mobilen Endgeräts für das ID-Anwendungsprogramm über ein Netzwerk durch. Beispielsweise erfasst die Kontrollkomponente Merkmale der Sicherheitsinfrastruktur bzw. fragt diese ab und sendet diese an den Personalisierungsserver, welcher die zur Verfügung gestellte Informationen prüft. Das Ergebnis der Remote-Sicherheitsinspektion sendet der Personalisierungsserver an die Kontrollkomponente, welche dieses an die Provisionierungskomponente weiterleitet. Auf ein positives Ergebnis der Remote-Sicherheitsinspektion hin, beginnt die Provisionierungskomponente mit der eigentlichen Provisionierung. Hierzu sendet die Provisionierungskomponente eine Schlüsselerzeugungsanfrage an die Kontrollkomponente, welche die Schlüsselerzeugungsanfrage an das Sicherheitselement weiterleitet. Auf die Schlüsselanfrage hin erzeugt das Sicherheitselement zwei asymmetrische Schlüsselpaare für das ID-Anwendungsprogramm. Das erste asymmetrische Schlüsselpaar des ID-Anwendungsprogramms umfasst einen privaten kryptographischen Schlüssel sowie einen ersten öffentlichen kryptographischen Schlüssel. Das zweite asymmetrische Schlüsselpaar des ID-Anwendungsprogramms umfasst einen zweiten privaten kryptographischen Schlüssel sowie einen zweiten öffentlichen kryptographischen Schlüssel des ID-Anwendungsprogramms. Das Sicherheitselement stellt in Antwort auf die Schlüsselerzeugungsanfrage die beiden erzeugten öffentlichen kryptographischen Schlüssel zur Verfügung. Diese werden beispielsweise an die Kontrollkomponente gesendet, welche sie an die Provisionierungskomponente weiterleitet.

Auf den Empfang der beiden öffentlichen kryptographischen Schlüssel hin, erstellt die Provisionierungskomponente eine Zertifikatsanfrage zum Erstellen eines den ersten öffentlichen kryptographischen Schlüssel umfassenden Zertifikats des ID-Anwendungsprogramms. Diese Zertifikatsanfrage mit dem ersten öffentlichen kryptographischen Schlüssel sendet die Provisionierungskomponente über das Netzwerk an den Personalisierungsserver. Zusätzlich zu der Zertifikatsanfrage sendet die Provisionierungskomponente den zweiten öffentlichen kryptographischen Schlüssel an den Personalisierungsserver. In Antwort auf die Zertifizierungsanfrage erstellt der Personalisierungsserver ein Zertifikat mit dem ersten öffentlichen kryptographischen Schlüssel des ID-Anwendungsprogramms und sendet dieses an die Provisionierungskomponente. Zusätzlich zu dem erstellten Zertifikat sendet der Personalisierungsserver ein Wurzelzertifikat einer Wurzelinstanz einer PKI. Das empfangene Zertifikat des ID-Anwendungsprogramms sowie das Wurzelzertifikat werden auf dem mobilen Endgerät gespeichert. Beispielsweise leitet die Provisionierungskomponente das Wurzelzertifikat zur weiteren Verwendung an die Kontrollkomponente weiter, welche das Wurzelzertifikat speichert.

Zusätzlich zum Erstellen des Zertifikats des ID-Anwendungsprogramms führt der Personalisierungsserver beispielsweise eine Überprüfung von Attestierungsinformationen zu den beiden öffentlichen kryptographischen Schlüssel durch. Eine Schlüsselattestierung bzw. Key Attestation bescheinigt, dass kryptographische Schlüssel, wie etwa öffentliche kryptographische Schlüssel, unter Einhaltung eines vordefinierten Satzes von Sicherheitsanforderungen erstellt wurde und/oder dass das die kryptographischen Schlüssel erstellende Sicherheitselement den vordefinierten Satz von Sicherheitsanforderungen erfüllt. Mit der Zertifikatsanfrage werden beispielsweise Attestierungsinformationen zu den beiden öffentlichen kryptographischen Schlüsseln gesendet, welche die Erzeugung der beiden Schlüssel durch das Sicherheitselement sowie das Einhalten vordefinierter Sicherheitsanforderungen durch das Sicherheitselement beim Erzeugen der entsprechenden Schlüssel attestieren. Bei Überprüfung dieser Attestierungsinformationen wird geprüft, ob bei der Erzeugung der Schlüssel vonseiten des Personalisierungsservers vorgegebene Anforderungen erfüllt wurden. Beispielsweise ist ein Erfüllen der entsprechenden Anforderungen eine Voraussetzung für das Erstellen des Zertifikats des ID-Anwendungsprogramms. Das erzeugte Zertifikat sowie der zweite öffentliche kryptographische Schlüssel werden beispielsweise auf dem Personalisierungsserver gespeichert.

Das erste asymmetrische Schlüsselpaar, über welches das Sicherheitselement verfügt und für welches von dem Personalisierungsserver ein Zertifikat ausgestellt wurde, ermöglicht es dem ID-Anwendungsprogramm, sich gegenüber anderen Instanzen zu authentisieren. Das Zertifikat belegt eine Authentizität des ersten öffentlichen kryptographischen Schlüssels. Dieser erste öffentliche kryptographische Schlüssel kann beispielsweise als ein Signaturprüfschlüssel für Signaturen verwendet werden, welche mit dem ersten privaten kryptographischen Schlüssel erstellt wurden. Somit kann eine Instanz, welcher das Zertifikat mit dem ersten öffentlichen kryptographischen Schlüssel vorliegt, Signaturen überprüfen, welche das Sicherheitselement mit dem ersten privaten kryptographischen Schlüssel als Signaturschlüssel für das ID-Anwendungsprogramm erstellt hat.

Das zweite asymmetrische Schlüsselpaar, dessen zweiter öffentlicher kryptographischer Schlüssel dem Personalisierungsserver vorliegt, ermöglicht ein Authentisieren des ID-Anwendungsprogramms gegenüber dem Personalisierungsserver. Der Personalisierungsserver kann unter Verwendung des öffentlichen kryptographischen Schlüssels als Signaturprüfschlüssel Signaturen prüfen, welche von dem Sicherheitselement mit dem zweiten privaten kryptographischen Schlüssel für das ID-Anwendungsprogramm erstellt wurden. Ferner kann der zweite öffentliche kryptographische Schlüssel von dem Personalisierungsserver beispielsweise zum Berechnen eines symmetrischen kryptographischen Sitzungsschlüssels zur Verschlüsselung einer Kommunikation zwischen dem Personalisierungsserver und dem ID-Anwendungsprogramm verwenden. Hierzu kann beispielsweise ein Diffie-Hellmann-Verfahren zum Berechnen des symmetrischen kryptographischen Schlüssels verwendet werden.

Ein mobiles Endgerät, wie etwa Smartphones, mit einem ID-Anwendungsprogramm, welches eine elektronische Identität des Nutzers des mobilen Endgeräts bereitstellt, kann beispielsweise als Identitätsnachweis, Authentisierungs- und Autorisierungstoken in elektronischen Geschäftsprozessen dienen. Hierbei wird der Nutzer des mobilen Endgeräts beispielsweise durch den Dienst, welchen er in Anspruch nehmen möchte, sicher authentifiziert werden. Beispielsweise erfolgt ein Auslesen von Attributen der elektronischen Identität zum Authentifizieren durch einen ID-Provider Server eines ID-Provider-Dienstes, welcher dem entsprechenden Dienst die entsprechenden Attribute zum Authentifizieren des Nutzers zur Verfügung stellt. Ein Gerätehersteller bietet beispielsweise auf den von ihm hergestellten mobilen Endgerät Verfahren an, die eine sichere NutzerAuthentisierung, z.B. durch biometrische Merkmale, ermöglichen. Hersteller von Applikationen können sowohl diese Funktionalität, als auch weitere Funktionen eines von dem jeweiligen Gerätehersteller auf dem mobilen Endgerät bereitgestellten, beispielsweise auf Hardware basierenden, Sicherheitselements, einem sog. KeyStore, für den Umgang mit kryptographischem Schlüsselmaterial nutzen. Dadurch wird es möglich, eine sichere Bindung des Nutzers mit dem mobilen Endgerät herzustellen. Es wird eine elektronische Identität des an das mobile Endgerät gebundenen Nutzers erstellt und personalisiert. Die so erstellte elektronische Identität wird dem zur Verwendung durch das ID-Anwendungsprogramm bereitgestellt.

Zum Erstellen einer kryptographisch abgesicherten elektronischen Identität des Nutzers des mobilen Endgeräts erfolgt eine Provisionierung des mobilen Endgerätes zum Zweck der Bindung des Nutzers an das entsprechende Gerät und ein auf dem mobilen Endgerät installierten ID-Anwendungsprogramm zum Verwenden der elektronischen Identität. Im Zuge einer Personalisierung der elektronischen Identität auf dem mobilen Endgerät wird die entsprechende Identität des Nutzers von einer vorhandenen elektronischen Identität abgeleitet, welche mittels eines ID-Token bereitgestellt wird. Die so personalisierte elektronische Identität wird unter Kontrolle des zuvor gebundenen Nutzers verwendet.

Zum Provisionieren des gerätespezifischen Sicherheitselements wird in dem gerätespezifischen Sicherheitselement kryptographisches Schlüsselmaterial, etwa ein asymmetrisches Schlüsselpaar, mit Verbindung zu einer PIN, insbesondere einer System-PIN, und/oder biometrischen Merkmalen des Nutzers des mobilen Endgeräts erzeugt. Bei einer System-PIN handelt es sich beispielsweise um eine dem Betriebssystem des entsprechenden mobilen Endgeräts zugeordnete PIN des Nutzers. Ferner wird für das in dem gerätespezifischen Sicherheitselement erzeugte Schlüsselmaterial ein Zertifikat von einem Provisionierungsdienst, welchen ein Personalisierungsserver über ein Netzwerk bereitstellt, angefordert. Zum Personalisieren des ID-Anwendungsprogramms wird eine durch gegenseitige Authentisierung gesicherte Verbindung bzw. ein gesicherter Übertragungskanal von dem mobilen Endgerät zu einem Personalisierungsdienst aufgebaut, welchen ein Personalisierungsserver über ein Netzwerk bereitstellt, aufgebaut. Eine nutzerseitige Authentisierung umfasst beispielsweise ein Erfassen biometrischer Merkmale des Nutzers und/oder ein Eingeben einer PIN, insbesondere einer System-PIN, des mobilen Endgerätes durch den Nutzer. Ferner wird ein elektronisches Identitätsdokument bzw. ID-Token des Nutzers von dem Personalisierungsserver über das mobile Endgerät ausgelesen. Dies erfolgt in Verbindung mit einer Nutzerauthentisierung gegenüber dem elektronischen Identitätsdokument, etwa einer Eingabe einer Dokumenten-PIN durch den Nutzer. Für die Personalisierung notwendige Informationen bzw. Attribute werden von dem elektronischen Identitätsdokument über den zuvor aufgebauten gesicherten Übertragungskanal an den Personalisierungsserver übertragen. Ferner wird ein Ende-zu-Ende verschlüsselter Kanal zwischen dem ID-Anwendungsprogramm auf dem mobilen Endgerät und dem Personalisierungsserver unter Verwendung des aufgebauten Kommunikationskanals aufgebaut. Im Zuge dieses Aufbaus authentisiert sich das ID-Anwendungsprogramm gegenüber dem Personalisierungsserver und der Personalisierungsserver gegenüber dem ID-Anwendungsprogramm. Schließlich wird das auf dem mobilen Endgerät installierte ID-Anwendungsprogramm durch den Personalisierungsserver mit den aus dem elektronischen Identitätsdokument ausgelesenen Daten des Nutzers sowie den notwendigen kryptographischen Schlüsseln personalisiert.

Die auf dem mobilen Endgerät erstellte und von dem ID-Token abgeleitete elektronische Identität wird mittels des gerätespezifischen Sicherheitselements zum Bereitstellen von Identitätsinformationen bzw. Attributen des Nutzers verwendet. Die Attribute werden beispielsweise einem anfragenden ID-Provider-Server bereitgestellt. Ein entsprechendes Bereitstellen umfasst eine Nutzerauthentisierung gegenüber dem ID-Anwendungsprogramm, eine Authentifizierung des ID-Provider-Servers durch das ID-Anwendungsprogramm und eine Authentisierung des ID-Anwendungsprogramm gegenüber dem ID-Provider-Server, sowie ein Übertragen der Attribute an den ID-Provider-Server.

Durch das Verfahren zum Provisionieren des auf einem mobilen Endgerät installierten ID-Anwendungsprogramms mit den kryptographischen Schlüsseln wird das mobile Endgerät beispielsweise zur späteren kryptographisch abgesicherten Personalisierung mit Identitätsinformationen bzw. Attributen des Nutzers des mobilen Endgeräts und dessen Bindung an das mobile Endgerät vorbereitet. Dies kann ohne die Notwenigkeit eines externen Zugriffs auf das Sicherheitselement des mobilen Endgerätes und somit beispielsweise unabhängig vom Gerätehersteller erfolgen. Es ist nicht notwendig externes Schlüsselmaterial oder Software in das Sicherheitselement einzubringen. Ein mit einer entsprechenden von dem ID-Anwendungsprogramm verwalteten elektronischen Identität versehenes mobiles Endgerät ermöglicht eine Identifizierung und/oder Authentifizierung des Nutzers des mobilen Endgeräts. Hierbei wird eine Authentisierung des Nutzer gegenüber dem vom Gerätehersteller unabhängige ID-Anwendungsprogramm unter Verwendung des vom Gerätehersteller abhängigen Sicherheitselements ermöglicht. Der Nutzer authentisiert sich gegenüber diesem Sicherheitselement, welches eine erfolgreiche Nutzerauthentifizierung gegenüber dem ID-Anwendungsprogramm, beispielsweise der von dem ID-Anwendungsprogramm umfassten Kontrollkomponente, bestätigt.

Durch das Provisionieren und Personalisieren des auf dem mobilen Endgerät installierten ID-Anwendungsprogramms wird eine abgeleitete elektronische Identität mit Bindung an den Nutzer des mobilen Endgeräts erstellt und zur Verwendung durch das ID-Anwendungsprogramm bereitgestellt. Das vom Gerätehersteller unabhängige ID-Anwendungsprogramm ermöglicht eine Identifizierung und/oder Authentifizierung des Nutzers des mobilen Endgeräts mit der elektronischen Identität, welche das ID-Anwendungsprogramm verwaltet. Hierbei wird eine Authentisierung des Nutzer gegenüber dem vom Gerätehersteller unabhängige ID-Anwendungsprogramm unter Verwendung eines vom Gerätehersteller abhängigen Sicherheitselement des mobilen Endgeräts ermöglicht. Der Nutzer authentisiert sich gegenüber diesem Sicherheitselement, was beispielsweise Voraussetzung für eine Verwendung der Attribute der elektronischen Identität durch das ID-Anwendungsprogramm ist. Die erfolgreiche Nutzerauthentifizierung durch das Sicherheitselement wird dem ID-Anwendungsprogramm durch das Sicherheitselement bestätigt. Beispielsweise setzt eine Verwendung der Attribute ein Ausführen kryptographischer Operationen voraus, wie etwa das Erzeugen eines Geheimnisses unter Verwendung eines kryptographischen Schlüssels, welche dem ID-Anwendungsprogramm zugeordnet und auf dem Sicherheitselement gespeichert sind. Eine Verwendung des entsprechenden kryptographischen Schlüssels setzt wiederum ein erfolgreiche Nutzerauthentifizierung voraus. Ein Bereitstellen des Ergebnisses der entsprechenden kryptographischer Operationen, wie etwa des Geheimnisses, durch das Sicherheitselement für das ID-Anwendungsprogramm bestätigt mithin zumindest implizit, dass eine erfolgreiche Nutzerauthentifizierung durch das Sicherheitselement ausgeführt wurde.

Unter einem Sicherheitselement, wird ein gesichertes Element eines mobilen Endgeräts verstanden, welches kryptographische Mittel bereitstellt. Diese kryptographischen Mittel sind gegen Manipulation geschützt und beispielsweise über kryptographische Schlüssel nur für autorisierte Dienste und Anwendungen zugänglich. Insbesondere können die kryptographischen Mittel beispielsweise nur durch autorisierte Dienste und Anwendungen in das Sicherheitselement eingebracht, ergänzt, verändert und/oder gelöscht werden. Ein Sicherheitselement bietet mithin eine manipulationssichere Plattform, beispielsweise implementiert in Form eines sicheren Ein-Chip-Mikrocontroller, auf welcher Software und/oder vertrauliche und/oder kryptographische Daten gemäß vordefinierten Regeln und Sicherheitsanforderungen von zuverlässig identifizierten vertrauenswürdigen Instanzen gespeichert und so berechtigten Anwendungsprogrammen und/oder Betriebssystemen zur Verfügung gestellt werden können. Ein Sicherheitselement ist beispielsweise als Hardwarekomponente eingebettete in das mobile Endgerät, d.h. nicht beispielsweise nicht zerstörungsfrei lösbar. Ein Sicherheitselement kann beispielsweise in Form eines Secure Element (SE) implementiert sein. Das Sicherheitselement kann beispielweise als ein kryptographisch gesicherter Co-Prozessor, d.h. eine Secure Enclave, mit einem hardwarebasierten Schlüsselmanager implementiert sein, welcher durch die Isolation von einem Hauptprozessor des mobilen Endgeräts eine zusätzliche Sicherheitsebene ermöglicht und bereitstellt. Dieser Co-Prozessor kann verwendet werden, um symmetrische kryptographische Schlüssel und/oder asymmetrische kryptographische Schlüsselpaare zu erzeugen. Der Co-prozessor stellt beispielsweise Identifikatoren bereit, mit welchen die kryptographischen Schlüssel identifiziert werden können. Unter Verwendung der Identifikatoren kann die sichere Enklave aufgefordert werden, stellvertretend für ein anderes Programm, beispielsweise ein Schlüsselverwaltungsprogramm, kryptographische Operationen, wie etwa Verschlüsselungen und/oder Entschlüsselungen, auszuführen. Beispielsweise können unter Verwendung von kryptographischen Schlüsseln, welche der Co-prozessor bereitstellt, zu speichernde Elemente verschlüsselt und auf dem mobilen Endgerät gespeichert werden. Beispielsweise sind auf einem Sicherheitselement die abgeleiteten bzw. erzeugten kryptographischen Schlüssel gespeichert, d.h. das Sicherheitselement umfasst einen Datentresor für kryptographische Schlüssel bzw. einen "Key Store". Ein solcher Key-Store bzw. Sicherheitselement kann auch als Teil des Hauptprozessors implementiert sein, beispielsweise in einer TEE (Trusted Excecution Environment). Beispielsweise kann das Sicherheitselement unter Verwendung einer bzw. als eine TEE implementiert sein. Eine TEE stellt eine sichere bzw. vertrauenswürdige Laufzeitumgebung für Applikationen zur Verfügung. Eine solche TEE kann beispielsweise isoliert auf einem separaten Prozessor, d.h. einem Co-Prozessor, direkt auf dem oder den Hauptprozessoren des mobilen Endgeräts oder aber in einem Die eines Multiprozessor-System bzw. eines Ein-Chip-System (SoC) existieren. Auf einer solchen TEE können beispielsweise nur speziell dafür freigeschaltete Applikationen ausgeführt werden.

Ein Anwendungsprogramm, auch Applikation oder kurz App genannt, bezeichnet ein Computerprogramm, welches nicht systemtechnische Funktionalität bereitstellt, unterstützt und/oder deren Bearbeitung ermöglicht.

Ein Betriebssystem bezeichnet ein Computerprogramm oder eine Zusammenstellung von Computerprogrammen, welche systemtechnische Funktionalitäten bereitstellen, unterstützen und/oder deren Bearbeitung ermöglichen. Durch ein Betriebssystem werden Systemressourcen zur Verfügung gestellt. Systemressourcen bezeichnen Systemelemente bzw. Hardwarekomponenten eines Computers, die von Prozessen zur korrekten Ausführung benötigt werden.

Bei einem Computer bzw. einem Computersystem kann es sich zum Beispiel um einen stationären Computer, wie etwa einen Personal Computer (PC), Serviceterminal oder einen Server, oder um einen mobilen tragbaren Computer, wie etwa einen Laptop, ein Tablet, ein Smartphone oder einen andern Smart Device, handeln. Der Computer kann eine Schnittstelle zur Verbindung mit dem Netzwerk umfassen, wobei es sich bei dem Netzwerk um ein privates oder öffentliches Netzwerk handeln kann, insbesondere das Internet. Je nach Ausführungsform kann diese Verbindung auch über ein Mobilfunknetz hergestellt werden.

Unter einem "Service-Provider-Server" oder Dienst-Server wird hier ein Server bzw. ein Computersystem verstanden, auf welchem ein Serverprogramm ausgeführt wird und das die Möglichkeit bereitstellt einen angebotenen Dienst über ein Netzwerk zu initiieren bzw. in Anspruch zu nehmen und/oder auszuführen.

Unter einem "Personalisierungsserver" wird ein Server bzw. ein Computersystem verstanden, auf welchem ein Serverprogramm ausgeführt wird und das dazu konfiguriert ist, Attribute aus einem ID-Token auszulesen und in ein mobiles Endgerät einzubringen.

Unter einem "ID-Token" wird hier ein tragbares elektronisches Gerät verstanden, zum Beispiel einen sogenannten USB-Stick, eine Chipkarte, oder ein Dokument, auf welchem Attribute eines Nutzers gespeichert sind. Unter einem "Dokument" wird insbesondere ein Ausweis-, Wert- oder Sicherheitsdokument verstanden, insbesondere ein hoheitliches Dokument, insbesondere ein papierbasiertes und/oder kunststoffbasiertes Dokument, wie zum Beispiel ein elektronisches Ausweisdokument, insbesondere Reisepass, Personalausweis, Visum, Führerschein, Fahrzeugschein, Fahrzeugbrief, Gesundheitskarte, oder einen Firmenausweis, oder eine anderes ID-Dokument, eine Chipkarte, Zahlungsmittel, insbesondere Banknote, Bankkarte oder Kreditkarte, Frachtbrief oder ein sonstiger Berechtigungsnachweis. Insbesondere kann es sich bei dem ID-Token um ein Machine-Readable Travel Document, wie beispielsweise von der Internationalen Luftfahrtbehörde (ICAO) und/oder dem Bundesamt für Sicherheit in der Informationstechnik (BSI) standardisiert, handeln.

Unter einem "Personalisierungsserver" wird ein Server bzw. ein Computersystem verstanden, auf welchem ein Serverprogramm ausgeführt wird und das dazu konfiguriert ist, Attribute aus einem ID-Token auszulesen und in ein mobiles Endgerät einzubringen. Ferner ist der Personalisierungsserver beispielsweise dazu konfiguriert, das mobile Endgerät zu provisionieren, insbesondere mit kryptographischen Schlüsseln.

Unter einem "ID-Provider-Server" wird ein Server bzw. ein Computersystem verstanden, auf welchem ein Serverprogramm ausgeführt wird und das dazu konfiguriert ist, Attribute einer von dem mobilen Endgerät bereitgestellten elektronischen Identität für einen Service-Provider-Server bereitzustellen und/oder gegenüber dem Service-Provider-Server zu bestätigen.

Unter einem "mobilen Endgerät" wird ein mobiles tragbares Kommunikationsgerät, wie beispielsweise ein Smartphone, ein Tablet oder eine Smartwatch verstanden.

Unter einem "Programm" bzw. "Programminstruktionen" wird hier ohne Einschränkung jede Art von Computerprogramm verstanden, welches maschinenlesbare Instruktionen zur Steuerung einer Funktionalität des Computers umfasst.

Unter einem "Prozessor" wird hier und im Folgenden eine Logikschaltung verstanden, die zur Ausführung von Programminstruktionen dient. Die Logikschaltung kann auf einem oder mehreren diskreten Bauelementen implementiert sein, insbesondere auf einem Chip. Insbesondere wird unter einem "Prozessor" ein Mikroprozessor oder ein Mikroprozessorsystem aus mehreren Prozessorkernen und/oder mehreren Mikroprozessoren verstanden.

Unter einem "Speicher" werden hier sowohl flüchtige als auch nicht flüchtige elektronische Speicher bzw. digitale Speichermedien verstanden.

Unter einem "nichtflüchtigen Speicher" wird hier ein elektronischer Speicher zur dauerhaften Speicherung von Daten, insbesondere von statischen kryptographischen Schlüsseln, Attributen oder Kennungen, verstanden. Ein nichtflüchtiger Speicher kann als nichtänderbarer Speicher konfiguriert sein, der auch als Read-Only Memory (ROM) bezeichnet wird, oder als änderbarer Speicher, der auch als Non-Volatile Memory (NVM) bezeichnet wird.

Insbesondere kann es sich hierbei um ein EEPROM, beispielsweise ein Flash-EEPROM, kurz als Flash bezeichnet, handeln. Ein nichtflüchtiger Speicher zeichnet sich dadurch aus, dass die darauf gespeicherten Daten auch nach Abschalten der Energieversorgung erhalten bleiben.

Unter einer "Schnittstelle" bzw. "Kommunikationsschnittstelle" wird hier eine Schnittstelle verstanden, über die Daten empfangen und gesendet werden können, wobei die Kommunikationsschnittstelle kontaktbehaftet oder kontaktlos konfiguriert sein kann. Eine Kommunikationsschnittstelle kann beispielsweise eine Kommunikation über ein Netzwerk ermöglichen. Je nach Konfiguration kann eine Kommunikationsschnittstelle beispielsweise eine kabellose Kommunikation nach einem Mobilfunkstandard, Bluetooth-, RFID-, WiFi und/oder NFC-Standard bereitstellen. Je nach Konfiguration kann eine Kommunikationsschnittstelle beispielsweise eine kabelbasierte Kommunikation bereitstellen. Bei der Kommunikationsschnittstelle kann es sich um eine interne Schnittstelle oder um eine externe Schnittstelle handeln.

Bei den verschlüsselten Kommunikationskanälen handelt es sich beispielsweise um verschlüsselte Ende-zu-Ende-Verbindungen. Unter einer "verschlüsselten Ende-zu-Ende-Verbindung" bzw. einem "verschlüsselten Ende-zu-Ende-Übertragungskanal" wird hier eine Verbindung zwischen einem Sender und einem Empfänger mit einer Ende-zu-Ende-Verschlüsslung verstanden, bei der zu übertragende Daten vom Sender verschlüsselt und erst vom Empfänger wieder entschlüsselt werden. Die Verschlüsselung übertragener Daten erfolgt somit über alle Übertragungsstationen hinweg, so dass Zwischenstationen aufgrund der Verschlüsslung keine Kenntnis vom Inhalt der übertragenen Daten erlangen können. Die Verbindung wird durch die Verschlüsselung kryptographisch abgesichert, um ein Ausspähen und/oder eine Manipulation der Übertragung zu verhindern, wobei hierzu ein sogenanntes Secure-Messaging-Verfahren eingesetzt werden kann. Eine Ende-zu-Ende-Verschlüsslung beruht beispielsweise auf zwei symmetrischen kryptographischen Schlüsseln, wobei ein erster der symmetrischen Schlüssel zum Verschlüsseln von Nachrichten und ein zweiter der symmetrischen Schlüssel zum Authentifizieren des Senders der Nachricht, etwa mittels Message Authentication Code (MAC)-Algorithmen, dient. Beispielsweise werden für einen verschlüsselten Kommunikationskanal im Zuge des Aufbaus ephemere Schlüssel zur Verschlüsselung ausgehandelt, welche mit einer Beendigung des Kommunikationskanals ihre Gültigkeit verlieren. Eine Verwendung unterschiedlicher ephemerer Schlüssel für unterschiedliche Kommunikationskanäle ermöglicht es eine Mehrzahl von Kommunikationskanälen parallel zueinander zu betreiben.

Ein verschlüsselter Kommunikationskanal kann beispielsweise unter Verwendung des Transport Layer Security (TLS) Protokolls aufgebaut werden, beispielsweise als Teil des Hypertext Transfer Protocol Secure (HTTPS) Protokolls.

Asymmetrische Schlüsselpaare werden für eine Vielzahl von Kryptosystemen eingesetzt und spielen bei der sicheren Übertragung elektronischer Daten eine wichtige Rolle. Ein asymmetrisches Schlüsselpaar besteht aus einem öffentlichen kryptographischen Schlüssel, welcher zur Ver- und/oder Entschlüsselung von Daten verwendet wird und an Dritte, beispielsweise an einen Sender oder Empfänger von Daten, weitergegeben werden darf, sowie einem privaten kryptographischen Schlüssel, welcher zur Ver- und/oder Entschlüsselung aber auch zur Signatur von Daten verwendet wird und im Regelfall geheim gehalten werden muss. Der öffentliche Schlüssel ermöglicht es jedermann Daten für den Inhaber des privaten kryptographischen Schlüssels zu verschlüsseln oder mit dem privaten kryptographischen Schlüssel erstellte digitale Signaturen zu prüfen. Ein privater Schlüssel ermöglicht es seinem Inhaber mit dem öffentlichen kryptographischen Schlüssel verschlüsselte Daten zu entschlüsseln oder digitale Signaturen von Daten zu erstellen.

Eine digitale Signatur von Daten umfasst beispielsweise ein Bilden eines Prüfwerts der Daten, wie etwa eines Hashwerts, welcher mit einem als Signaturschlüssel verwendeten privaten kryptographischen Schlüssel eines asymmetrischen Schlüsselpaars verschlüsselt wird. Im Falle einer Signatur kennt nur der Signierende den zum Erstellen der Signatur verwendeten privaten kryptographischen Schlüssel, d.h. Signaturschlüssel, des für die Signatur verwendeten asymmetrischen Schlüsselpaars. Der Signaturempfänger verfügt lediglich über den öffentlichen kryptographischen Schlüssel, d.h. Signaturprüfschlüssel, des für die Signatur verwendeten asymmetrischen Schlüsselpaars. Der Signaturempfänger kann die Signatur mithin prüfen, aber nicht selbst berechnen. Für eine Signaturprüfung berechnet der Signaturempfänger beispielsweise den Prüfwert der signierten Daten und vergleicht diesen mit dem Ergebnis einer Entschlüsselung der Signatur unter Verwendung des Signaturprüfschlüssels. Stimmt der berechnete Hashwert mit dem Ergebnis der Entschlüsselung überein ist die Signatur korrekt. Wird zudem die Authentizität des Signaturprüfschlüssels, etwa durch ein Zertifikat, insbesondere ein PKI-Zertifikat, bestätigt, ist die Signatur valide.

Unter einem "Zertifikat" wird hier ein digitales Zertifikat verstanden, welches auch als Public-Key-Zertifikat (PKI-Zertifikat) bezeichnet wird. Bei einem Zertifikat handelt es sich um strukturierte Daten, die dazu dienen, einen öffentlichen kryptographischen Schlüssel eines asymmetrischen Kryptosystems einer Identität, wie zum Beispiel einer Person, Institution oder einer Vorrichtung, zuzuordnen. Zur kryptographischen Sicherung und zum Nachweis der Authentizität der Daten des Zertifikates, sind diese von einem Zertifikatsaussteller signiert. Durch PKI-Zertifikate, welche auf asymmetrischen Schlüsselpaaren basieren, und bis auf ein Root- bzw. Wurzelzertifikat jeweils von einem Zertifikatsaussteller mit einem Signaturschlüssel signiert sind, dessen zugehöriger Signaturprüfschlüssel dem Zertifikatsaussteller durch ein PKI-Zertifikat des entsprechenden Zertifikatausstellers zugeordnet ist, wird eine so genannte Public Key Infrastructure (PKI) realisiert. Beispielsweise kann das Zertifikat dem Standard X.509 oder einem anderen Standard entsprechen. Beispielsweise handelt es sich bei dem Zertifikat um ein Card Verifiable Certificate (CVC). Ein Berechtigungszertifikat umfasst strukturierte Daten, welche zusätzlich Rechte der Identität definieren.

Die PKI stellt ein System zum Ausstellen, Verteilen und Prüfen digitaler Zertifikate bereit. Ein digitales Zertifikat kann in einem asymmetrischen Kryptosystem die Authentizität eines öffentlichen kryptographischen Schlüssels und seinen zulässigen Anwendungs- und Geltungsbereich bestätigen. Das digitale Zertifikat ist selbst durch eine digitale Signatur geschützt, deren Echtheit bzw. Authentizität mit dem öffentlichen kryptographischen Schlüssel des Ausstellers des Zertifikates geprüft werden kann. Um die Authentizität des Ausstellerschlüssels zu prüfen, wird wiederum ein digitales Zertifikat verwendet. Auf diese Weise lässt sich eine Kette von digitalen Zertifikaten aufbauen, die jeweils die Authentizität des öffentlichen kryptographischen Schlüssels bestätigen, mit dem das vorhergehende Zertifikat geprüft werden kann. Eine solche Kette von Zertifikaten bildet einen sogenannten Validierungspfad oder Zertifizierungspfad. Auf die Echtheit des letzten Zertifikats, des sogenannten Wurzelzertifikats, und des dadurch zertifizierten Schlüssels, müssen sich die Teilnehmer der PKI beispielsweise ohne ein weiteres Zertifikat verlassen können. Das Wurzelzertifikat wird von einer sogenannten Wurzelzertifizierungsinstanz verwaltet, auf deren als gesichert vorausgesetzten Authentizität die Authentizität aller Zertifikate der PKI zurückgeht.

Digitale Zertifikate werden beispielsweise durch eine unabhängige, glaubwürdige Instanz (Zertifizierungsdienstanbieter/ZDA oder Vertrauensdienstanbieter/VDA), d.h. die das Zertifikat zuteilende Zertifizierungsstelle, bestätigen. Zertifikate können einem breiten Personenkreis zur Verfügung gestellt werden, um diesem eine Prüfung elektronischer Signaturen auf Authentizität und Gültigkeit zu ermöglichen. Ein Zertifikat kann einer elektronischen Signatur zugeordnet sein und einen Signaturprüfschlüssel in Form des öffentlichen kryptographischen Schlüssels bereitstellen, wenn der zu dem Signaturprüfschlüssel gehörende private Schlüssel als Signaturschlüssel verwendet wurde. Dadurch, dass ein ZDA /VDA ein Zertifikat in Assoziation mit einem öffentlichen kryptographischen Schlüssel der Allgemeinheit zur Verfügung stellt, ermöglicht sie es den Nutzern asymmetrischer Kryptosysteme den öffentlichen kryptographischen Schlüssel einer Identität, beispielsweise einer Person, einer Organisation, oder Computersystem, zuzuordnen.

Eine Authentifizierung bezeichnet eine Verifizierung einer behaupteten Eigenschaft einer Entität, wie etwa einem Nutzer des mobilen Endgeräts. Im Zuge einer Authentifizierung wird beispielsweise ein entsprechender von dem Nutzer erbrachter Nachweis verifiziert. Die Entität führt durch ihren Beitrag zur Authentifizierung, d.h. durch Bereitstellen entsprechender Nachweise wie Authentifizierungsdaten bzw. Authentifizierungsfaktoren zur Prüfung, eine Authentisierung durch.

Eine Authentifizierung des Nutzers bezüglich der behaupteten Eigenschaft der Authentizität, beispielsweise der Authentizität seiner Person bzw. Identität, erlaubt es dem authentifizierten Nutzer weitere Aktionen durchzuführen. Beispielsweise werden dem Nutzer Zugangsrechte eingeräumt. Ein erfolgreich authentifizierter Nutzer gilt als authentisch. Eine abschließende Bestätigung einer Authentifizierung kann eine Autorisierung umfassen.

Der Nutzer kann sich auf verschiedene Weisen authentisieren. Er kann beispielsweise einen Nachweis einer Kenntnis, wie einer PIN oder einem Passwort, vorlegen, einen Nachweis eines Besitzes, wie etwa eines kryptographischen Schlüssels, eines Zertifikats oder eines elektronischen Geräts, und/oder einen Nachweis von Eigenschaften seiner Person selbst, wie biometrische Merkmale oder Verhaltensmerkmale. Beispielsweise wird der entsprechende Nachweis durch einen Authentifizierungssensor des mobilen Endgeräts in Form von Authentifizierungsdaten des Nutzers erfasst und von einem Sicherheitselement des mobilen Endgeräts mit einem oder mehreren hinterlegten Referenzwerten verglichen. Bei dem die erfassten Authentifizierungsdaten auswertenden Sicherheitselement handelt es sich beispielsweise um ein Sicherheitselement des Betriebssystems des mobilen Endgeräts. Im Falle einer ausreichenden Übereinstimmung zwischen den erfassten Authentifizierungsdaten und den hinterlegten Referenzwerten, bestätigt das Sicherheitselement eine erfolgreiche Authentifizierung des Nutzers. Beispielsweise umfasst eine Bestätigung der erfolgreichen Authentifizierung des Nutzers ein Ausführen eines Challenge-Response-Verfahrens durch das bestätigende Sicherheitselement. Beispielsweise bestätigt das bestätigende Sicherheitselement auf eine erfolgreiche Authentifizierung des Nutzers hin diese erfolgreiche Authentifizierung gegenüber dem auf dem mobilen Endgerät installierten ID-Anwendungsprogramm, beispielsweise gegenüber der Kontrollkomponente des ID-Anwendungsprogramms, mittels einer korrekten Response auf eine Challenge des installierten ID-Anwendungsprogramms.

Unter einem Authentifizierungssensor wird ein Sensor zum Erfassen von Authentifizierungsdaten des Nutzers des mobilen Endgeräts verstanden. Die Authentifizierungsdaten können beispielsweise biometrische Daten des Nutzers umfassen. Der Authentifizierungssensor kann zum Erfassen biometrischer Daten des Nutzers konfiguriert sein. Biometrische Daten können beispielsweise umfassen: Fingerabdruckdaten, Körpergeometriedaten/Anthropometriedaten, wie etwa Gesichts-, Hand-, Ohrgeometriedaten, Handlinienstrukturdaten, Venenstrukturdaten, wie etwa Handvenenstrukturdaten, Irisdaten, Retinadaten, Stimmerkennungsdaten, Nagelbettmuster. Der Authentifizierungssensor kann beispielsweise eine Kamera des mobilen Endgeräts umfassen. Die Authentifizierungsdaten können beispielsweise ein Wissen des Nutzers umfassen, wie eine PIN oder Passwort. Der Authentifizierungssensor kann eine Eingabevorrichtung zur Eingabe von Authentifizierungsdaten, wie etwa eine PIN oder ein Passwort umfassen. Die Eingabevorrichtung kann beispielsweise eine Tastatur und/oder einen Touchscreen umfassen.

Ein Challenge-Response-Verfahren stellt ein sicheres Authentifizierungsverfahren einer ersten Instanz gegenüber einer zweiten Instanz auf Basis von Wissen dar. Beispielsweise wird ein sich authentisierende Sicherheitselement eines mobilen Endgeräts, etwa ein Sicherheitselement des Betriebssystems des mobilen Endgeräts, durch ein anderes authentifizierende Sicherheitselement des mobilen Endgeräts unter Verwendung eines Challenge-Response-Verfahrens authentifiziert. Gleichzeitig stellt die Response eine Bestätigung einer erfolgreichen Nutzerauthentifizierung dar, falls die Response nur unter der Voraussetzung einer erfolgreichen Nutzerauthentifizierung durch das sich authentisierende Sicherheitselement erzeugt wird. Somit weiß das authentifizierende Sicherheitselement, im Falle eines erfolgreichen Challenge-Response-Verfahrens nicht nur, dass die Nutzerauthentifizierung bestätigt wurde, sondern dass diese durch das sich authentisierende Sicherheitselement bestätigt wurde und somit valide ist.

Im Zuge eines Challenge-Response-Verfahren stellt eine erste Instanz einer zweiten Instanz eine Aufgabe ("Challenge"), für welche die zweite Instanz eine korrekte Antwort ("Response") liefern muss.

Beispielsweise erzeugt die erste Instanz einen Zufallswert ("Nonce") und sendet diese an die zweite Instanz. Die zweite Instanz verwendet beispielsweise ein gemeinsames Geheimnis für eine kryptographische Transformation des Nonce und sendet das Resultat als Response zum Zwecke einer Authentifizierung der zweiten Instanz an die erste Instanz. Beispielsweise wird das Nonce mit dem gemeinsamen Geheimnis kombiniert und eine kryptographische Hashfunktion oder eine Verschlüsselung auf diese Kombination angewendet. Alternativer Weise kann das gemeinsame Geheimnis, etwa ein symmetrischer kryptographischer Schlüssel, zum Verschlüsseln des Nonce verwendet werden. Die erste Instanz, welche sowohl das Nonce als auch das gemeinsame Geheimnis kennt kann beispielsweise dieselbe Berechnung wie die zweite Instanz ausführen und/oder eine inverse Berechnung ausführen, z.B. das verschlüsselte Nonce unter Verwendung des gemeinsamen Geheimnisses wieder entschlüsseln. Stimmt das Ergebnis der Berechnung durch die erste Instanz mit dem Ergebnis der Berechnung der zweiten Instanz oder mit der Challenge überein, ist das Challenge-Response-Verfahren erfolgreich und die zweite Instanz erfolgreich authentifiziert.

Ferner kann ein Challenge-Response-Verfahren auch auf einem asymmetrischen Kryptosystem beruhen und dem Nachweis eines Besitzes eines privaten und damit geheimen kryptographischen Schlüssels durch die zweite Instanz gegenüber der ersten Instanz dienen. Dabei kennt nur die zweite Instanz den entsprechenden privaten kryptographischen Schlüssel, welchen sie für eine kryptographische Transformation der Challenge, e.g. eines Nonce, verwendet. Bei der entsprechenden kryptographischen Transformation kann es sich beispielsweise um ein digitales Signieren handeln. Die erste Instanz kann unter Verwendung eines dem privaten kryptographischen Schlüssel zugehörigen öffentlichen kryptographischen Schlüssels anhand der Response prüfen, ob die zweite Instanz tatsächlich über Kenntnis des privaten kryptographischen Schlüssels verfügt, ohne dass die erste Instanz im Zuge der Prüfung selbst Kenntnis von dem privaten kryptographischen Schlüssel erlangt.

Nach Ausführungsformen leitet die Personalisierungskomponente das Wurzelzertifikat zum Speichern an die Kontrollkomponente weiter.

Ausführungsformen können den Vorteil haben, dass das Wurzelzertifikat der Kontrollkomponente zur Verfügung steht, welche das Wurzelzertifikat zum Prüfen von Zertifikatsketten verwenden kann. Empfängt die Kontrollkomponente beispielsweise eine Zertifikatskette einer externen Instanz bzw. eines externen Servers, kann sie die Signatur der Wurzelinstanz, von welcher die Zertifikatskette abhängt, unter Verwendung des Wurzelzertifikats prüfen.

Nach Ausführungsformen umfasst das mobile Endgerät ferner ein oder mehrere Authentifizierungssensoren zum Erfassen von ein oder mehreren Authentifizierungsfaktoren des Nutzers. Der Nutzer ist auf dem mobilen Endgerät registriert und in dem Sicherheitselement sind ein oder mehrere Referenzwerte des registrierten Nutzers zum Verifizieren zumindest eines erfassten Authentifizierungsfaktors des registrierten Nutzers gespeichert. Das Sicherheitselement ist dazu konfiguriert, dass Voraussetzung für das Erzeugen des ersten asymmetrischen Schlüsselpaars eine erfolgreiche Authentisierung des Nutzers gegenüber dem Sicherheitselement ist. Der Nutzer erklärt mit der Authentisierung eine Zustimmung zu der Erzeugung des ersten asymmetrischen Schlüsselpaars. Das Sicherheitselement ist ferner dazu konfiguriert, dass Voraussetzung für ein Verwenden des ersten privaten kryptographischen Schlüssels durch das Sicherheitselement jeweils eine weitere erfolgreiche Authentisierung des Nutzers gegenüber dem Sicherheitselement ist. Der Nutzer erklärt mit den weiteren Authentisierungen jeweils eine Zustimmung zu der entsprechenden Verwendung des ersten privaten kryptographischen Schlüssels.

Ausführungsformen können den Vorteil haben, dass sowohl das Erzeugen des ersten asymmetrischen Schlüsselpaars, als auch das Verwenden des ersten privaten kryptographischen Schlüssels an den Nutzer des mobilen Endgeräts gebunden werden kann. Damit wird auch das ID-Anwendungsprogramm an den Nutzer des mobilen Endgeräts gebunden, da eine kryptographisch abgesicherte Verwendung des ID-Anwendungsprogramms bzw. einer von diesem verwalteten elektronischen Identität, d.h. eine Verwendung des ersten asymmetrischen Schlüsselpaars, nur unter der Voraussetzung einer erfolgreichen Nutzerauthentisierung gegenüber dem mobilen Endgerät bzw. dem Sicherheitselement des mobilen Endgeräts möglich ist. Somit kann sichergestellt werden, dass der Nutzer bei jeder Verwendung des ID-Anwendungsprogramms, welche eine Verwendung des ersten privaten kryptographischen Schlüssels des ID-Anwendungsprogramms umfasst, zu einer Authentisierung aufgefordert wird und mit einer entsprechenden Authentisierung seine Zustimmung zu der Verwendung des ersten privaten kryptographischen Schlüssels erklärt.

Nach Ausführungsformen handelt es sich bei dem Sicherheitselement um ein gerätespezifisches Sicherheitselement. Unter einem gerätespezifischen Sicherheitselement wird hier ein Sicherheitselement verstanden, auf welches keine geräteunabhängigen bzw. geräteherstellerunabhängigen externen Zugriffe möglich sind. Das Sicherheitselement ist beispielsweise so eingerichtet, dass der Personalisierungsserver nicht auf das Sicherheitselement zugreifen und externes Schlüsselmaterial oder Software einbringen kann. Somit ist es dem Personalisierungsserver nicht möglich Zuge einer Personalisierung externes kryptographisches Schlüsselmaterial oder Software, wie etwa kryptographische Funktionen, einzubringen. Ausführungsformen können den Vorteil haben, dass sie eine Provisionierung ermöglichen, selbst wenn es sich bei dem Sicherheitselement um ein gerätespezifisches Sicherheitselement handelt.

Nach Ausführungsformen umfasst das Verfahren ferner ein Personalisieren des ID-Anwendungsprogramms auf dem mobilen Endgerät unter Verwendung eines ID-Tokens. Das ID-Anwendungsprogramm umfasst ferner eine Personalisierungskomponente zum Personalisieren des ID-Anwendungsprogramms. Das Personalisieren umfasst:
- Aufbauen eines ersten verschlüsselten Kommunikationskanals zwischen dem mobilen Endgerät und dem Personalisierungsserver über das Netzwerk, wobei zum Aufbauen des ersten verschlüsselten Kommunikationskanals die Personalisierungskomponente verwendet wird,
- Aufbauen eines ersten verschlüsselten Unterkanals zwischen dem ID-Token und dem Personalisierungsserver innerhalb des ersten verschlüsselten Kommunikationskanals über das mobile Endgerät, wobei zum Aufbauen des ersten verschlüsselten Unterkanals die Personalisierungskomponente verwendet wird
- Auslesen von ein oder mehreren der Attribute aus dem ID-Token durch den Personalisierungsserver über den ersten verschlüsselten Unterkanal innerhalb des ersten verschlüsselten Kommunikationskanals,
- Aufbauen eines zweiten verschlüsselten Unterkanals zwischen der Kontrollkomponente und dem Personalisierungsserver innerhalb des ersten verschlüsselten Kommunikationskanals, wobei zum Aufbauen des zweiten verschlüsselten Unterkanals die Personalisierungskomponente verwendet wird,
- Empfangen der ausgelesenen Attribute durch die Kontrollkomponente von dem Personalisierungsserver über den zweiten verschlüsselten Unterkanal innerhalb des ersten verschlüsselten Kommunikationskanals,
- Speichern der empfangenen Attribute durch die Kontrollkomponente auf dem mobilen Endgerät, wobei das ID-Anwendungsprogramm dazu konfiguriert ist, die Attribute zum Nachweis einer Identität des Nutzers gegenüber einem weiteren Computersystem zu verwenden.

Ausführungsformen können den Vorteil haben, dass das mit den beiden asymmetrischen kryptographischen Schlüsselpaaren provisionierte ID-Anwendungsprogramm ferner personalisiert werden kann. Unter einer Personalisierung wird hierbei ein Einbringen einer elektronischen Identität in Form von Attributen in das ID-Anwendungsprogramm verstanden. Dieses Einbringen der Attribute sowie die Verwendung der Attribute wird unter Verwendung der beiden asymmetrischen Schlüsselpaare kryptographisch abgesichert.

Das ID-Anwendungsprogramm ist dazu konfiguriert, eine Identität des Nutzers des mobilen Endgeräts nachzuweisen. Hierzu kann das ID-Anwendungsprogramm Attribute des Nutzers verwenden, welche den entsprechenden Nutzer identifizieren. Diese Attribute stellen eine elektronische Identität des Nutzers dar. Die entsprechenden Attribute und damit die elektronische Identität des Nutzers wird beispielsweise durch ein ID-Token, d.h. ein elektronisches Identitätsdokument, bereitgestellt. Im Zuge der Personalisierung des ID-Anwendungsprogramm werden beispielsweise Attribute aus dem elektronischen Identitätsdokument ausgelesen und auf dem mobilen Endgerät unter Verwaltung des ID-Anwendungsprogramm hinterlegt. Bei der daraus resultierenden elektronischen Identität des Nutzers, welche das mobile Endgerät bereitstellt, handelt es sich mithin um eine abgeleitete Identität, welche aus dem elektronischen Identitätsdokument abgeleitet ist. Bei dem entsprechenden elektronischen Identitätsdokument kann es sich insbesondere um ein hoheitliches Identitätsdokument, wie etwa einen elektronischen Personalausweis oder einen elektronischen Reisepass handeln.

Ferner kann im Zuge der Personalisierung das Sicherheitselement zum Erzeugen weiterer kryptographischer Schlüssel, beispielsweise attributsspezifischer bzw. identitätsspezifischer Schlüssel. Das entsprechende Schlüsselmaterial wird beispielsweise auf dem Sicherheitselement des mobilen Endgeräts erzeugt und dem ID-Anwendungsprogramm zur Verfügung gestellt. Kryptographische Schlüssel und/oder Zwischenergebnisse kryptographischer Operationen, wie etwa unter Verwendung entsprechender kryptographische Schlüssel berechnete Geheimnisse, können von dem Sicherheitselement an das ID-Anwendungsprogramm zur weiteren Verwendung ausgegeben werden. Ferner können entsprechende kryptographische Schlüssel auf dem Sicherheitselement für das ID-Anwendungsprogramm hinterlegt werden. Zum Ausführen kryptographischer Operationen mit den entsprechenden kryptographischen Schlüsseln sendet das ID-Anwendungsprogramm eine entsprechende Anfrage an das Sicherheitselement, welches die angefragte kryptographische Operation unter Verwendung der kryptographischen Schlüssel ausführt und dem ID-Anwendungsprogramm das Ergebnis zur weiteren Verwendung zur Verfügung stellt. Bei den entsprechenden kryptographischen Operationen kann es sich sowohl um kryptographische Berechnungen als auch um Prüfungen kryptographischer Werte handeln.

Ausführungsformen können den Vorteil haben, dass im Zuge einer solchen Ableitung sichergestellt werden kann, dass die abgeleitete Identität in Form der hinterlegten Attribute auch tatsächlich auf dem an den Nutzer gebundenen Endgerät hinterlegt werden. Beispielsweise können die Attribute in verschlüsselter Form auf dem mobilen Endgerät gespeichert werden. Beispielsweise werden die Attribute mit einem kryptographischen Schlüssel verschlüsselt, welcher im Zuge der Personalisierung in dem Sicherheitselement erzeugt wird.

Ausführungsformen können den Vorteil haben, dass eine Bindung der entsprechenden Attribute an den tatsächlichen Inhaber der entsprechenden Attribute über eine Bindung des Sicherheitselements an den Nutzer des mobilen Endgeräts gewährleistet werden kann. Da sich einerseits der Inhaber der Attribute bzw. des ID-Tokens im Zuge des Personalisierens, d.h. bei Aufbauen des ersten Unterkanals, gegenüber dem ID-Token authentisiert und andererseits der Nutzer des mobilen Endgeräts sich im Zuge des Aufbaus des verschlüsselten Kommunikationskanals und/oder des zweiten Unterkanals gegenüber dem mobilen Endgerät bzw. dem Sicherheitselement authentisiert, wird eine Bindung zwischen dem Inhaber der Attribute und dem Nutzer des mobilen Endgeräts implementiert. Sowohl der erste als auch der zweite Unterkanal werden jeweils innerhalb des verschlüsselten Kommunikationskanals aufgebaut, sind also mit diesem kryptographisch sich verschränkt. Damit werden auch die Authentisierungen des Inhabers der Attribute und des Nutzers des mobilen Endgeräts miteinander verschränkt. Dies gilt insbesondere, wenn die Authentisierung des Inhabers der Attribute gegenüber dem ID-Token über das mobile Endgerät, beispielsweise unter Vermittlung der Personalisierungskomponente des ID-Anwendungsprogramms, erfolgt.

Durch die Kanalverschränkung kann sichergestellt werden, dass die Attribute über dasselbe mobile Endgerät ausgelesen werden, in welche sie im Zuge der Personalisierung eingebracht werden.

Es kann somit beispielsweise verhindert werden, dass ein unberechtigter Nutzer sich Zugriff auf Attribute eines anderen Nutzers verschafft und diese zum Ausweisen mit einer gefälschten elektronischen Identität verwendet. Im Falle eines Identitätsnachweises mit dem mobilen Endgerät kann daher vorteilhafterweise sichergestellt werden, dass mit dem Identitätsnachweis vorgelegten Attribute auch tatsächlich Attribute des sich identifizierten Nutzers sind. Hierzu wird der Übertragungsweg zum Auslesen der entsprechenden Attribute, d.h. der elektronischen Identität eines Identitätsdokuments, mit einem Übertragungsweg der Personalisierung der abgeleiteten Identität, d.h. des Einbringens der ausgelesenen Attribute in ein Sicherheitselement eines mobilen Endgeräts mit kryptographischen Mitteln sichergestellt. Somit kann gewährleistet werden, dass es sich bei dem zum Auslesen der Attribute verwendeten mobilen Endgerät um dasselbe mobile Endgerät handelt, dessen Sicherheitselemente mit den ausgelesenen Attributen personalisiert wird.

Der Nutzer muss sich beispielsweise im Zuge des Auslesens des ID-Tokens unter Verwendung des mobilen Endgeräts gegenüber dem ID-Token authentisieren. Somit kann sichergestellt werden, dass der das Auslesen initiierende bzw. bestätigende Nutzer auch tatsächlich der Inhaber des entsprechenden ID-Dokuments ist. Ferner muss sich der Nutzer im Zuge des Personalisierens des Sicherheitselements des mobilen Endgeräts, d.h. im Zuge des Einbringens der ausgelesenen Attribute, gegenüber dem mobilen Endgerät authentisieren. Somit kann sichergestellt werden, dass es sich bei dem das Personalisieren initiierenden bzw. bestätigenden Nutzer tatsächlich um den Eigentümer des mobilen Endgeräts bzw. den auf diesem mobilen Endgerät registrierten Nutzer handelt. Dadurch, dass zusätzlich die Übertragungswege zum Auslesen der Attribute und zum Einbringen der Attribute bzw. zum Personalisieren mit kryptographischen Mitteln aneinandergebunden sind, kann sichergestellt werden, dass es sich bei dem beim Auslesen und beim Einbringen der Attribute jeweils um dasselbe mobile Endgerät handelt, welches demselben Nutzer zugeordnet ist.

Muss sich der Nutzer im Zuge des Auslesens der Attribute sowohl gegenüber dem mobilen Endgerät als auch gegenüber dem ID-Token authentisieren, kann beispielsweise sichergestellt werden, dass es sich bei dem Inhaber des ID-Tokens um dieselbe Person handelt, welche auch Besitzer des mobilen Endgeräts ist. Zumindest kann sichergestellt werden, dass der Inhaber des ID-Tokens im Zuge des Auslesens zusammen mit dem Besitzer des mobilen Endgeräts seine Zustimmung erteilen muss und für das Einbringen der entsprechenden Attribute zumindest das Einverständnis des Eigentümers desselben mobilen Endgeräts notwendig ist. Somit kann ausgeschlossen werden, dass im Zuge des Auslesens und Einbringens von Attributen das verwendete mobile Endgerät ausgetauscht und die entsprechenden Attribute somit in die Verfügungshoheit eines anderen, insbesondere eines unberechtigten, Nutzers gelangen können. Somit kann effektiv Missbrauch vorgebeugt werden. Zum kryptographischen Binden des Übertragungswegs des Auslesens der Attribute an den Übertragungsweg zum Personalisieren bzw. Einbringen der Attribute wird ein verschlüsselter Kommunikationskanal zwischen mobilem Endgerät und einem die Personalisierung ausführenden Personalisierungsserver aufgebaut. Dieser Kommunikationskanal ist verschlüsselt, so dass sichergestellt werden kann, dass Kommunikation über diesen tatsächlich nur zwischen den beiden Teilnehmern möglich ist, welche den entsprechenden Kommunikationskanal initial aufgebaut haben, d.h. dem mobilen Endgerät und dem Personalisierungsserver. Hierzu kann insbesondere eine Ende-zu-Ende-Verschlüsselung zum Einsatz kommen. Beispielsweise erfolgt die Verschlüsselung aufseiten des mobilen Endgeräts unter Verwendung des Sicherheitselements des mobilen Endgeräts, welches beispielsweise einem Betriebssystem des mobilen Endgeräts zugeordnet ist und zum Aufbau verschlüsselter Kommunikationskanäle konfiguriert ist.

Das Auslesen aus dem ID-Token einerseits und das Einbringen der ausgelesenen Attribute im Zuge der Personalisierung in das mobile Endgerät zur Verwendung durch das zu personalisierende ID-Anwendungsprogramm andererseits erfolgt dabei beispielsweise jeweils über einen eigenständigen verschlüsselten Unterkanal des verschlüsselten Kommunikationskanals. Die verschlüsselten Unterkanäle ermöglichen es sicherzustellen, dass über diese nur Teilnehmer miteinander kommunizieren können, welche den entsprechenden Unterkanal aufgebaut haben und über die entsprechenden kryptographischen Schlüssel verfügen. Im Falle des ersten verschlüsselten Unterkanals zwischen dem ID-Token und dem Personalisierungsserver sind dies der entsprechende ID-Token und der Personalisierungsserver. Im Falle des zweiten verschlüsselten Unterkanals zwischen dem zu personalisierenden ID-Anwendungsprogramm und dem Personalisierungsserver sind dies das entsprechende zu personalisierende ID-Anwendungsprogramm, beispielsweise die Personalisierungskomponente des ID-Anwendungsprogramms, und der Personalisierungsserver. Bei den Unterkanälen handelt es sich um verschlüsselte Unterkanäle innerhalb des verschlüsselten Kommunikationskanals. Es liegt dabei jeweils eine doppelte Verschlüsselung der übertragenen Daten vor. Zum einen werden die entsprechenden Daten im Zuge des Auslesens aus dem ID-Token von einem den entsprechenden verschlüsselten Unterkanal zugeordneten kanalspezifischen ephemeren symmetrischen kryptographischen Sitzungsschlüssel durch den ID-Token verschlüsselt. Im Zuge der Übertragung der entsprechenden verschlüsselten Daten zwischen dem mobilen Endgerät und dem Personalisierungsserver werden diese zusätzlich ein zweites Mal von dem mobilen Endgerät mit einem kanalspezifischen ephemeren symmetrischen kryptographischen Sitzungsschlüssels des verschlüsselten Kommunikationskanals verschlüsselt. Der empfangene Personalisierungsserver muss mithin zunächst die Verschlüsselung des Kommunikationskanals und anschließend die Verschlüsselung des entsprechenden Unterkanals entschlüsseln, um Zugriff auf die übertragenen Daten zu erlangen.

Im Zuge der Personalisierung verwendet der Personalisierungsserver durchgehend denselben verschlüsselten Kommunikationskanal. Dies bedeutet, dass die zum Personalisieren verwendeten Attribute mit dem kanalspezifischen ephemeren symmetrischen kryptographischen Sitzungsschlüssel des verschlüsselten Kommunikationskanals verschlüsselt werden. Da sich lediglich das bereits zum Auslesen der Attribute verwendete mobile Endgerät, beispielsweise dessen Sicherheitselement oder die Personalisierungskomponente des ID-Anwendungsprogramms, im Besitz desselben kanalspezifischen ephemeren symmetrischen kryptographischen Sitzungsschlüssels befindet, ist nur dasselbe mobile Endgerät dazu in der Lage, die zum Personalisieren zu verwendenden Attribute zu entschlüsseln. Somit kann sichergestellt werden, dass zum Personalisieren dasselbe mobile Endgerät verwendet wird, welches bereits zuvor zum Auslesen der entsprechenden Attribute verwendet wurde. Um eine sichere Übertragung der zum Personalisieren zu verwendenden Attribute an das zu personalisierende ID-Anwendungsprogramm des mobilen Endgeräts sicherzustellen, wird zur Übertragung der Attribute ein weiterer verschlüsselte Unterkanal innerhalb des verschlüsselten Kommunikationskanals verwendet. Mit anderen Worten werden die entsprechenden Attribute zunächst mit einem ephemeren symmetrischen kryptographischen Sitzungsschlüssel des entsprechenden Unterkanals verschlüsselt und anschließend mit dem kanalspezifischen ephemeren symmetrischen kryptographischen Sitzungsschlüssel des verschlüsselten Kommunikationskanals. Die so doppelt verschlüsselten Attribute werden zunächst durch das den Endpunkt des verschlüsselten Kommunikationskanals bildende mobile Endgerät entschlüsselt, beispielsweise durch ein den hierfür notwendigen ephemeren kryptographischen Sitzungsschlüssel verwaltendes Sicherheitselement des Endgeräts. Die aus dieser ersten Entschlüsselung resultierenden Daten werden dem zu personalisierende ID-Anwendungsprogramm bereitgestellt, beispielsweise einer Personalisierungskomponente des ID-Anwendungsprogramms. Das ID-Anwendungsprogramm verfügt über den kryptographischen Sitzungsschlüssel, welcher dem entsprechenden Unterkanal, dessen Endpunkt das ID-Anwendungsprogramm beispielsweise bildet, zugeordnet ist. Mit diesem kryptographischen Sitzungsschlüssel lässt sich auch die zweite Verschlüsselung der übertragenen Daten entschlüsseln und diese können von dem zu personalisierenden Sicherheitselement zur Personalisierung verwendet werden.

Beispielsweise wird zunächst eine gesicherte Verbindung in Form des verschlüsselten Kommunikationskanals von dem mobilen Endgerät zum Personalisierungsserver aufgebaut. Die entsprechende Verbindung ist beispielsweise durch eine gegenseitige Authentisierung bzw. Authentifizierung gesichert, aufgrund derer die Teilnehmer sicherstellen können, mit wem sie kommunizieren. Die Authentisierung seitens des mobilen Endgeräts kann eine Authentisierung des Nutzers des mobilen Endgeräts gegenüber dem mobilen Endgerät voraussetzen. Somit kann nicht nur sichergestellt werden, dass die Kommunikation im Kommunikationskanal mit dem bzw. über das mobile Endgerät erfolgt, sondern zudem, dass die Kommunikation unter Einverständnis des Nutzers des mobilen Endgeräts erfolgt. Hierzu stellt der entsprechende Nutzer beispielsweise einen Authentisierungsfaktor bereit, wie etwa ein biometrisches Merkmal oder eine PIN, insbesondere ein System-PIN. Der entsprechende Authentisierungsfaktor wird beispielsweise durch einen Authentifizierungssensor des mobilen Endgeräts in Form von Authentisierungsdaten erfasst. Hierbei kann es sich beispielsweise um einen biometrischen Sensor, wie etwa einen Fingerscanner oder eine Kamera zum Erfassen des Nutzers handeln. Beispielsweise kann es sich bei dem entsprechenden Authentifizierungssensor auch um eine Eingabevorrichtung des mobilen Endgeräts handeln, über welche der Nutzer seine PIN eingeben kann, wie etwa eine Tastatur oder ein Touchscreen. Bei einer System-PIN handelt es sich beispielsweise um eine dem Betriebssystem des entsprechenden mobilen Endgeräts zugeordnete PIN des Nutzers. Zum Auslesen von Attributen aus dem ID-Token, d.h. dem elektronischen Identitätsdokuments des Nutzers, ist zudem im Zuge des Aufbaus des Unterkanals eine Authentisierung des Nutzers gegenüber dem ID-Token notwendig. Hierzu kann der Nutzer beispielsweise einen entsprechenden Authentifizierungsfaktor über den Authentifizierungssensor des mobilen Endgeräts bereitstellen. Alternativerweise kann der entsprechende Authentifizierungsfaktor auch direkt gegenüber dem ID-Token bereitgestellt werden, falls der ID-Token über den Authentifizierungssensor zum Erfassen des entsprechenden Authentifizierungsfaktors verfügt. Bei dem entsprechenden Authentifizierungsfaktor kann es sich wie zuvor beispielsweise um biometrische Merkmale des Nutzers oder insbesondere eine Dokumenten-PIN handeln. Bei einer entsprechenden Dokumenten-PIN handelt es sich um eine PIN, welche dem entsprechenden ID-Token bzw. elektronischen Identitätsdokument zugeordnet ist. Zum Übertragen der ausgelesenen Attribute von dem ID-Token an dem Personalisierungsserver wird ein verschlüsselter Unterkanal des verschlüsselten Kommunikationskanals aufgebaut. Der entsprechende Aufbau erfolgt beispielsweise über den verschlüsselten Kommunikationskanal. Die auszulesenden Attribute werden sodann mit einer doppelten Verschlüsselung gesichert von dem Personalisierungsserver an das mobile Endgerät bzw. das zu personalisierende ID-Anwendungsprogramm übertragen.

Zum Personalisieren des ID-Anwendungsprogramms wird ein zweiter Unterkanal innerhalb des verschlüsselten Kommunikationskanals aufgebaut. Im Zuge des Aufbaus ist beispielsweise eine Authentisierung des Nutzers gegenüber dem zu personalisierenden Sicherheitselement notwendig. Die Authentifizierung erfolgt beispielsweise unter Verwendung des Sicherheitselements des mobilen Endgeräts, bei welchem es sich beispielsweise um ein dem Betriebssystem des mobilen Endgeräts zugeordnetes Sicherheitselement handelt. Der Nutzer authentisiert sich gegenüber dem entsprechenden Sicherheitselement bzw. wird von dem entsprechenden Sicherheitselement erfolgreich authentifiziert. Die erfolgreiche Authentifizierung des Nutzers teilt das Sicherheitselement dem zu personalisierenden ID-Anwendungsprogramm direkt oder indirekt mit. Beispielsweise berechnet das Sicherheitselement für das ID-Anwendungsprogramm bzw. für die Kontrollkomponente des ID-Anwendungsprogramms ein Geheimnis zum Erzeugen des ephemeren symmetrischen Sitzungsschlüssels zum Verschlüsseln des zweiten Unterkanals nur unter Voraussetzung einer erfolgreichen Nutzerauthentifizierung. Mit dem Bereitstellen des entsprechenden Geheimnisses kann das ID-Anwendungsprogramm beispielsweise auf eine erfolgreiche Nutzerauthentifizierung durch das Sicherheitselement schließen.

Bei dem verschlüsselten Unterkanal, welcher zwischen dem zu personalisierenden ID-Anwendungsprogramm bzw. der Kontrollkomponente des ID-Anwendungsprogramms und dem Personalisierungsserver über den verschlüsselten Kommunikationskanalaufgebaut wird, handelt es sich beispielsweise um die Verwendung eines Ende-zu-Endeverschlüsselten Unterkanal. Die zuvor ausgelesenen Daten, d.h. Attribute, aus dem ID-Token werden nun über den zweiten Unterkanal innerhalb des Kommunikationskanals an das zu personalisierende ID-Anwendungsprogramm übertragen. Die Attribute werden beispielsweise in Form eines binären kompakten Datenformats, etwa als CBOR-Struktur ("Concise Binary Object Representation"), d.h. ist ein binäres kompaktes Datenformat zur Serialisierung, in das mobile Endgerät eingebracht. Zum Einbringen der Attribute können beispielsweise auch andere Formate verwendet werde, wie etwa ASN.1, JSON, XML, protoBuf etc. Ferner können über den entsprechenden Unterkanal auch weitere kryptographische Elemente, wie etwa Wurzelsignaturprüfschlüssel übertragen werden. Bei den Wurzelsignaturprüfschlüssel handelt es sich beispielsweise um CVCA Schlüssel einer Country Verifying Certificate Authority, d.h. einer nationalen Zertifikats-Autorität für Verifizierung. Diese weiteren kryptographischen Elemente können beispielsweise ebenfalls Bestandteil der CBOR-Struktur mit den Attributen sein. Ferner kann über den entsprechenden Unterkanal ein Erzeugen von attributspezifischen und damit identitätsspezifischen kryptographischen Schlüsseln auf dem Sicherheitselement initiiert werden, welche der im Zuge der Personalisierung auf dem mobilen Endgerät hinterlegten abgeleiteten elektronischen Identität des Nutzers des mobilen Endgeräts zugeordnet sind. Beispielsweise wird ein drittes asymmetrisches kryptographisches Schlüsselpaar durch das Sicherheitselement erzeugt, welches den eingebrachten Attributen bzw. der erstellten Identität zugeordnet ist. Beispielsweise wird der dritte öffentliche kryptographische Schlüssel zusammen mit Attributen bzw. mit der elektronischen Identität gespeichert. Mit diesem öffentlichen kryptographischen Schlüssel können beispielsweise mit dem dritten öffentlichen kryptographischen Schlüssel als Signaturschlüssel erstellte attributspezifische bzw. identitätsspezifische Signaturen verifiziert werden.

Ausführungsformen ermöglichen im Zuge der Provisionierung des mobilen Endgeräts bzw. des ID-Anwendungsprogramms ein Vorbereiten für eine nachfolgende sichere Personalisierung mit Identitätsinformationen eines Nutzers und dessen Bindung an das Gerät. Ausführungsformen können den Vorteil haben, dass sie eine sichere Verwaltung digitaler bzw. elektronischer Identitäten unter Verwendung eines mobilen Geräts ermöglichen. Hierzu ist auf dem mobilen Endgerät das ID-Anwendungsprogramm zum Verwalten von elektronischen Identitäten bzw. von zu elektronischen Identitäten gehörenden bzw. elektronische Identitäten definierenden Identitätsattributen installiert.

Das mobile Endgerät mit den von dem ID-Anwendungsprogramm verwalteten elektronischen Identitäten kann beispielsweise verwendet werden zum Identifizieren und Authentifizieren, zum Übertragen von Identitätsdaten sowie zur Unterstützung von Absichtserklärungen im mobilen Kontext.

Nach Ausführungsformen kann die elektronische Identität eine offiziell anerkannte Identität, wie zum Beispiel eine auf Grundlage eines offiziellen Ausweisdokuments, etwa eines Personalausweises oder Reisepasses, erstellte elektronische Identität umfassen.

Die elektronische Identität eines Nutzers ist eindeutig, d.h. einzigartig und unverwechselbar. Sie wird auf der Grundlage von Merkmalen, sog. Identitätsattributen, definiert. Eine elektronische Identität umfasst beispielsweise personenbezogene Daten. Personenbezogene Daten bezeichnen Daten, welche eine Identifikation einer Person ermöglichen oder einer Person zuordenbar sind, auf welche die personenbezogenen Daten bezogen sind.

Ein Nutzer kann über eine Mehrzahl von unterschiedlichen, anwendungsspezifischen elektronischen Identitäten verfügen. Diese elektronischen Identitäten können unterschiedlichen Sicherheitsanforderungen entsprechen. Das ID-Anwendungsprogramm kann dazu konfiguriert sein, eine Mehrzahl von elektronischen Identitäten zu verwalten.

Nach Ausführungsformen kann eine auf dem mobilen Endgerät gespeicherte und von dem ID-Anwendungsprogramm bereitgestellte bzw. verwaltete elektronische Identität ohne zusätzliche Hardware neben dem mobilen Endgerät zur Identifizierung und Authentifizierung des Nutzers des mobilen tragbaren Geräts verwendet werden.

Identitätsattribute werden beispielsweise von Service-Providern bzw. Dienstanbietern für Online-Dienste nachgefragt. Nach Ausführungsformen erfolgt eine Übertragung der von einem Dienstanbieter für seinen Online-Dienst benötigten Identitätsattribute verschlüsselt und authentisch. Beispielsweise wird unter Verwendung von Berechtigungszertifikaten geregelt, wer auf welche Identitätsattribute zugreifen darf bzw. eine Leseberechtigung für diese besitzt. Beispielsweise werden die benötigten Identitätsattribute von einem dazu mittels Berechtigungszertifikat berechtigten ID-Provider ausgelesen und von diesem dem anfragenden Dienstanbieter zur Verfügung gestellt. Nach Ausführungsformen stellt der ID-Provider dem anfragenden Dienstanbieter nur eine Bestätigung des oder der angefragten Identitätsattribute zur Verfügung. Beispielsweise fragt der Dienstanbieter an, ob die angefragten Identitätsattribute ein oder mehrere Merkmale aufweisen, was von dem ID-Provider-Server anhand der ausgelesenen Identitätsattribute geprüft und gegenüber dem Dienstanbieter entweder bestätigt oder verneint wird.

Eine Zustimmung des Nutzers zur Verwendung der Identitätsattribute und/oder eine Nutzerauthentifizierung erfolgt beispielsweise unter Prüfung ein oder mehrerer Authentifizierungsfaktoren, wie etwa Passwort, PIN, Fingerabdruck oder Gesichtserkennung.

Nach Ausführungsformen steuert das ID-Anwendungsprogramm den Aufbau des verschlüsselten Kommunikationskanals zwischen dem mobilen Endgerät und dem Personalisierungsserver. Beispielsweise umfasst das ID-Anwendungsprogramm eine Personalisierungskomponente, welche auf Seiten des mobilen Endgeräts die Personalisierung steuert. Beispielsweise steuert die Personalisierungskomponente des ID-Anwendungsprogramms auf Seiten des mobilen Endgeräts den Aufbau des verschlüsselten Kommunikationskanals sowie den Aufbau des ersten verschlüsselten Unterkanals und des zweiten verschlüsselten Unterkanals unter Vermittlung des mobilen Endgeräts.

Beispielsweise werden die empfangenen Attribute durch die Kontrollkomponente des ID-Anwendungsprogramms auf dem mobilen Endgerät gespeichert. Beispielsweise werden die Attribute in einem der Kontrollkomponente und/oder dem ID-Anwendungsprogramm zugeordneten Speicherbereich des mobilen Endgeräts gespeichert. Beispielsweise werden die Attribute in verschlüsselter Form gespeichert. Beispielsweise werden die Attribute unverschlüsselt gespeichert.

Nach Ausführungsformen ist der erste verschlüsselte Kommunikationskanal mit einem ersten kanalspezifischen ephemeren symmetrischen kryptographischen Sitzungsschlüssel verschlüsselt. Der erste verschlüsselte Unterkanal ist mit einem zweiten kanalspezifischen ephemeren symmetrischen kryptographischen Sitzungsschlüssel verschlüsselt. Der zweite verschlüsselte Unterkanal ist mit einem dritten kanalspezifischen ephemeren symmetrischen kryptographischen Sitzungsschlüssel verschlüsselt.

Ausführungsformen können den Vorteil haben, dass die Verschlüsselung im Kommunikationskanal sowie in den beiden verschlüsselten Unterkanälen jeweils kanalspezifische ephemere symmetrische kryptographische Sitzungsschlüssel zugeordnet sind. Somit können die Unterkanäle jeweils mit dem Kommunikationskanal kombiniert bzw. innerhalb desselben ausgeführt werden, indem eine doppelte Verschlüsselung durch die den entsprechenden Kanälen zugeordneten kryptographischen Sitzungsschlüssel verwendet wird.

Nach Ausführungsformen sind der erste kanalspezifische ephemere symmetrische kryptographische Sitzungsschlüssel, der zweite kanalspezifische ephemere symmetrische kryptographische Sitzungsschlüssel und der dritte kanalspezifische ephemere symmetrische kryptographische Sitzungsschlüssel jeweils unabhängig voneinander.

Beispielsweise ist dem ersten und dem zweiten verschlüsselten Unterkanal ferner jeweils ein kanalspezifischer ephemerer symmetrischer kryptographischer Authentisierungsschlüssel zum Authentisieren von Daten zugeordnet, welche über den entsprechenden ersten bzw. zweiten verschlüsselten Unterkanal übertragen werden. Beispielsweise wird für die entsprechenden Daten unter Verwendung des jeweiligen kanalspezifischer ephemerer symmetrischer kryptographischer Authentisierungsschlüssel jeweils ein MAC erzeugt. Bei den entsprechenden Authentisierungsschlüsseln handelt es sich beispielsweise um kryptographische Schlüssel zum Erzeugen des entsprechenden MAC.

Ein MAC wird beispielsweise unter Verwendung eines MAC-Algorithmus berechnet, welchem zu schützende Daten, z.B. die Identitätsattribute, und ein kryptographischer Schlüssel, beispielsweise ein symmetrischer kryptographischer Schlüssel, als Eingabedaten zur Verfügung gestellt werden. Unter Verwendung dieser Eingabedaten berechnet der MAC-Algorithmus eine Prüfsumme, welche als MAC dient. Zum Berechnen von MACs können beispielsweise Blockchiffren oder Hash-Funktionen verwendet werden. Als MAC kann beispielsweise ein HMAC (Keyed-Hash Message Authentication Code) verwendet werden, für dessen Konstruktion eine kryptographische Hash-Funktion, wie beispielsweise der Secure Hash Algorithm (SHA), und ein geheimer kryptographischer Schlüssel, beispielsweise ein symmetrischer kryptographischer Schlüssel, verwendet wird.

Zur Sicherung einer Datenübertragung, beispielsweise einer Übertragung von Identitätsattributen, wird zwischen Sender, beispielsweise dem ID-Token, und Empfänger, beispielsweise einem Personalisierungsserver, ein kryptographischer Schlüssel, beispielsweise ein symmetrischer kryptographischer Schlüssel, vereinbart. Der Sender verwendet diesen kryptographischen Schlüssel zum Berechnen eines MACs der zu übertragenden Daten und sendet den berechneten MAC zusammen mit den zu übertragenden Daten an den Empfänger. Der Empfänger berechnet seinerseits einen MAC für die empfangenen Daten unter Verwendung des kryptographischen Schlüssels und vergleicht das Ergebnis mit dem empfangenen MAC. Im Falle einer Übereinstimmung zwischen berechnetem MAC und empfangenen MAC ist die Integritätsprüfung erfolgreich und die empfangenen Daten werden als authentisch angesehen.

Im Falle eines MAC müssen sowohl Sender als auch Empfänger Kenntnis von dem verwendeten kryptographischen Schlüssel haben im Gegensatz zu einer Verwendung von reinen Hashfunktionen oder von Signaturen. Im Falle von reinen Hashfunktionen kommen beispielsweise keine kryptographischen Schlüssel zum Einsatz. Falls die Hashfunktionen öffentlich sind, kann jeder den Hashwert berechnen, insbesondere für manipulierte Nachrichten. Im Falle einer Signatur kennt nur der Signierende den zum Erstellen der Signatur verwendeten privaten kryptographischen Schlüssel, d.h. Signaturschlüssel, eines für die Signatur verwendeten asymmetrischen Schlüsselpaars. Der Signaturempfänger verfügt lediglich über den öffentlichen kryptographischen Schlüssel, d.h. Signaturprüfschlüssel, des für die Signatur verwendeten asymmetrischen Schlüsselpaars. Der Signaturempfänger kann die Signatur mithin prüfen unter Verwendung des Signaturprüfschlüssels, aber nicht selbst berechnen.

Nach Ausführungsformen handelt es sich bei der Verschlüsselung des ersten verschlüsselten Kommunikationskanals um eine Ende-zu-Ende-Verschlüsselung zwischen dem mobilen Endgerät und dem Personalisierungsserver.

Ausführungsformen können den Vorteil haben, dass sichergestellt werden kann, dass stets dasselbe mobile Endgerät einen Endpunkt des verschlüsselten Kommunikationskanals bildet. Solange also über denselben verschlüsselten Kommunikationskanal kommuniziert wird, weiß der Personalisierungsserver, dass er mit demselben mobilen Endgerät kommuniziert. Somit kann sichergestellt werden, dass es sich bei dem mobilen Endgerät, über welches der ID-Token ausgelesen wird, um dasselbe mobile Endgerät handelt, welches mit den ausgelesenen Daten, d.h. Attributen des ID-Tokens, personalisiert wird.

Nach Ausführungsformen erfolgt die Verschlüsselung des verschlüsselten Kommunikationskanal seitens des mobilen Endgeräts unter Verwendung eines Sicherheitselements des mobilen Endgeräts, welches beispielsweise einem Betriebssystem des mobilen Endgeräts zugeordnet ist. Das Sicherheitselement stellt beispielsweise kryptographische Schlüssel und/oder kryptographische Protokolle für das Betriebssystem bereit.

Nach Ausführungsformen handelt es sich bei der Verschlüsselung des ersten verschlüsselten Unterkanals um eine Ende-zu-Ende-Verschlüsselung zwischen dem ID-Token und dem Personalisierungsserver.

Ausführungsformen können den Vorteil haben, dass die zwischen dem ID-Token und dem Personalisierungsserver verschlüsselt übertragenen Daten zumindest zwischen dem mobilen Endgerät und dem Personalisierungsserver innerhalb des verschlüsselten Kommunikationskanals übertragen werden können. Zugleich erlangt das mobile Endgerät an diesem Punkt noch keinen Zugriff auf die über den verschlüsselten Unterkanal übertragenen Daten. Somit kann sichergestellt werden, dass ein Zugriff auf die entsprechenden Daten ausschließlich durch den Personalisierungsserver im Zuge einer Personalisierung erfolgt. Mithin kann einem Missbrauch bzw. einem unberechtigten Auslesen von Attributen entgegengewirkt werden. Vielmehr kann ein entsprechendes Auslesen und Verwenden der Attribute zum Personalisieren ausschließlich über eine vertrauenswürdige Instanz in Form des Personalisierungsservers erfolgen.

Nach Ausführungsformen handelt es sich bei der Verschlüsselung des zweiten verschlüsselten Unterkanals um eine Ende-zu-Ende-Verschlüsselung zwischen dem ID-Anwendungsprogramm auf dem mobilen Endgerät, beispielsweise der Kontrollkomponente des ID-Anwendungsprogramms, und dem Personalisierungsserver.

Ausführungsformen können den Vorteil haben, dass durch die Ende-zu-Ende-Verschlüsselung zwischen dem ID-Anwendungsprogramm, beispielsweise der Kontrollkomponente des ID-Anwendungsprogramms, und dem Personalisierungsserver sichergestellt werden kann, dass tatsächlich das zu personalisierende ID-Anwendungsprogramm des mobilen Endgeräts personalisiert wird und dass die zur Personalisierung verwendeten Daten ausschließlich dem ID-Anwendungsprogramm zur Verfügung gestellt werden. Somit können beispielsweise unberechtigte Zugriffe auf die entsprechende Personalisierungsdaten verhindert werden.

Nach Ausführungsformen umfasst das Personalisieren ferner:
- Erzeugen eines dem ID-Anwendungsprogramm zugeordneten dritten asymmetrischen Schlüsselpaars durch das Sicherheitselement, wobei das dritte asymmetrische Schlüsselpaar einen dritten privaten kryptographischen Schlüssel und einen dritten öffentlichen kryptographischen Schlüssel umfasst, wobei das dritte asymmetrische Schlüsselpaar zu einem Authentisieren des ID-Anwendungsprogramms im Zuge einer Verwendung der Attribute dient,

Nach Ausführungsformen sendet das Sicherheitselement den dritten öffentlichen kryptographischen Schlüssel des ID-Anwendungsprogramms von dem Sicherheitselement an den Personalisierungsserver unter Verwendung der Kontrollkomponente über den zweiten verschlüsselten Unterkanal innerhalb des ersten verschlüsselten Kommunikationskanals.

Ausführungsformen können den Vorteil haben, dass durch Sicherheitselement ein individuelles asymmetrisches Schlüsselpaar für das individuelle ID-Anwendungsprogramm erzeugt und zur Verwendung durch das ID-Anwendungsprogramm bereitgestellt werden kann. Der öffentliche kryptographische Schlüssel des entsprechenden asymmetrischen Schlüsselpaars wird über den verschlüsselten Unterkanal zwischen ID-Anwendungsprogramm und Personalisierungsserver in dem verschlüsselten Kommunikationskanal übertragen. Somit wird der entsprechende öffentliche kryptographische Schlüssel, der im Zuge der Personalisierung auf dem personalisierten Sicherheitselement erzeugt wird, dem Personalisierungsserver zur Verfügung gestellt. Dieser kann den entsprechenden öffentlichen kryptographischen Schlüssel beispielsweise als Signaturprüfschlüssel anderen Instanzen zur Verfügung stellen. Mit dem entsprechendem Signaturprüfschlüssel kann sichergestellt werden, dass mit dem zugehörigen privaten kryptographischen Schlüssel signierte Daten tatsächlich von dem personalisierten Sicherheitselement stammen. Beispielsweise kann der Personalisierungsserver ein Zertifikat für bzw. mit dem entsprechenden öffentlichen kryptographischen Schlüssel ausstellen. Durch das entsprechende Zertifikat, bei welchem es sich beispielsweise um ein Zertifikat einer Zertifikatskette, insbesondere einer PKI handelt, kann durch den Personalisierungsserver die Authentizität des entsprechenden öffentlichen kryptographischen Schlüssels bzw. dessen Zuordnung zu dem personalisierten Sicherheitselement und damit zu dem entsprechenden personalisierten ID-Anwendungsprogramm bestätigt werden.

Beispielsweise sendet der Personalisierungsserver zum Initiieren des Erzeugens des dem ID-Anwendungsprogramm zugeordneten asymmetrischen kryptographischen Schlüsselpaars eine Aufforderung an das Sicherheitselement, welche das Sicherheitselement zum Erzeugen des dem ID-Anwendungsprogramm zugeordneten asymmetrischen kryptographischen Schlüsselpaars auffordert.

Nach Ausführungsformen umfasst das Personalisieren ferner:
- Empfangen ein oder mehrere Wurzelsignaturprüfschlüssel durch die Kontrollkomponente von dem Personalisierungsserver über den zweiten verschlüsselten Unterkanal innerhalb des ersten verschlüsselten Kommunikationskanals,
- Speichern der empfangenen Wurzelsignaturprüfschlüssel durch die Kontrollkomponente auf dem mobilen Endgerät, wobei das ID-Anwendungsprogramm dazu konfiguriert ist, die Wurzelsignaturprüfschlüssel zum Verifizieren von Zertifikatsignaturen ein oder mehrerer Wurzelinstanzen zu verwenden, welche Zertifikate aufweisen, die jeweils im Zuge eines Auslesens der Attribute zum Authentisieren eines auslesenden Computersystems gegenüber dem ID-Anwendungsprogramm verwendet werden.

Ausführungsformen können den Vorteil haben, dass im Zuge der Personalisierung auf dem mobilen Endgerät Wurzelsignaturprüfschlüssel zur Verwendung durch das ID-Anwendungsprogramm hinterlegt werden können. Mit den entsprechenden Wurzelsignaturprüfschlüsseln wird das ID-Anwendungsprogramm dazu in die Lage versetzt, Signaturen von Wurzelinstanzen, insbesondere Zertifikatsignaturen von Wurzelinstanzen, zu verifizieren. Wird dem ID-Anwendungsprogramm eine Zertifikatskette zum Authentifizieren eines Computersystems vorgelegt, beispielsweise eines ID-Provider-Servers, welches zum Nachweis der Identität des Nutzers des mobilen Endgeräts auf die ausgelesenen und in dem personalisierten Sicherheitselement hinterlegten Attribute zugreifen möchte. So kann mit dem Wurzelsignaturprüfschlüssel beispielsweise ein erstes innerhalb der Zertifikatskette ausgestelltes Ausgangszertifikat der entsprechenden Zertifikatskette verifiziert werden. Erweist sich das entsprechende Ausgangszertifikat als authentisch, so kann dadurch sukzessive die Authentizität der vollständigen Zertifikatskette geprüft und verifiziert werden. Beispielsweise ist jedes Zertifikat der Zertifikatskette jeweils unter Verwendung eines privaten kryptographischen Schlüssels einer ausstellenden Instanz als Signaturschlüssel signiert. Die entsprechende Signatur kann beispielsweise jeweils durch einen von dem vorangehenden Zertifikat als Signaturprüfschlüssel bereitgestellten zugehörigen öffentlichen kryptographischen Schlüssel verifiziert werden. Lediglich das Ausgangszertifikat, welchem kein Zertifikat vorangeht, ist mit einem Wurzelsignaturschlüssel einer Wurzelinstanz signiert. Diese Wurzelsignatur kann unter Verwendung eines entsprechenden in dem personalisierten Sicherheitselement hinterlegten Wurzelsignaturprüfschlüssel geprüft und verifiziert werden.

Nach Ausführungsformen umfasst das Personalisieren ferner:
- Empfangen einer Signatur der Attribute von dem Personalisierungsserver durch die Kontrollkomponente über den zweiten verschlüsselten Unterkanal innerhalb des ersten verschlüsselten Kommunikationskanals, wobei die Signatur als Authentizitätsnachweis der Attribute dient,
- Speichern der empfangenen Signatur der Attribute durch die Kontrollkomponente auf dem mobilen Endgerät.

Ausführungsformen können den Vorteil haben, dass mittels der entsprechenden Signatur der Attribute deren Authentizität verifizierbar ist. Mithin kann das mobile Endgerät, welches eine entsprechende Signatur der zum Personalisieren verwendeten Attribute umfasst, auch offline zum Nachweis der Identität des Nutzers des mobilen Endgeräts verwendet werden. Hierzu zeigt das mobile Endgerät die entsprechenden Attribute inklusive Signatur beispielsweise auf einer Anzeigevorrichtung an, etwa in Form eines ein- oder zweidimensionalen lesbaren Maschinencodes, beispielsweise eines QR-Codes. Die entsprechenden Attribute mit der Signatur können dann beispielsweise von einem Lesegerät erfasst und anhand der Signatur verifiziert werden. Ferner wäre beispielsweise eine kontaktlose Übertragung der entsprechenden Attribute mit der Signatur zum Nachweis der Identität des Nutzers des mobilen Endgeräts an ein weiteres Computersystem, beispielsweise ein weiteres mobiles Endgerät, möglich. Auch in diesem Fall könnte die Authentizität der entsprechenden Attribute und damit die Identität des Nutzers des mobilen Endgeräts anhand der Signatur nachgewiesen werden.

Nach Ausführungsformen umfasst das Aufbauen des ersten verschlüsselten Kommunikationskanals ein Aushandeln des ersten kanalspezifischen ephemeren symmetrischen kryptographischen Sitzungsschlüssels.

Nach Ausführungsformen umfasst das Aushandeln des ersten kanalspezifischen ephemeren symmetrischen kryptographischen Sitzungsschlüssels:
- Erzeugen eines ersten Zufallswerts durch das mobile Endgerät,
- Erzeugen des ersten kanalspezifischen ephemeren symmetrischen kryptographischen Sitzungsschlüssel unter Verwendung des ersten Zufallswerts durch das mobile Endgerät,
- Empfangen eines ersten Zertifikats des Personalisierungsservers mit einem vierten öffentlichen kryptographischen Schlüssel eines vierten asymmetrischen kryptographischen Schlüsselpaars des Personalisierungsservers durch das mobile Endgerät von dem Personalisierungsserver,
- Verschlüsseln des ersten Zufallswerts unter Verwendung des empfangenen ersten öffentlichen kryptographischen Schlüssels des Personalisierungsservers durch das mobile Endgerät,
- Senden des verschlüsselten ersten Zufallswerts an den Personalisierungsserver durch das mobile Endgerät zum Erzeugen des ersten kanalspezifischen ephemeren symmetrischen kryptographischen Sitzungsschlüssel durch den Personalisierungsserver.

Ausführungsformen können den Vorteil haben, dass ein sicheres Verfahren zum Bereitstellen des ersten kanalspezifischen ephemeren symmetrischen kryptographischen Sitzungsschlüssels zum Verschlüsseln des Kommunikationskanals zwischen dem mobilen Endgerät und dem Personalisierungsserver bereitgestellt werden kann. Beispielsweise wird zunächst ein erster initialer Zufallswert durch das mobile Endgerät erzeugt und an den Personalisierungsserver gesendet. Nach dem Empfang des entsprechenden ersten initialen Zufallswerts erzeugt der Personalisierungsserver einen zweiten initialen Zufallswert, welchen er an das mobile Endgerät sendet. Somit verfügen beide Teilnehmer, das mobile Endgerät sowie der Personalisierungsserver, über beide initialen Zufallswerte. Ferner sendet der Server beispielsweise sein Zertifikat an das mobile Endgerät und empfängt von dem mobilen Endgerät nach einer erfolgreichen Prüfung des entsprechenden Zertifikats ein Zertifikat des mobilen Endgeräts. Bei dem Zertifikat des mobilen Endgeräts handelt es sich beispielsweise um ein dem ID-Anwendungsprogramm zugeordnetes Zertifikat. Das durch den Personalisierungsserver empfangene Zertifikat des mobilen Endgeräts wird ebenfalls verifiziert. Die beiden Zertifikate umfassen dabei jeweils einen öffentlichen kryptographischen Schlüssel, d.h. das Zertifikat des Personalisierungsservers umfasst einen öffentlichen kryptographischen Schlüssel eines asymmetrischen Schlüsselpaars des Personalisierungsservers und das Zertifikat des mobilen Endgeräts umfasst einen öffentlichen kryptographischen Schlüssel eines asymmetrischen Schlüsselpaars des mobilen Endgeräts.

Somit verfügen nun beide Teilnehmer jeweils über kryptographische Schlüssel der Gegenseite, dessen Authentizität durch ein Zertifikat belegt ist. Daraufhin erzeugt das mobile Endgerät beispielsweise den ersten Zufallswert, welchen es an den Personalisierungsserver sendet. Somit verfügen nun beide Teilnehmer der Kommunikation jeweils über drei Zufallswerte, aus welchen beispielsweise der kanalspezifische ephemere symmetrische kryptographische Sitzungsschlüssel berechnet werden kann. Ferner sendet das mobile Endgerät beispielsweise eine Signatur einer, mehrerer oder aller vorangehenden im Zuge des Kanalaufbaus ausgetauschten Nachrichten an den Personalisierungsserver. Durch Prüfung der entsprechenden Signatur unter Verwendung von dem Zertifikat des mobilen Endgeräts bereitgestellten öffentlichen kryptographischen Schlüssel als Signaturprüfschlüssel kann der Personalisierungsserver das mobile Endgerät authentifizieren. Hierbei handelt es sich beispielswiese um den ersten öffentlichen kryptographischen Schlüssel des ID-Anwendungsprogramms, falls es sich bei dem Zertifikat des mobilen Endgeräts um das dem ID-Anwendungsprogramm zugeordnete Zertifikat mit dem ersten öffentlichen kryptographischen Schlüssel des ID-Anwendungsprogramms handelt. Sendet im Folgenden der Personalisierungsserver eine mit dem ersten kanalspezifischen ephemeren symmetrischen kryptographischen Sitzungsschlüssel verschlüsselte Nachricht an das mobile Endgerät, so wird dadurch auch der Personalisierungsserver gegenüber dem mobilen Endgerät authentifiziert. Der Personalisierungsserver kann den ersten kanalspezifischen ephemeren symmetrischen kryptographischen Sitzungsschlüssel nur berechnen, wenn er über einen privaten kryptographischen Schlüssel verfügt, mit welchem er den von dem mobilen Endgerät empfangenen ersten Zufallswert entschlüsseln kann. Somit ist nur der im Besitz des entsprechenden privaten kryptographischen Schlüssels befindliche Personalisierungsserver, welchem das Zertifikat des Personalisierungsservers zugeordnet ist, zu einer verschlüsselten Kommunikation über den verschlüsselten Kommunikationskanal in der Lage.

Nach Ausführungsformen umfasst das Aufbauen des ersten verschlüsselten Kommunikationskanals ferner ein gegenseitiges Authentisieren des ID-Anwendungsprogramms des mobilen Endgeräts und des Personalisierungsservers.

Ausführungsformen können den Vorteil haben, dass durch eine gegenseitige Authentifizierung sichergestellt werden kann, welche Teilnehmer miteinander kommunizieren und zwischen welchen Teilnehmern mithin der verschlüsselte Kommunikationskanal aufgebaut wird. Insbesondere kann dadurch die Identität des mobilen Endgeräts festgestellt werden und sichergestellt werden, welchem Endgerät die elektronische Identität des Nutzers zugeordnet wird bzw. welches mobile Endgerät personalisiert wird.

Nach Ausführungsformen ist das Sicherheitselement dazu konfiguriert, dass Voraussetzung für das Authentisieren des ID-Anwendungsprogramms des mobilen Endgeräts gegenüber dem Personalisierungsserver eine erfolgreiche Authentisierung des Nutzers gegenüber dem Sicherheitselement ist. Der Nutzer erklärt mit der Authentisierung eine Zustimmung zu dem Personalisieren des ID-Anwendungsprogramms.

Somit kann sichergestellt werden, dass ein registrierter Nutzer der Verwendung des mobilen Endgeräts zum Personalisieren des ID-Anwendungsprogramms zustimmt. Beispielsweise umfasst das Authentisieren des ID-Anwendungsprogramms ein Signieren einer Challenge des Personalisierungsservers durch das Sicherheitselement mit dem ersten privaten kryptographischen Schlüssel des ID-Anwendungsprogramm, für dessen Verwendung eine erfolgreiche Nutzerauthentifizierung des registrierten Nutzers notwendig ist.

Nach Ausführungsformen sendet das mobile Endgerät zum Authentisieren gegenüber dem Personalisierungsserver das Zertifikat mit dem ersten öffentlichen kryptographischen Schlüssel des ID-Anwendungsprogramms an den Personalisierungsserver. Das mobile Endgerät sendet zum Authentisieren ferner eine von dem Sicherheitselement mit dem ersten privaten kryptographischen Schlüssel des ID-Anwendungsprogramms signierte Nachricht an den Personalisierungsserver.

Nach Ausführungsformen handelt es sich bei der Nachricht um eine durch die Personalisierungskomponente von dem Personalisierungsserver im Zuge eines Challenge-Response-Verfahrens empfangene Challenge handelt.

Nach Ausführungsformen umfasst das Aufbauen des ersten verschlüsselten Unterkanals ein Authentisieren des Nutzers gegenüber dem ID-Token über das mobile Endgerät.

Ausführungsformen können den Vorteil haben, dass beim Auslesen des ID-Tokens sichergestellt werden kann, dass ein entsprechendes Auslesen von einem Inhaber des ID-Tokens freigegeben wird. Beispielsweise erfolgt das Authentisieren des Nutzers gegenüber dem ID-Token unter Verwendung des mobilen Endgeräts.

Nach Ausführungsformen umfasst das Authentisieren des Nutzers gegenüber dem ID-Token:
- Empfangen eines weiteren von den ein oder mehreren Authentifizierungssensoren erfassten Authentifizierungsfaktors des Nutzers durch die Personalisierungskomponente,
- Erzeugen eines symmetrischen kryptographischen Schlüssels unter Verwendung des empfangenen weiteren Authentifizierungsfaktor,
- Empfangen eines verschlüsselten zweiten Zufallswert durch die Personalisierungskomponente von dem ID-Token, wobei der verschlüsselte zweite Zufallswert unter Verwendung des symmetrischen kryptographischen Schlüssels verschlüsselt ist, welchen der ID-Token unter Verwendung eines in dem ID-Token zum Verifizieren des weiteren Authentifizierungsfaktors gespeicherten weiteren Referenzwert des registrierten Nutzers erzeugt,
- Entschlüsseln des empfangenen verschlüsselten zweiten unter Verwendung des erzeugten symmetrischen kryptographischen Schlüssels,
- Erzeugen eines ersten ephemeren asymmetrischen kryptographischen Schlüsselpaars des ID-Anwendungsprogramms durch das Sicherheitselement, welches einen ersten ephemeren privaten kryptographischen Schlüssel und einen ersten ephemeren öffentlichen kryptographischen Schlüssel des ID-Anwendungsprogramms umfasst,
- Senden des ersten ephemeren öffentlichen kryptographischen Schlüssels des ID-Anwendungsprogramms an den ID-Token,
- Empfangen eines ephemeren öffentlichen kryptographischen Schlüssels des ID-Tokens,
- Erzeugen eines mit dem ID-Token geteilten ersten Geheimnisses durch das Sicherheitselement unter Verwendung des entschlüsselten zweiten Zufallswerts, des ersten ephemeren privaten kryptographischen Schlüssels des ID-Anwendungsprogramms und des ephemeren öffentlichen kryptographischen Schlüssels des ID-Tokens,
- Empfangen des geteilten ersten Geheimnisses durch die Kontrollkomponente,
- Erzeugen eines ersten gemeinsamen Authentisierungsschlüssel zum gegenseitigen Authentisieren von ID-Anwendungsprogramm und ID-Token durch die Kontrollkomponente unter Verwendung des geteilten ersten Geheimnisses,
- Erzeugen eines ersten Authentisierungstoken unter Verwendung des ersten Authentisierungsschlüssels und des ersten ephemeren öffentlichen kryptographischen Schlüssels des ID-Tokens durch die Kontrollkomponente,
- Senden des durch die Kontrollkomponente erzeugten ersten Authentisierungstoken an den ID-Token durch die Personalisierungskomponente,
- Empfangen eines zweiten Authentisierungstoken von dem ID-Token durch die Personalisierungskomponente, welche das zweite Authentifizierungstoken an die Kontrollkomponente weiterleitet,
- Verifizieren des empfangenen zweiten Authentisierungstoken durch die Kontrollkomponente unter Verwendung des ersten Authentisierungsschlüssels und des ersten ephemeren öffentlichen kryptographischen Schlüssels des ID-Anwendungsprogramms.

Unter Verwendung eines erfassten Authentifizierungsfaktors des Nutzers wird beispielsweise ein ephemerer symmetrischer kryptographischer Schlüssel abgeleitet. Beispielsweise erfolgt die Ableitung des ephemeren symmetrischen kryptographischen Schlüssels durch das Sicherheitselement des mobilen Endgeräts. Dabei dienen der von dem mobilen Endgerät erfasste Authentifizierungsfaktor einerseits und ein auf dem ID-Token hinterlegter Referenzwert andererseits jeweils als ein geteiltes Passwort zum beidseitigen Ableiten des ephemeren symmetrischen kryptographischen Schlüssels. Das mobile Endgerät empfängt einen Zufallswert von dem ID-Token, welcher mit demselben ephemeren symmetrischen kryptographischen Schlüssel verschlüsselt ist. Der entsprechende ephemere symmetrische kryptographische Schlüssel leitet der ID-Token beispielsweise aus einem Referenzwert für den Authentifizierungsfaktor ab oder der entsprechend abgeleitete ephemere symmetrische kryptographische Schlüssel ist auf dem ID-Token gespeichert. Ist das mobile Endgerät dazu in der Lage, den empfangenen verschlüsselten Zufallswert korrekt zu entschlüsseln, stellt dies einen Nachweis dar, dass dem mobilen Endgerät der korrekte Authentifizierungsfaktor vorliegt. Das mobile Endgerät erzeugt ein ephemeres asymmetrisches Schlüsselpaar, dessen öffentlichen kryptographischen Schlüssel das mobile Endgerät an den ID-Token sendet. Im Gegenzug empfängt das mobile Endgerät den öffentlichen kryptographischen Schlüssel des ID-Tokens. An dieser Stelle des Verfahrens sind mithin keine statischen kryptographischen Schlüssel notwendig, sondern es können ausschließlich zufallsbasiert erzeugte ephemere asymmetrische Schlüsselpaar verwendet werden. Das mobile Endgerät erzeugt unter Verwendung des entschlüsselten Zufallswerts, des ephemeren privaten kryptographischen Schlüssels des ID-Anwendungsprogramms sowie des ephemeren öffentlichen kryptographischen Schlüssels des ID-Tokens ein mit dem ID-Token geteiltes Geheimnis. Der ID-Token ist ebenfalls dazu in der Lage, das entsprechende Geheimnis unter Verwendung des von ihm erzeugten Zufallswerts, des ephemeren privaten kryptographischen Schlüssels des ID-Tokens sowie des von dem mobilen Endgerät empfangenen ephemeren öffentlichen kryptographischen Schlüssels des mobilen Endgeräts zu berechnen.

Das mobile Endgerät kann nun das so erzeugte geteilte Geheimnis zum Berechnen eines gemeinsamen Authentisierungsschlüssels zum gegenseitigen Authentisieren von ID-Anwendungsprogramm und ID-Token verwenden. So kann beispielsweise das mobile Endgerät einen ersten Authentisierungstoken unter Verwendung des entsprechenden Authentisierungsschlüssels und des ephemeren öffentlichen kryptographischen Schlüssels des ID-Tokens erzeugen. Der entsprechende Authentisierungstoken kann von dem mobilen Endgerät an das ID-Token gesendet werden, welches den empfangenen Authentisierungstoken unter Verwendung des gemeinsamen Authentisierungsschlüssels und des ephemeren privaten kryptographischen Schlüssels des ID-Tokens verifizieren kann. Somit kann sich das mobile Endgerät gegenüber dem ID-Token authentisieren. Ebenso kann im Gegenzug der ID-Token einen Authentisierungstoken an das mobile Endgerät senden. Das mobile Endgerät empfängt den Authentisierungstoken, welcher beispielsweise unter Verwendung des geteilten Geheimnisses sowie den ephemeren öffentlichen kryptographischen Schlüssel des mobilen Endgeräts erzeugt ist. Unter Verwendung des Authentisierungsschlüssels und des öffentlichen kryptographischen Schlüssels des ID-Anwendungsprogramms kann der Authentisierungstoken verifiziert werden.

Nach Ausführungsformen wird zum Erzeugen des geteilten ersten Geheimnisses ferner ein Anwendungsbereichsidentifikator eines Anwendungsbereichs des ID-Tokens verwendet, wobei der Anwendungsbereichsidentifikator zusammen mit dem verschlüsselten zweiten Zufallswert von dem ID-Token durch das ID-Anwendungsprogramm empfangen wird.

Nach Ausführungsformen handelt es sich bei dem ersten Authentisierungsschlüssel um einen kryptographischen Schlüssel zum Erzeugen eines Message Authentication Codes, wobei es sich bei dem ersten Authentisierungstoken um einen unter Verwendung des ersten Authentisierungsschlüssels erzeugten ersten MAC des ersten ephemeren öffentlichen kryptographischen Schlüssels des ID-Anwendungsprogramms handelt.

Nach Ausführungsformen erzeugt das Sicherheitselement ferner einen fünften ephemeren symmetrischen kryptographischen Schlüssel unter Verwendung des geteilten ersten Geheimnisses zum Verschlüsseln der Kommunikation zwischen dem mobilen Endgerät und dem ID-Token.

Ausführungsformen können den Vorteil haben, dass ein ephemerer symmetrischer kryptographischer Schlüssel bereitgestellt werden kann, mit welchem die Kommunikation zwischen dem mobilen Endgerät und dem ID-Token verschlüsselt werden kann. Somit kann beispielsweise die weitere Kommunikation zwischen dem IT-Token und dem mobilen Endgerät, der ID-Token mit dem Personalisierungsserver im Zuge des Aufbaus des zweiten Unterkanals kommuniziert, verschlüsselt werden. Beispielsweise wird die Kommunikation solange mit dem entsprechenden ephemeren symmetrischen kryptographischen Schlüssel verschlüsselt, bis der verschlüsselte Unterkanal zwischen dem ID-Token und dem Personalisierungsserver aufgebaut ist, der eine Ende-zu-Ende-Verschlüsselung zwischen dem ID-Token und dem Personalisierungsserver ermöglicht.

Nach Ausführungsformen umfasst das Aufbauen des ersten verschlüsselten Unterkanals ein Authentifizieren des Personalisierungsservers durch den ID-Token über das mobile Endgerät.

Ausführungsformen können den Vorteil haben, dass die Teilnehmer, welche den verschlüsselten Unterkanal aufbauen, sichergehen können, mit wem sie kommunizieren. Insbesondere kann somit der ID-Token sichergehen, mit wem er kommuniziert. Zum Authentifizieren des Personalisierungsservers durch den ID-Token kommt beispielsweise ein entsprechendes Authentisierungsverfahren zum Einsatz.

Nach Ausführungsformen umfasst das Authentifizieren des Personalisierungsservers durch den ID-Token:
- Empfangen eines zweiten Zertifikats des Personalisierungsservers, welches einen zweiten öffentlichen kryptographischen Schlüssel eines zweiten asymmetrischen kryptographischen Schlüsselpaars des Personalisierungsservers umfasst, über den ersten verschlüsselten Kommunikationskanal,
- Verifizieren einer Signatur des empfangenen zweiten Zertifikats des Personalisierungsservers,
- Erzeugen eines dritten Zufallswerts durch den ID-Token,
- Senden des dritten Zufallswerts als Challenge an den Personalisierungsserver über den ersten verschlüsselten Kommunikationskanal,
- Empfangen einer ersten Signatur der Challenge als Response von dem Personalisierungsserver über den ersten verschlüsselten Kommunikationskanal, wobei die Challenge unter Verwendung eines zweiten privaten kryptographischen Schlüssels des Personalisierungsservers signiert ist,
- Verifizieren der empfangenen ersten Signatur unter Verwendung des zweiten öffentlichen kryptographischen Schlüssels des Personalisierungsservers und des gesendeten dritten Zufallswerts.

Nach Ausführungsformen wird ferner ein zweiter ephemerer öffentlicher kryptographischer Schlüssel des Personalisierungsservers, beispielsweise in komprimierter Form, durch den ID-Token über den verschlüsselten Kommunikationskanal empfangen.

Nach Ausführungsformen wird zum Erzeugen der Response eine erste Datenkombination signiert, welche die Challenge umfasst. Beispielsweise umfasst die erste Datenkombination neben dem als Challenge gesendeten dritten Zufallswert und den zweiten ephemeren öffentlichen kryptographischen Schlüssel des Personalisierungsservers, beispielsweise in komprimierter Form.

Ausführungsformen können den Vorteil haben, dass der Personalisierungsserver durch den ID-Token in kryptographisch gesicherter Weise authentifiziert werden kann. Hierzu empfängt der ID-Token beispielsweise ein Zertifikat des Personalisierungsservers, welches einen öffentlichen kryptographischen Schlüssel des Personalisierungsservers zum Authentifizieren bereitstellt. Der ID-Token verifiziert die Signatur des empfangenen Zertifikats. Beispielsweise wird das entsprechende Zertifikat als Teil einer Zertifikatskette empfangen, für deren Prüfung entsprechende Signaturprüfschlüssel, insbesondere Wurzelsignaturprüfschlüssel, auf dem ID-Token hinterlegt sind. Somit kann der ID-Token die Authentizität des bereitgestellten Zertifikats anhand der Zertifikatskette, beispielsweise einer PKI, verifizieren. Ferner empfängt der ID-Token beispielsweise einen ephemeren öffentlichen kryptographischen Schlüssel des Personalisierungsservers. Beispielsweise empfängt der ID-Token den ephemeren öffentlichen kryptographischen Schlüssel des Personalisierungsservers in komprimierter Form. Im Gegenzug zum Empfang des Zertifikats des Personalisierungsservers erzeugt der ID-Token einen Zufallswert, welchen er als Challenge über den verschlüsselten Kommunikationskanal an den Personalisierungsserver sendet. Der Personalisierungsserver erstellt unter Verwendung eines privaten kryptographischen Schlüssels, welcher mit dem öffentlichen kryptographischen Schlüssel des zuvor bereitgestellten Zertifikats ein asymmetrisches Schlüsselpaar bildet, eine Signatur der Challenge als Response auf die Challenge. Beispielsweise wird zum Erzeugen der Response eine Datenkombination signiert, welche den Zufallswert als Challenge und den ephemeren öffentlichen kryptographischen Schlüssel des Personalisierungsservers, beispielsweise in komprimierter Form, umfasst. Der ID-Token empfängt die entsprechende Signatur über den verschlüsselten Kommunikationskanal und prüft mit dem zuvor empfangenen öffentlichen kryptographischen Schlüssel des Personalisierungsservers als Signaturprüfschlüssel. Hierzu verwendet der ID-Token beispielsweise ferner den zuvor als Challenge gesendeten Zufallswert sowie den zuvor empfangenen ephemeren öffentlichen kryptographischen Schlüssel des Personalisierungsservers.

Nach Ausführungsformen handelt es sich bei dem ersten und dem zweiten Zertifikat des Personalisierungsservers um unterschiedliche Zertifikate mit unterschiedlichen öffentlichen kryptographischen Schlüsseln des Personalisierungsservers. Somit handelt es sich in diesem Fall bei dem ersten und dem zweiten öffentlichen kryptographischen Schlüssel des Personalisierungsservers beispielsweise um unterschiedliche öffentliche kryptographische Schlüssel unterschiedlicher asymmetrischer kryptographischen Schlüsselpaare.

Nach Ausführungsformen handelt es sich bei dem ersten und dem zweiten Zertifikat des Personalisierungsservers um dasselbe Zertifikat mit demselben öffentlichen kryptographischen Schlüsseln des Personalisierungsservers. Somit handelt es sich in diesem Fall bei dem ersten und dem zweiten öffentlichen kryptographischen Schlüssel des Personalisierungsservers beispielsweise um denselben öffentlichen kryptographischen Schlüssel desselben asymmetrischen kryptographischen Schlüsselpaars.

Nach Ausführungsformen handelt es sich bei dem zweiten Zertifikat des Personalisierungsservers um ein Lesezertifikats, welches eine Leseberechtigung des Personalisierungsservers zum Lesen der aus dem ID-Token auszulesenden Attribute nachweist.

Ausführungsformen können den Vorteil haben, dass der Personalisierungsserver mittels des entsprechenden Zertifikats eine Leseberechtigung zum Lesen der auszulesenden Attribute aus dem ID-Token nachweisen kann.

Nach Ausführungsformen wird das zweite Zertifikat des Personalisierungsservers als Teil einer Zertifikatskette empfangen, wobei das Verifizieren der Signatur des empfangenen Zertifikats ein Prüfen einer Signaturkette der Zertifikate der Zertifikatskette umfasst. Nach Ausführungsformen beginnt die Zertifikatskette mit einem Ausgangszertifikat, welches von einer Wurzelinstanz signiert ist, deren Signatur mit einem Wurzelsignaturprüfschlüssel verifizierbar ist, welcher in dem ID-Token gespeichert ist. Nach Ausführungsformen endet die Zertifikatskette mit dem Zertifikat des Personalisierungsservers.

Nach Ausführungsformen umfasst die Kombination ferner einen Identifikator des ID-Tokens, wobei der Identifikator des ID-Tokens ferner zum Verifizieren der empfangenen Signatur verwendet wird.

Nach Ausführungsformen wird der Identifikator des ID-Tokens beispielsweise unter Verwendung des ephemeren öffentlichen kryptographischen Schlüssels des ID-Tokens erzeugt. Beispielsweise handelt es sich bei dem Identifikator des ID-Tokens um den komprimierten ersten ephemeren öffentlichen kryptographischen Schlüssel des ID-Tokens.

Ausführungsformen können den Vorteil haben, dass anhand des Identifikators der ID-Token identifiziert werden kann. Beispielsweise kann als Identifikator des ID-Tokens ein ephemerer öffentlicher kryptographischer Schlüssel des ID-Tokens verwendet werden, welcher beispielsweise zuvor im Zuge des Authentifizierens des Nutzers gegenüber dem ID-Token erzeugt wurde. Der entsprechende ID-Token kann beispielsweise von dem mobilen Endgerät an den Personalisierungsserver weitergeleitet werden. Somit erhält der Personalisierungsserver beispielsweise Zugriff auf den entsprechenden ephemeren öffentlichen kryptographischen Schlüssel und kann anhand diesem als Identifikator sicherstellen, dass der ID-Token, gegenüber welchem er sich authentisiert, derselbe ID-Token ist, gegenüber dem sich zuvor der Nutzer des mobilen Endgeräts authentisiert hat.

Nach Ausführungsformen umfasst das Aufbauen des ersten verschlüsselten Unterkanals ein Authentisieren des ID-Tokens gegenüber dem Personalisierungsserver über das mobile Endgerät.

Ausführungsformen können den Vorteil haben, dass eine gegenseitige Authentisierung zwischen ID-Token und Personalisierungsserver im Zuge des Aufbaus des verschlüsselten Unterkanals stattfindet.

Nach Ausführungsformen umfasst das Authentisieren des ID-Tokens gegenüber Personalisierungsserver:
- Senden des öffentlichen kryptographischen Schlüssels des ID-Tokens von dem ID-Token über den ersten verschlüsselten Kommunikationskanal an den Personalisierungsserver,
- Empfangenen des zweiten ephemeren öffentlichen kryptographischen Schlüssels des Personalisierungsservers durch den ID-Token von dem Personalisierungsserver über den ersten verschlüsselten Kommunikationskanal,
- Erzeugen eines mit dem Personalisierungsserver geteilten zweiten Geheimnisses durch den ID-Token unter Verwendung des privaten kryptographischen Schlüssels des ID-Tokens und des zweiten ephemeren öffentlichen kryptographischen Schlüssels des Personalisierungsservers,
- Erzeugen eines vierten Zufallswerts durch den ID-Token,
- Erzeugen eines zweiten gemeinsamen Authentisierungsschlüssels zum Authentisieren von über den ersten verschlüsselten Unterkanal gesendeten Daten durch den ID-Token, wobei der zweite gemeinsame Authentisierungsschlüssel unter Verwendung des geteilten zweiten Geheimnisses und des vierten Zufallswerts erzeugt wird,
- Erzeugen eines dritten Authentisierungstoken durch den ID-Token unter Verwendung des zweiten Authentisierungsschlüssels und des zweiten ephemeren öffentlichen kryptographischen Schlüssels des Personalisierungsservers zum Authentisieren des ID-Tokens gegenüber dem Personalisierungsserver,
- Senden des vierten Zufallswerts zusammen mit dem dritten Authentisierungstoken zum Authentifizieren des ID-Tokens durch den ID-Token über den ersten verschlüsselten Kommunikationskanal an den Personalisierungsserver.

Ausführungsformen können den Vorteil haben, dass sich der ID-Token in kryptographisch gesicherter Weise gegenüber dem Personalisierungsserver authentisieren kann. Hierzu sendet der ID-Token einen öffentlichen kryptographischen Schlüssel an den Personalisierungsserver. Dies erfolgt über den verschlüsselten Kommunikationskanal. Im Gegenzug empfängt der ID-Token einen ephemeren öffentlichen kryptographischen Schlüssel des Personalisierungsservers über den verschlüsselten Kommunikationskanal. Der ID-Token berechnet ein mit dem Personalisierungsserver geteiltes Geheimnis unter Verwendung des privaten kryptographischen Schlüssels des ID-Tokens und des empfangen ephemeren öffentlichen kryptographischen Schlüssels des Personalisierungsservers. Der Personalisierungsserver kann dasselbe geteilte Geheimnis unter Verwendung des öffentlichen kryptographischen Schlüssels des ID-Tokens und des ephemeren privaten kryptographischen Schlüssels des Personalisierungsservers berechnen. Der ID-Token erzeugt einen Zufallswert, welchen er zum Berechnen eines gemeinsamen Authentisierungsschlüssels verwendet. Der Authentisierungsschlüssel dient zum Authentisieren von Daten, welche über den verschlüsselten Unterkanal gesendet werden. Den entsprechenden gemeinsamen Authentisierungsschlüssel erzeugt der ID-Token unter Verwendung des Zufallswerts und des geteilten Geheimnisses. Ferner erzeugt der ID-Token einen Authentisierungstoken unter Verwendung des entsprechenden Authentisierungsschlüssels und des ephemeren Schlüssels des Personalisierungsservers. Den so erzeugten Authentisierungstoken sendet der ID-Token zusammen mit dem Zufallswert an den Personalisierungsserver im Kommunikationskanal. Der Personalisierungsserver wird durch den Empfang des Zufallswerts dazu in die Lage versetzt, ebenfalls den Authentisierungsschlüssel unter Verwendung des geteilten Geheimnisses zu berechnen. Mit diesem gemeinsamen Authentisierungsschlüssel und dem ephemeren öffentlichen kryptographischen Schlüssel des Personalisierungsservers kann der Personalisierungsserver den empfangenen Authentisierungstoken verifizieren. Ist die Verifikation erfolgreich, so ist auch der ID-Token erfolgreich gegenüber dem Personalisierungsserver authentisiert und eine erfolgreiche gegenseitige Authentisierung von ID-Token und Personalisierungsserver verwirklicht. Ferner kann der so berechnete gemeinsame Authentisierungsschlüssel zum Authentisieren von Daten verwendet werden, welche über den verschlüsselten Unterkanal zwischen ID-Token und Personalisierungsserver ausgetauscht werden.

Nach Ausführungsformen wird der im Zuge des Authentifizierens des Personalisierungsservers, beispielsweise in komprimierter Form, empfangene ephemere öffentliche kryptographische Schlüssel des Personalisierungsservers mit dem im Zuge des Authentisierens des ID-Tokens empfangenen ephemeren öffentlichen kryptographischen Schlüssel des Personalisierungsservers verglichen, wobei eine Übereinstimmung beider ephemerer öffentlicher kryptographischer Schlüssel des Personalisierungsservers eine Voraussetzung für das Erzeugen des geteilten zweiten Geheimnisses ist. Beispielsweise wird der im Zuge des Authentisierens des ID-Tokens empfangene ephemere öffentliche kryptographische Schlüssel des Personalisierungsservers zum Zwecke des Vergleichs komprimiert.

Ausführungsformen können den Vorteil haben, dass eine Bindung zwischen dem Personalisierungsserver und dem Authentisierungsserver, mit dem im Zuge des Authentisierens des ID-Tokens kommuniziert wird, hergestellt werden kann.

Nach Ausführungsformen wird zum Erzeugen des geteilten zweiten Geheimnisses ferner ein Anwendungsbereichsidentifikator eines Anwendungsbereichs des ID-Tokens verwendet, wobei der Anwendungsbereichsidentifikator zusammen mit dem öffentlichen kryptographischen Schlüssel des ID-Tokens von dem ID-Token an den Personalisierungsserver gesendet wird.

Ausführungsformen können den Vorteil haben, dass der ID-Token einem bestimmten Anwendungsbereich zugeordnet werden kann.

Nach Ausführungsformen handelt es sich bei dem zweiten Authentisierungsschlüssel um einen kryptographischen Schlüssel zum Erzeugen eines Message Authentication Codes, wobei es sich bei dem zweiten Authentisierungstoken um einen unter Verwendung des zweiten Authentisierungsschlüssels erzeugten zweiten MAC des zweiten ephemeren öffentlichen kryptographischen Schlüssels des Personalisierungsservers handelt.

Nach Ausführungsformen erzeugt der ID-Token ferner den zweiten kanalspezifischen ephemeren symmetrischen kryptographischen Sitzungsschlüssel unter Verwendung des geteilten zweiten Geheimnisses und vierten Zufallswerts.

Ausführungsformen können den Vorteil haben, dass in kryptographisch gesicherter Weise ein kanalspezifischer ephemerer symmetrischer kryptographischer Sitzungsschlüssel für den Unterkanal bereitgestellt werden kann, welcher nur dem ID-Token und dem Personalisierungsserver bekannt ist. Mithin kann eine Ende-zu-Ende-Verschlüsselung über den verschlüsselten Unterkanal zwischen dem ID-Token und dem Personalisierungsserver ermöglicht werden.

Das mobile Endgerät kann beispielsweise als Authentisierungstoken, Autorisierungstoken und/oder als Identitätsnachweis, d.h. ID-Token, dienen, etwa in elektronischen Geschäftsprozessen. Zu diesem Zweck kann der Nutzer durch das mobile Endgerät sicher authentifiziert werden. Nach Ausführungsformen kann die lokale Authentifizierung des Nutzers durch das Endgerät als Grundlage für eine weitere Authentifizierung des Nutzers unter Verwendung von, beispielsweise auf dem mobilen Endgerät gespeicherten, Identitätsattributen für eine weiteren Authentifizierung durch einen ID-Provider-Dienst dienen.

Das mobile Endgerät ist für eine sichere Nutzerauthentifizierung unter Verwendung des Authentifizierungssensors und des Betriebssystems bzw. des Sicherheitselements konfiguriert. Die Authentifizierung kann beispielsweise auf einem Erfassen und Auswerten biometrischer Merkmale des Nutzers beruhen.

Ausführungsformen können den Vorteil haben, dass Hersteller von ID-Anwendungsprogrammen bzw. die entsprechenden ID-Anwendungsprogramme die Authentifizierungsfunktionalität des mobilen Endgeräts zur Nutzerauthentifizierung zurückgreifen können. Die Authentifizierungsfunktionalität des Endgeräts unter Verwendung des Authentifizierungssensors und des Sicherheitselements implementieren eine sichere Bindung des Nutzers mit dem Endgerät.

Dabei stellt das Sicherheitselement, bei welchem es sich beispielsweise um ein hardwarebasiertes Sicherheitselement des Geräteherstellers handelt, kryptographische Mittel, wie etwa kryptographisches Schlüsselmaterial und Protokolle, zur Verfügung, welche für eine sichere Zurverfügungstellung der Authentifizierungsergebnisse des Nutzers des mobilen Endgeräts für ein auf dem mobilen Endgerät installiertes ID-Anwendungsprogramm genutzt werden können. Mithin stellt das Sicherheitselement beispielsweise die kryptographische Sicherheit des Betriebssystems sicher bzw. stellt dem Betriebssystem kryptographische Sicherungsfunktionalität zur Verfügung. Nach Ausführungsformen kann es sich bei dem Sicherheitselement beispielsweise auch um ein hardwarebasiertes Sicherheitselement des Geräteherstellers handeln. Ferner stellt das Sicherheitselement kryptographisches Schlüsselmaterial zur Verfügung, welche dem ID-Anwendungsprogramm zugeordnet ist.

Nach Ausführungsformen umfasst das Aufbauen des zweiten verschlüsselten Unterkanals ferner ein Authentifizieren des Personalisierungsservers durch die Kontrollkomponente.

Ausführungsformen können den Vorteil haben, dass eine Voraussetzung für den Aufbau des zweiten verschlüsselten Unterkanals ein erfolgreiches Authentifizieren des Personalisierungsservers durch das Sicherheitselement ist. Somit kann das Sicherheitselement nicht nur sicher sein, dass die Personalisierung durch denselben Personalisierungsserver erfolgt, die Attribute aus dem ID-Token ausgelesen hat, sondern dass der entsprechende auch zum Personalisieren des entsprechenden Sicherheitselements berechtigt ist.

Nach Ausführungsformen umfasst das Authentifizieren des Personalisierungsservers durch die Kontrollkomponente:
- Senden einer Challenge der Kontrollkomponente über den ersten verschlüsselten Kommunikationskanal an den Personalisierungsserver,
- Empfangen einer Response des Personalisierungsservers durch die Kontrollkomponente, wobei es sich bei der Response um eine unter Verwendung eines dritten privaten kryptographischen Schlüssels eines dritten asymmetrischen Schlüsselpaars des Personalisierungsservers erstellte Signatur der Challenge handelt,
- Empfangen eines dritten ephemeren öffentlichen kryptographischen Schlüssels des Personalisierungsservers durch die Kontrollkomponente,
- Verifizieren der empfangenen Response unter Verwendung eines dritten öffentlichen kryptographischen Schlüssels dritten asymmetrischen Schlüsselpaars des Personalisierungsservers und der gesendeten Challenge,
- Speichern des dritten ephemeren öffentlichen kryptographischen Schlüssels des Personalisierungsservers durch die Kontrollkomponente auf dem mobilen Endgerät.

Nach Ausführungsformen handelt es sich bei der Challenge um einen Zufallswert.

Nach Ausführungsformen wird ferner ein dritter ephemerer öffentlicher kryptographischer Schlüssel des Personalisierungsservers, beispielsweise in komprimierter Form, durch die Kontrollkomponente über den verschlüsselten Kommunikationskanal empfangen.

Nach Ausführungsformen wird zum Erzeugen der Response eine zweite Datenkombination signiert, welche die Challenge umfasst. Beispielsweise umfasst die zweite Datenkombination neben dem als Challenge gesendeten fünften Zufallswert und den dritten ephemeren öffentlichen kryptographischen Schlüssel des Personalisierungsservers, beispielsweise in komprimierter Form.

Ausführungsformen können den Vorteil haben, dass das zu personalisierende ID-Anwendungsprogramm zunächst ein Zertifikat des Personalisierungsservers über den verschlüsselten Kommunikationskanal empfängt. Das entsprechende Zertifikat kann von dem Sicherheitselement verifiziert werden. Beispielsweise wird das entsprechende Zertifikat als Teil einer Zertifikatskette bereitgestellt, welche das Sicherheitselement mit hinterlegten Wurzelsignaturprüfschlüsseln verifizieren kann. Somit kann der ID-Token die Authentizität des bereitgestellten Zertifikats anhand der Zertifikatskette, beispielsweise einer PKI, verifizieren. Ferner empfängt das Sicherheitselement einen ephemeren öffentlichen kryptographischen Schlüssel des Personalisierungsservers. Beispielsweise empfängt das Sicherheitselement den ephemeren öffentlichen kryptographischen Schlüssel des Personalisierungsservers in komprimierter Form. Im Gegenzug zum Empfang des Zertifikats des Personalisierungsservers erzeugt das Sicherheitselement einen Zufallswert und sendet den entsprechenden Zufallswert als Challenge an den Personalisierungsserver. In Antwort auf das Senden des Zufallswerts als Challenge empfängt das Sicherheitselement über den verschlüsselten Kommunikationskanal von dem Personalisierungsserver eine Signatur der Challenge als Response. Zum Erstellen der Signatur wird der private kryptographische Schlüssel des Personalisierungsservers verwendet, welcher mit dem öffentlichen kryptographischen Schlüssel des zuvor bereitgestellten Zertifikats ein asymmetrisches Schlüsselpaar bildet. Beispielsweise wird zum Erzeugen der Response eine Datenkombination signiert. Die entsprechende Datenkombination umfasst beispielsweise den zuvor als Challenge gesendeten Zufallswert sowie den ephemeren öffentlichen kryptographischen Schlüssel des Personalisierungsservers, beispielsweise in komprimierter Form. Das Sicherheitselement kann unter Verwendung des zuvor empfangenen öffentlichen kryptographischen Schlüssels des Personalisierungsservers als Signaturprüfschlüssel die entsprechende Signatur prüfen. Hierzu verwendet das Sicherheitselement beispielsweise ferner den ephemeren öffentlichen kryptographischen Schlüssel des Personalisierungsservers und den zuvor als Challenge gesendeten Zufallswert. Ist die Signaturprüfung erfolgreich, so gilt der Personalisierungsserver als erfolgreich authentifiziert.

Nach Ausführungsformen umfasst das Authentifizieren des Personalisierungsservers durch die Kontrollkomponente ferner ein Empfangen eines dritten Zertifikats des Personalisierungsservers, welches den dritten öffentlichen kryptographischen Schlüssel des Personalisierungsservers umfasst, durch die Kontrollkomponente über den ersten verschlüsselten Kommunikationskanal.

Nach Ausführungsformen handelt es sich bei dem ersten, zweiten und/oder dritten Zertifikat des Personalisierungsservers um unterschiedliche Zertifikate mit unterschiedlichen öffentlichen kryptographischen Schlüsseln des Personalisierungsservers. Somit handelt es sich in diesem Fall bei dem ersten, zweiten und/oder dritten öffentlichen kryptographischen Schlüssel des Personalisierungsservers beispielsweise um unterschiedliche öffentliche kryptographische Schlüssel unterschiedlicher asymmetrischer kryptographischen Schlüsselpaare.

Nach Ausführungsformen handelt es sich bei dem ersten, zweiten und/oder dritten Zertifikat des Personalisierungsservers um dasselbe Zertifikat mit demselben öffentlichen kryptographischen Schlüsseln des Personalisierungsservers. Somit handelt es sich in diesem Fall bei dem ersten, zweiten und/oder dritten öffentlichen kryptographischen Schlüssel des Personalisierungsservers beispielsweise um denselben öffentlichen kryptographischen Schlüssel desselben asymmetrischen kryptographischen Schlüsselpaars.

Nach Ausführungsformen wird das Zertifikat als Teil einer Zertifikatskette empfangen wird, wobei das Verifizieren der Signatur des empfangenen Zertifikats ein Prüfen einer Signaturkette der Zertifikate der Zertifikatskette umfasst. Nach Ausführungsformen beginnt die Zertifikatskette mit einem ersten Zertifikat, welches von einer Wurzelinstanz signiert ist, deren Signatur mit einem Wurzelsignaturprüfschlüssel verifizierbar ist, auf welchen das ID-Anwendungsprogramm Zugriff besitzt. Nach Ausführungsformen endet die Zertifikatskette mit dem Zertifikat des Personalisierungsservers.

Nach Ausführungsformen umfasst das Aufbauen des zweiten verschlüsselten Unterkanals ferner ein Authentisieren der Kontrollkomponente gegenüber dem Personalisierungsserver.

Ausführungsformen können den Vorteil haben, dass eine Authentisierung der Kontrollkomponente gegenüber dem Personalisierungsserver ausgeführt wird. Somit kann beispielsweise eine gegenseitige Authentisierung zwischen der Kontrollkomponente bzw. dem ID-Anwendungsprogramm und dem Personalisierungsserver implementiert werden.

Nach Ausführungsformen umfasst das Authentisieren des ID-Anwendungsprogramms durch die Kontrollkomponente gegenüber dem Personalisierungsserver:
- Senden einer Anfrage zum Erzeugen eines mit dem Personalisierungsserver geteilten dritten Geheimnisses von der Kontrollkomponente an das Sicherheitselement, wobei die Anfrage den dritten ephemeren öffentlichen kryptographischen Schlüssel des Personalisierungsservers umfasst,
- in Antwort auf die Anfrage, Empfangen des von dem Sicherheitselement erzeugten geteilten dritten Geheimnisses durch die Kontrollkomponente, wobei die Erzeugung des geteilten dritten Geheimnisses durch das Sicherheitselement unter Verwendung des zweiten privaten kryptographischen Schlüssels des ID-Anwendungsprogramms und des dritten ephemeren öffentlichen kryptographischen Schlüssels des Personalisierungsservers erfolgt,
- Erzeugen eines sechsten Zufallswerts durch die Kontrollkomponente,
- Erzeugen eines dritten gemeinsamen Authentisierungsschlüssels zum Authentisieren von über den zweiten verschlüsselten Unterkanal gesendeten Daten durch die Kontrollkomponente, wobei der dritte gemeinsame Authentisierungsschlüssel unter Verwendung des geteilten dritten Geheimnisses und des sechsten Zufallswerts erzeugt wird,
- Erzeugen eines vierten Authentisierungstoken durch die Kontrollkomponente unter Verwendung des dritten Authentisierungsschlüssels und des dritten ephemeren öffentlichen kryptographischen Schlüssels des Personalisierungsservers zum Authentisieren des ID-Anwendungsprogramms gegenüber dem Personalisierungsserver,
- Senden des sechsten Zufallswerts zusammen mit dem vierten Authentisierungstoken zum Authentisieren des ID-Anwendungsprogramms durch die Kontrollkomponente über den ersten verschlüsselten Kommunikationskanal an den Personalisierungsserver.

Ausführungsformen können den Vorteil haben, dass sich das noch nicht personalisierte ID-Anwendungsprogramm gegenüber dem Personalisierungsserver authentisieren kann. Hierzu verwendet das entsprechende zu personalisierende ID-Anwendungsprogramm zunächst einen hinterlegten initialen Schlüssel des Sicherheitselements. Der entsprechende initiale Schlüssel wird beispielsweise im Zuge einer Provisionierung des Sicherheitselements auf diesem hinterlegt. Zum Authentisieren des Sicherheitselements empfängt das entsprechende Sicherheitselement zunächst beispielsweise einen zum Zwecke des Authentisierens erzeugten ephemeren öffentlichen kryptographischen Schlüssel von dem Personalisierungsserver. Den entsprechenden öffentlichen kryptographischen Schlüssel erzeugt der Personalisierungsserver beispielsweise für die Authentifizierung des zu personalisierenden Sicherheitselements. Den kryptographischen Schlüssel empfängt das Sicherheitselement beispielsweise über den verschlüsselten Kommunikationskanal. Das Sicherheitselement berechnet ein geteiltes Geheimnis unter Verwendung des initialen privaten kryptographischen Schlüssels des Sicherheitselements und des empfangenen ephemeren öffentlichen kryptographischen Schlüssels des Personalisierungsservers. Das zu personalisierende ID-Anwendungsprogramm erzeugt einen Zufallswert. Den entsprechenden Zufallswert verwendet das zu personalisierende ID-Anwendungsprogramm zum Erzeugen eines gemeinsamen Authentisierungsschlüssels. Zum Erzeugen des entsprechenden gemeinsamen Authentisierungsschlüssels wird ferner das geteilte Geheimnis verwendet. Zudem erzeugt das Sicherheitselement einen Authentisierungstoken. Den entsprechenden Authentisierungstoken erzeugt das Sicherheitselement unter Verwendung des zuvor empfangenen öffentlichen kryptographischen Schlüssels des Personalisierungsservers sowie des zuvor erzeugten gemeinsamen Authentisierungsschlüssels. Diesen Authentisierungstoken sendet das zu personalisierende ID-Anwendungsprogramm zusammen mit dem Zufallswert über den verschlüsselten Kommunikationskanal an den Personalisierungsserver. Der Personalisierungsserver kann zunächst ebenfalls das geteilte Geheimnis berechnen. Hierzu verwendet der Personalisierungsserver einen initialen öffentlichen kryptographischen Schlüssel des Sicherheitselements, welcher dem Personalisierungsserver bekannt ist. Beispielsweise wurde der entsprechende Initialisierungsschlüssel im Zuge einer Provisionierung des zu personalisierenden Sicherheitselements erzeugt und dem Personalisierungsserver zur Verfügung gestellt. Ferner verwendet der Personalisierungsserver den ephemeren privaten kryptographischen Schlüssel des Personalisierungsservers zum Berechnen des geteilten Geheimnisses. Mit dem entsprechenden geteilten Geheimnis ist der Personalisierungsserver dazu in der Lage, den gemeinsamen Authentisierungsschlüssel zu berechnen. Hierzu verwendet der Personalisierungsserver den empfangenen Zufallswert und das zuvor berechnete geteilte Geheimnis. Somit kann der Personalisierungsserver den empfangenen Authentisierungstoken verifizieren unter Verwendung des gemeinsamen Authentisierungsschlüssels und des ephemeren öffentlichen kryptographischen Schlüssels des Personalisierungsservers.

Somit kann das zu personalisierende ID-Anwendungsprogramm authentifiziert werden. Dies kann beispielsweise den Vorteil haben, dass den Teilnehmern des verschlüsselten Unterkanals zwischen zu personalisierenden Sicherheitselement und Personalisierungsserver bekannt, mit wem sie kommunizieren bzw. sie können sicherstellen, dass sie mit dem richtigen Teilnehmer kommunizieren. Ferner kann der gemeinsame Authentisierungsschlüssel zum Authentisieren von Daten verwendet werden, welche über den zweiten verschlüsselten Unterkanal zwischen zum personalisierenden Sicherheitselement und dem Personalisierungsserver ausgetauscht werden.

Nach Ausführungsformen wird der im Zuge des Authentifizierens des Personalisierungsservers, beispielsweise in komprimierter Form, empfangenen ephemeren öffentlichen kryptographischen Schlüssels des Personalisierungsservers mit dem im Zuge des Authentisierens des ID-Anwendungsprogramms, beispielsweise in komprimierter Form, empfangenen ephemeren öffentlichen kryptographischen Schlüssels des Personalisierungsservers verglichen, wobei eine Übereinstimmung beider ephemeren öffentlichen kryptographischen Schlüssels des Personalisierungsservers eine Voraussetzung für das Erzeugen des geteilten Geheimnisses ist.

Nach Ausführungsformen handelt es sich bei dem dritten Authentisierungsschlüssel um einen kryptographischen Schlüssel zum Erzeugen eines Message Authentication Codes, wobei es sich bei dem dritten Authentisierungstoken um einen unter Verwendung des dritten Authentisierungsschlüssels erzeugten dritten MAC des dritten ephemeren öffentlichen kryptographischen Schlüssels des Personalisierungsservers handelt.

Nach Ausführungsformen ist das Sicherheitselement dazu konfiguriert, dass Voraussetzung für das Erzeugen des geteilten dritten Geheimnisses durch das Sicherheitselement eine erfolgreiche Authentisierung des Nutzers gegenüber dem Sicherheitselement ist. Der Nutzer erklärt mit der Authentisierung eine Zustimmung zu dem Aufbau des zweiten verschlüsselten Unterkanals.

Somit kann sichergestellt werden, dass ein registrierter Nutzer dem Authentisieren der Kontrollkomponente bzw. des ID-Anwendungsprogramms gegenüber dem Personalisierungsserver und somit dem Aufbau des zweiten verschlüsselten Unterkanals zustimmt. Für das Erzeugen des geteilten dritten Geheimnisses ist beispielsweise eine Verwendung des zweiten privaten kryptographischen Schlüssels des ID-Anwendungsprogramms notwendig, welche beispielsweise an eine erfolgreiche Nutzerauthentifizierung des registrierten Nutzers gebunden ist.

Nach Ausführungsformen erzeugt die Kontrollkomponente ferner den dritten kanalspezifischen ephemeren symmetrischen kryptographischen Sitzungsschlüssel unter Verwendung des geteilten dritten Geheimnisses und des sechsten Zufallswerts.

Ausführungsformen können den Vorteil haben, dass ein kanalspezifischer ephemerer symmetrischer kryptographischer Sitzungsschlüssel für das zu personalisierende ID-Anwendungsprogramm und den Personalisierungsserver bereitgestellt werden kann, mittels dessen der zweite Unterkanal verschlüsselt werden kann. Insbesondere kann somit eine Ende-zu-Ende-Verschlüsselung zwischen den Endpunkten des entsprechenden Unterkanals, d.h. dem zu personalisierenden Sicherheitselement und dem Personalisierungsserver realisiert werden.

Nach Ausführungsformen wird für die Personalisierung eine Mehrzahl von ID-Token verwendet.

Nach Ausführungsformen wird für die Personalisierung ferner ein zweites ID-Token verwendet. Die Personalisierung umfasst ferner:
- Aufbauen eines dritten verschlüsselten Unterkanals zwischen dem zweiten ID-Token und dem Personalisierungsserver innerhalb des verschlüsselten Kommunikationskanals über das mobile Endgerät, wobei zum Aufbauen des dritten verschlüsselten Unterkanals das ID-Anwendungsprogramm verwendet wird,
- Auslesen von ein oder mehreren der zweiten Attribute aus dem zweiten ID-Token durch den Personalisierungsserver über den dritten verschlüsselten Unterkanal innerhalb des verschlüsselten Kommunikationskanals,
- Aufbauen eines vierten verschlüsselten Unterkanals zwischen der Kontrollkomponente und dem Personalisierungsserver innerhalb des verschlüsselten Kommunikationskanals, wobei zum Aufbauen des vierten verschlüsselten Unterkanals das ID-Anwendungsprogramm verwendet wird,
- Empfangen der ausgelesenen zweiten Attribute durch die Kontrollkomponente von dem Personalisierungsserver über den vierten verschlüsselten Unterkanal innerhalb des verschlüsselten Kommunikationskanals,
- Speichern der empfangenen zweiten Attribute durch die Kontrollkomponente, wobei das ID-Anwendungsprogramm dazu konfiguriert ist, die zweiten Attribute zum Nachweis einer Identität des Nutzers gegenüber einem weiteren Computersystem zu verwenden.

Ausführungsformen können den Vorteil haben, dass Attribute aus unterschiedlichen ID-Token ausgelesen und im Zuge der Personalisierung in dem zu personalisierenden Sicherheitselement des mobilen Endgeräts hinterlegt werden können. Somit können auf dem mobilen Endgerät nicht nur digitale Identitäten, welche Identitäten widerspiegeln, die von einem ID-Token, d.h. elektronischem Identitätsdokument, bereitgestellt werden, sondern Identitäten, welche Kombinationen aus Attributen entsprechender ID-Token darstellen. Beispielsweise werden die Attribute aus unterschiedlichen ID-Token über denselben verschlüsselten Kommunikationskanal ausgelesen.

Beispielsweise werden Attribute aus unterschiedlichen ID-Token über verschiedene verschlüsselte Kommunikationskanäle ausgelesen. Nach Ausführungsformen wird ein dritter verschlüsselter Kommunikationskanals zwischen dem mobilen Endgerät und dem Personalisierungsserver über das Netzwerk aufgebaut, innerhalb dessen das Aufbauen eines dritten und vierten verschlüsselten Unterkanals erfolgt.

Beispielsweise ist das ID-Anwendungsprogramm dazu konfiguriert, die zweiten Attribute in Kombination mit den ersten Attributen zum Nachweis einer Identität des Nutzers gegenüber einem weiteren Computersystem, beispielsweise einem ID-Provider-Server, zu verwenden.

Nach Ausführungsformen umfasst das Verfahren ferner ein Verwenden der kryptographisch abgesicherten elektronischen Identität. Ein oder mehrerer der eingebrachten Attribute werden einem ID-Provider-Server bereitgestellt. Das Verwenden umfasst:
- Aufbauen eines zweiten verschlüsselten Kommunikationskanals zwischen dem mobilen Endgerät und dem ID-Provider-Server über das Netzwerk,
- Empfangen einer Leseanfrage eines ID-Provider-Servers zum Auslesen von ein oder mehreren der Attribute der elektronischen Identität,
- Authentifizieren des ID-Provider-Servers durch das ID-Anwendungsprogramm unter Verwendung der Kontrollkomponente,
- Authentisieren des ID-Anwendungsprogramms gegenüber dem ID-Provider-Server durch das Sicherheitselement unter Verwendung der Kontrollkomponente,
- Auslesen der auszulesenden Attribute aus dem mobilen Endgerät durch den ID-Provider-Server über das Netzwerk unter Verwendung der Kontrollkomponente.

Ausführungsformen können den Vorteil haben, dass die im Zuge der Personalisierung erstellte bzw. in das ID-Anwendungsprogramm eingebrachte kryptographisch abgesicherte elektronische Identität zu einem Identitätsnachweis des Nutzers des mobilen Endgeräts verwendet werden kann. Somit kann das mobile Endgerät mit dem ID-Anwendungsprogramm als ein tragbares elektronisches Ausweisdokument verwendet werden. Beispielsweise handelt es sich bei dem mobilen Endgerät um ein Smartphone, welches mit dem ID-Anwendungsprogramm über eine Ausweisfunktion verfügt. Zum Verwenden der elektronischen Identität werden Attribute der entsprechenden elektronischen Identität von einem ID-Provider-Server aus dem mobilen Endgerät in kryptographisch gesicherter Weise ausgelesen und beispielsweise einem Dienstanbieter zur Verfügung gestellt. Ein Auslesen der Attribute durch einen ID-Provider-Server kann den Vorteil haben, dass sichergestellt werden kann, dass nur eine berechtigte Instanz, welche die entsprechende Berechtigung beispielsweise mittels eines Zertifikats nachweisen kann, Attribute in kryptographisch abgesicherter Weise aus dem mobilen Endgerät auszulesen vermag.

Im Zuge der Verwendung der elektronischen Identität wird zunächst ein verschlüsselter Kommunikationskanal zwischen dem mobilen Endgerät und dem ID-Provider-Server aufgebaut. Das mobile Endgerät bzw. das ID-Anwendungsprogramm empfängt eine Leseanfrage des ID-Providers zum Auslesen ein oder mehrerer Attribute der elektronischen Identität. Beispielsweise identifiziert die Leseanfrage die auszulesenden Attribute. Ferner gibt die Leseanfrage beispielsweise an, wer die entsprechenden Attribute anfragt, d.h. an wen der ID-Provider-Server die entsprechenden Attribute weiterleiten wird, sowie deren Verwendungszweck. Diese Informationen, welche die Leseanfrage bereitstellt, werden beispielsweise auf eine Anzeigevorrichtung des mobilen Endgeräts für den Nutzer angezeigt, sodass dieser die entsprechenden Informationen prüfen kann. Ferner kann dem Nutzer des mobilen Endgeräts die Möglichkeit geboten werden, auszuwählen, welche der angefragten Attribute dem ID-Provider-Server tatsächlich zur Verfügung gestellt werden sollen und/oder weitere Attribute auszuwählen, welche dem ID-Provider-Server zusätzlich zur Verfügung gestellt werden sollen.

Zum kryptographisch gesicherten Auslesen der Attribute erfolgt eine Authentifizierung des ID-Provider-Servers durch das ID-Anwendungsprogramm sowie ein Authentisieren des ID-Anwendungsprogramms gegenüber dem ID-Provider-Server. Für das Authentisieren des ID-Anwendungsprogramms gegenüber dem ID-Provider-Server verwendet das mobile Endgerät bzw. das ID-Anwendungsprogramm das Sicherheitselement des mobilen Endgeräts, welches die privaten kryptographischen Schlüssel des ID-Anwendungsprogramms verwaltet. Auf eine erfolgreiche gegenseitige Authentifizierung hin erfolgt ein Auslesen der auszulesenden Attribute aus dem mobilen Endgerät durch den ID-Provider-Server über das Netzwerk. Der ID-Provider-Server kann sodann die ausgelesenen Attribute beispielsweise signieren und einem anfragenden Dienstanbieter zur Verfügung stellen. Der entsprechende Dienstanbieter kann die Authentizität der ihm bereitgestellten Attribute anhand der Signatur des ID-Provider-Servers prüfen.

Ausführungsformen können den Vorteil haben, dass die Kommunikation über den zweiten Kommunikationskanal in verschlüsselter und damit kryptographisch abgesicherter Weise erfolgen kann.

Im Zuge des Aushandelns des kanalspezifischen ephemeren symmetrischen kryptographischen Sitzungsschlüssels zum Verschlüsseln des zweiten Kommunikationskanals wird beispielsweise zunächst ein von dem mobilen Endgerät, etwa der Kontrollkomponente, erzeugter Zufallswert bereitgestellt. Dieser Zufallswert wird zum Erzeugen eines kanalspezifischen ephemeren symmetrischen kryptographischen Sitzungsschlüssels zum Verschlüsseln der Kommunikation über den zweiten Kommunikationskanal verwendet. Zum Erzeugen des kanalspezifischen ephemeren symmetrischen kryptographischen Sitzungsschlüssels kommen beispielsweise Eingangsparameter zur Anwendung. Beispielsweise empfängt das mobile Endgerät von dem ID-Provider-Server einen weiteren Zufallswert. Beispielsweise berechnet das mobile Endgerät einen weiteren Zufallswert.

Das mobile Endgerät empfängt ferner ein Zertifikat des ID-Provider-Servers. Dieses Zertifikat des ID-Provider-Servers stellt einen öffentlichen kryptographischen Schlüssel eines asymmetrischen kryptographischen Schlüsselpaars des ID-Provider-Servers zur Verfügung. Das mobile Endgerät verschlüsselt den zuvor berechneten Zufallswert unter Verwendung des von dem Zertifikat bereitgestellten öffentlichen kryptographischen Schlüssels des ID-Provider-Servers und sendet diesen verschlüsselten Zufallswert an den ID-Provider-Server. Der ID-Provider-Server empfängt den verschlüsselten Zufallswert, kann diesen entschlüsseln und mit diesem ebenfalls den kanalspezifischen ephemeren symmetrischen kryptographischen Sitzungsschlüssel berechnen.

Nach Ausführungsformen ist der zweite verschlüsselte Kommunikationskanal mit einem vierten kanalspezifischen ephemeren symmetrischen kryptographischen Sitzungsschlüssel verschlüsselt.

Nach Ausführungsformen handelt es sich bei der Verschlüsselung des zweiten verschlüsselten Kommunikationskanals um eine Ende-zu-Ende-Verschlüsselung zwischen dem mobilen Endgerät und dem ID-Provider-Server.

Nach Ausführungsformen umfasst das Aufbauen des zweiten verschlüsselten Kommunikationskanals ein Aushandeln des vierten kanalspezifischen ephemeren symmetrischen kryptographischen Sitzungsschlüssels.

Nach Ausführungsformen umfasst das Aushandeln des vierten kanalspezifischen ephemeren symmetrischen kryptographischen Sitzungsschlüssels:
- Erzeugen eines siebten Zufallswerts durch das mobile Endgerät,
- Erzeugen des vierten kanalspezifischen ephemeren symmetrischen kryptographischen Sitzungsschlüssel unter Verwendung des siebten Zufallswerts durch das mobile Endgerät,
- Empfangen eines ersten Zertifikats des ID-Provider-Servers mit einem fünften öffentlichen kryptographischen Schlüssel eines fünften asymmetrischen kryptographischen Schlüsselpaars des ID-Provider-Servers durch das mobile Endgerät von dem ID-Provider-Servers,
- Verschlüsseln des siebten Zufallswerts unter Verwendung des empfangenen fünften öffentlichen kryptographischen Schlüssels des ID-Provider-Servers durch das mobile Endgerät,
- Senden des verschlüsselten siebten Zufallswerts an den ID-Provider-Server durch das mobile Endgerät zum Erzeugen des vierten kanalspezifischen ephemeren symmetrischen kryptographischen Sitzungsschlüssel durch den ID-Provider-Server.

Nach Ausführungsformen empfängt das mobile Endgerät ferner einen achten Zufallswert von dem ID-Provider-Servers und erzeugt einen neunten Zufallswert, wobei der achte und neunte Zufallswert ebenfalls zum Erzeugen des vierten kanalspezifischen ephemeren symmetrischen kryptographischen Sitzungsschlüssel durch das mobile Endgerät verwendet werden.

Nach Ausführungsformen umfasst das Authentifizieren des ID-Provider-Servers unter Verwendung der Kontrollkomponente:
- Senden einer Challenge der Kontrollkomponente über den zweiten verschlüsselten Kommunikationskanal an den ID-Provider-Servers,
- Empfangen einer Response des ID-Provider-Servers durch die Kontrollkomponente, wobei es sich bei der Response um eine unter Verwendung des privaten kryptographischen Schlüssels eines asymmetrischen Schlüsselpaars des ID-Provider-Servers erstellte Signatur der Challenge handelt,
- Empfangen eines vierten ephemeren öffentlichen kryptographischen Schlüssels eines ephemeren Schlüsselpaars des ID-Provider-Servers durch die Kontrollkomponente,
- Verifizieren der empfangenen Response unter Verwendung eines öffentlichen kryptographischen Schlüssels des asymmetrischen Schlüsselpaars des ID-Provider-Servers und der gesendeten Challenge,
- Speichern des vierten ephemeren öffentlichen kryptographischen Schlüssels des ID-Provider-Servers durch die Kontrollkomponente auf dem mobilen Endgerät.

Ausführungsformen können den Vorteil haben, dass das Authentifizieren des ID-Provider-Servers beispielsweise mittels eines Challenge-Response-Verfahrens ausgeführt werden kann. Hierzu sendet die Kontrollkomponente eine Challenge über den verschlüsselten Kommunikationskanal an den ID-Provider-Server. Der ID-Provider-Server erstellt eine Response auf die Challenge. Bei der Response handelt es sich um eine unter Verwendung eines privaten kryptographischen Schlüssels eines asymmetrischen Schlüsselpaars des ID-Provider-Servers erstellte Signatur der Challenge. Der ID-Provider-Server sendet die entsprechende Response an das mobile Endgerät, welches die Response empfängt. Ferner empfängt das mobile Endgerät einen ephemeren öffentlichen kryptographischen Schlüssel eines ephemeren kryptographischen Schlüsselpaars des ID-Provider-Servers. Die Kontrollkomponente des ID-Anwendungsprogramms verifiziert die empfangene Response unter Verwendung eines öffentlichen kryptographischen Schlüssels des asymmetrischen Schlüsselpaars des ID-Provider-Servers sowie der gesendeten Challenge. Im Zuge des Verifizierens wird geprüft, ob es sich bei der Response tatsächlich um eine Signatur der gesendeten Challenge unter Verwendung des privaten kryptographischen Schlüssels des ID-Provider-Servers handelt. Ist die Verifikation erfolgreich, d.h. der ID-Provider-Server erfolgreich durch das ID-Anwendungsprogramm authentifiziert, speichert das mobile Endgerät den empfangenen ephemeren öffentlichen kryptographischen Schlüssel des ID-Provider-Servers ab.

Nach Ausführungsformen wird der vierte ephemere öffentliche kryptographische Schlüssel des ID-Provider-Servers beispielsweise in komprimierter Form von der Kontrollkomponente empfangen. Nach Ausführungsformen wird der vierte ephemere öffentliche kryptographische Schlüssel des ID-Provider-Servers beispielsweise in unkomprimierter Form empfangen.

Nach Ausführungsformen handelt es sich bei der Challenge um einen Zufallswert.

Nach Ausführungsformen umfasst das Authentifizieren des ID-Provider-Servers durch die Kontrollkomponente ferner ein Empfangen eines Zertifikats des ID-Provider-Servers, welches den öffentlichen kryptographischen Schlüssel des ID-Provider-Servers umfasst, durch die Kontrollkomponente über den zweiten verschlüsselten Kommunikationskanal.

Das entsprechende Zertifikat des ID-Provider-Servers kann beispielsweise zusammen mit einer Zertifikatskette empfangen werden, deren Gültigkeit unter Verwendung eines Wurzelzertifikats, wie es zuvor für die Kontrollkomponente auf dem mobilen Endgerät hinterlegt wurde, verifiziert werden.

Nach Ausführungsformen umfasst das Authentisieren des ID-Anwendungsprogramms gegenüber dem ID-Provider-Servers durch das Sicherheitselement unter Verwendung der Kontrollkomponente:
- Senden einer Anfrage zum Erzeugen eines mit dem ID-Provider-Server geteilten vierten Geheimnisses von der Kontrollkomponente an das Sicherheitselement, wobei die Anfrage den vierten ephemeren öffentlichen kryptographischen Schlüssel des ID-Provider-Servers umfasst,
- in Antwort auf die Anfrage, Empfangen des von dem Sicherheitselement erzeugten geteilten vierten Geheimnisses durch die Kontrollkomponente, wobei die Erzeugung des geteilten vierten Geheimnisses durch das Sicherheitselement unter Verwendung des ersten privaten kryptographischen Schlüssels des ID-Anwendungsprogramms und des vierten ephemeren öffentlichen kryptographischen Schlüssels des ID-Provider-Servers erfolgt,

- Erzeugen eines zehnten Zufallswerts durch die Kontrollkomponente,
- Erzeugen eines vierten gemeinsamen Authentisierungsschlüssels zum Authentisieren von Daten gegenüber dem ID-Provider-Server durch die Kontrollkomponente, wobei der vierte gemeinsame Authentisierungsschlüssel unter Verwendung des geteilten vierten Geheimnisses und des zehnten Zufallswerts erzeugt wird,
- Erzeugen eines fünften Authentisierungstoken durch die Kontrollkomponente unter Verwendung des vierten Authentisierungsschlüssels und des vierten ephemeren öffentlichen kryptographischen Schlüssels des ID-Provider-Servers zum Authentisieren des ID-Anwendungsprogramms gegenüber dem ID-Provider-Server,
- Senden des zehnten Zufallswerts zusammen mit dem fünften Authentisierungstoken zum Authentisieren des ID-Anwendungsprogramms durch die Kontrollkomponente über den zweiten verschlüsselten Kommunikationskanal an den ID-Provider-Server.

Ausführungsformen können den Vorteil haben, dass sich das ID-Anwendungsprogramm gegenüber dem ID-Provider-Server im Zuge eines Berechnens von gemeinsamen symmetrischen kryptographischen Schlüsseln authentifizieren kann. Hierzu sendet die Kontrollkomponente beispielsweise eine Anfrage an das Sicherheitselement zum Erzeugen eines mit dem ID-Provider-Server geteilten Geheimnisses unter Verwendung des privaten kryptographischen Schlüssels des ID-Anwendungsprogramms. Mit der Anfrage stellt die Kontrollkomponente dem Sicherheitselement beispielsweise den ephemeren öffentlichen kryptographischen Schlüssel des ID-Provider-Servers zur Verfügung. Diesen ephemeren öffentlichen kryptographischen Schlüssel des ID-Provider-Servers hat die Kontrollkomponente beispielsweise zuvor im Zuge der Authentifizierung des ID-Provider-Servers empfangen. Beispielsweise hat die Kontrollkomponente den entsprechenden öffentlichen kryptographischen Schlüssel in unkomprimierter Form empfangen. Alternativer Weise kann die Kontrollkomponente den ephemeren öffentlichen kryptographischen Schlüssel des ID-Provider-Servers von dem ID-Provider-Server im Zuge der Authentisierung des ID-Anwendungsprogramms empfangen. Beispielsweise empfängt die Kontrollkomponente den ephemeren öffentlichen kryptographischen Schlüssel des ID-Provider-Servers im Zuge der Authentifizierung des ID-Provider-Servers in komprimierter Form, komprimiert den im Zuge der Authentisierung des ID-Anwendungsprogramms in unkomprimierter Form empfangenen öffentlichen kryptographischen Schlüssel des ID-Provider-Servers und vergleicht beide miteinander.

Das Sicherheitselement erzeugt unter Verwendung des zweiten privaten kryptographischen Schlüssels des ID-Anwendungsprogramms sowie des ephemeren öffentlichen kryptographischen Schlüssels des ID-Provider-Servers das angefragte Geheimnis und stellt dieses der Kontrollkomponente zur Verfügung. Die Kontrollkomponente verwendet das geteilte Geheimnis zum Erzeugen eines gemeinsamen Authentisierungsschlüssels zum Authentisieren von Daten, welche mit dem ID-Provider-Server ausgetauscht werden. Bei dem entsprechenden Authentisierungsschlüssel handelt es sich beispielsweise um einen symmetrischen kryptographischen Schlüssel. Zum Erzeugen des Authentisierungsschlüssels verwendet die Kontrollkomponente ferner einen Zufallswert. Dieser Zufallswert wird auf dem mobilen Endgerät, beispielsweise durch die Kontrollkomponente erzeugt. Unter Verwendung des Authentisierungsschlüssels und des ephemeren öffentlichen kryptographischen Schlüssels des ID-Provider-Servers erzeugt die Kontrollkomponente einen Authentisierungstoken. Den so erzeugten Authentisierungstoken sendet die Kontrollkomponente zum Authentisieren des ID-Anwendungsprogramms gegenüber dem ID-Provider-Server zusammen mit dem Zufallswert an den ID-Provider-Server. Unter Verwendung des von dem ID-Anwendungsprogramm bzw. von der Kontrollkomponente empfangenen Zufallswert kann der ID-Provider-Server ebenfalls den Authentisierungsschlüssel erzeugen. Das hierfür notwendige geteilte Geheimnis berechnet der ID-Provider-Server beispielsweise unter Verwendung eines ephemeren privaten kryptographischen Schlüssels des ephemeren asymmetrischen Schlüsselpaars des ID-Provider-Server sowie des öffentlichen kryptographischen Schlüssels des ID-Anwendungsprogramms. Unter Verwendung des Authentisierungsschlüssels sowie seines ephemeren öffentlichen kryptographischen Schlüssels kann der ID-Provider-Server den empfangenen Authentisierungstoken auf seine Gültigkeit hin prüfen.

Nach Ausführungsformen handelt es sich bei dem fünften Authentisierungsschlüssel um einen kryptographischen Schlüssel zum Erzeugen eines Message Authentication Codes, wobei es sich bei dem fünften Authentisierungstoken um einen unter Verwendung des fünften Authentisierungsschlüssels erzeugten vierten MAC des vierten ephemeren öffentlichen kryptographischen Schlüssels des ID-Anwendungsprogramms handelt.

Nach Ausführungsformen ist das Sicherheitselement dazu konfiguriert, dass Voraussetzung für das Authentisieren des ID-Anwendungsprogramms des mobilen Endgeräts gegenüber dem ID-Provider-Server durch das Sicherheitselement eine erfolgreiche Authentisierung des Nutzers gegenüber dem Sicherheitselement ist. Der Nutzer erklärt mit der Authentisierung eine Zustimmung zu dem Auslesen der auszulesenden Attribute durch den ID-Provider-Server.

Ausführungsformen können den Vorteil haben, dass sichergestellt werden kann, dass eine Authentisierung des ID-Anwendungsprogramms gegenüber dem ID-Provider-Server und damit ein Auslesen von Attributen aus dem ID-Anwendungsprogramm nur unter Zustimmung des Nutzers des mobilen Endgeräts möglich ist. Dabei wird im Zuge der Authentifizierung des Nutzers des mobilen Endgeräts sichergestellt, dass es sich bei dem bestätigten Nutzer tatsächlich um den registrierten Nutzer handelt. Zum Erzeugen des geteilten vierten Geheimnisses im Zuge der Authentisierung des ID-Anwendungsprogramms ist beispielsweise eine Verwendung des ersten privaten kryptographischen Schlüssels des ID-Anwendungsprogramms notwendig, welche beispielsweise an eine erfolgreiche Nutzerauthentifizierung des registrierten Nutzers gebunden ist.

Nach Ausführungsformen erzeugt die Kontrollkomponente ferner einen vierten ephemeren symmetrischen kryptographischen Sitzungsschlüssel unter Verwendung des geteilten vierten Geheimnisses und des zehnten Zufallswerts.

Ausführungsformen können den Vorteil haben, dass mit dem ephemeren symmetrischen kryptographischen Sitzungsschlüssel eine Kommunikation zwischen dem ID-Provider-Server und dem ID-Anwendungsprogramm verschlüsselt werden kann.

Nach Ausführungsformen werden die auszulesenden Attribute unter Verwendung des vierten ephemeren symmetrischen kryptographischen Sitzungsschlüssel verschlüsselt und über den zweiten verschlüsselten Kommunikationskanal an den ID-Provider-Server gesendet.

Ausführungsformen können den Vorteil haben, dass die ausgelesenen Attribute in kryptographisch gesicherter Weise an den ID-Provider-Server gesendet werden können.

Ausführungsformen umfassen ferner ein mobiles Endgerät, welches einen Prozessor und einen Speicher umfasst. In dem Speicher ist ein ID-Anwendungsprogramm zum Bereitstellen einer elektronischen Identität gespeichert. Der Prozessor ist dazu konfiguriert, ein Verfahren zum Erstellen einer kryptographisch abgesicherten elektronischen Identität eines Nutzers auf einem mobilen Endgerät auszuführen. Das ID-Anwendungsprogramm umfasst eine Kontrollkomponente zum Kontrollieren des Erstellens der elektronischen Identität. Das ID-Anwendungsprogramm umfasst ferner eine Provisionierungskomponente zum Ausführen eines Provisionierens des ID-Anwendungsprogramms im Zuge des Erstellens der kryptographisch abgesicherten elektronischen Identität. Das mobile Endgerät umfasst ferner ein Sicherheitselement. Das mobile Endgerät umfasst ferner eine Kommunikationsschnittstelle zur Kommunikation über ein Netzwerk mit einem Personalisierungsserver.

Das Provisionieren des ID-Anwendungsprogramms umfasst:
- auf eine Sicherheitsinspektionsanfrage der Provisionierungskomponente hin, Ausführen einer Remote-Sicherheitsinspektion der Sicherheitsinfrastruktur des mobilen Endgeräts unter Verwendung der Kontrollkomponente durch einen Personalisierungsserver über ein Netzwerk,
- Empfangen eines Ergebnisses der Remote-Sicherheitsinspektion des Personalisierungsservers, welches die Kontrollkomponente an die Provisionierungskomponente weiterleitet,
- auf ein positives Ergebnis der Remote-Sicherheitsinspektion hin, Senden einer Schlüsselerzeugungsanfrage der Provisionierungskomponente an die Kontrollkomponente, welche die Kontrollkomponente an das Sicherheitselement weiterleitet,
- in Antwort auf die Schlüsselerzeugungsanfrage, Erzeugen eines dem ID-Anwendungsprogramm zugeordneten ersten asymmetrischen Schlüsselpaars und eines dem ID-Anwendungsprogramm zugeordneten zweiten asymmetrischen Schlüsselpaars durch das Sicherheitselement, wobei das erste asymmetrische Schlüsselpaar einen ersten privaten kryptographischen Schlüssel und einen ersten öffentlichen kryptographischen Schlüssel umfasst, wobei das zweite asymmetrische Schlüsselpaar einen zweiten privaten kryptographischen Schlüssel und einen zweiten öffentlichen kryptographischen Schlüssel umfasst, wobei das Sicherheitselement den ersten und zweiten öffentlichen kryptographischen Schlüssel an die Kontrollkomponente sendet, welche die beiden öffentlichen kryptographischen Schlüssel an die Provisionierungskomponente weiterleitet,
- auf einen Empfang der beiden öffentlichen kryptographischen Schlüssel hin, Erstellen einer Zertifikatsanfrage durch die Provisionierungskomponente zum Erstellen eines den ersten öffentlichen kryptographischen Schlüssel umfassenden Zertifikats des ID-Anwendungsprogramms, wobei die Zertifikatsanfrage den ersten öffentlichen kryptographischen Schlüssel umfasst,
- Senden der Zertifikatsanfrage durch die Provisionierungskomponente über das Netzwerk an den Personalisierungsserver, wobei die Zertifikatsanfrage den ersten öffentlichen kryptographischen Schlüssel umfasst, wobei die Provisionierungskomponente zusätzlich zu der Zertifikatsanfrage den zweiten öffentlichen kryptographischen Schlüssel an den Personalisierungsserver sendet,
- in Antwort auf die Zertifikatsanfrage, Empfangen des von dem Personalisierungsserver erstellten Zertifikats mit dem ersten öffentlichen kryptographischen Schlüssel sowie eines Wurzelzertifikats einer Wurzelinstanz einer PKI durch die Personalisierungskomponente,
- Speichern des Zertifikats des ID-Anwendungsprogramms und des Wurzelzertifikats auf dem mobilen Endgerät.

Nach Ausführungsformen ist das mobile Endgerät dazu konfiguriert, jede der vorangehend beschriebenen Ausführungsformen des Verfahrens zum Erstellen der kryptographisch abgesicherten elektronischen Identität des Nutzers auf dem mobilen Endgerät umzusetzen.

Nach Ausführungsformen umfasst das Erstellen der kryptographisch abgesicherten elektronischen Identität ferner ein Personalisieren des ID-Anwendungsprogramms auf dem mobilen Endgerät unter Verwendung eines ID-Tokens. Das ID-Anwendungsprogramm umfasst ferner eine Personalisierungskomponente zum Ausführen eines Personalisierens des ID-Anwendungsprogramms im Zuge des Erstellens der kryptographisch abgesicherten elektronischen Identität.

Das Personalisieren umfasst:
- Aufbauen eines verschlüsselten Kommunikationskanals zwischen dem mobilen Endgerät und dem Personalisierungsserver über das Netzwerk, wobei zum Aufbauen des verschlüsselten Kommunikationskanals die Personalisierungskomponente verwendet wird,
- Aufbauen eines ersten verschlüsselten Unterkanals zwischen dem ID-Token und dem Personalisierungsserver innerhalb des verschlüsselten Kommunikationskanals über das mobile Endgerät, wobei zum Aufbauen des ersten verschlüsselten Unterkanals die Personalisierungskomponente verwendet wird
- Auslesen von ein oder mehreren der Attribute aus dem ID-Token durch den Personalisierungsserver über den ersten verschlüsselten Unterkanal innerhalb des verschlüsselten Kommunikationskanals,
- Aufbauen eines zweiten verschlüsselten Unterkanals zwischen der Kontrollkomponente und dem Personalisierungsserver innerhalb des verschlüsselten Kommunikationskanals, wobei zum Aufbauen des zweiten verschlüsselten Unterkanals die Personalisierungskomponente verwendet wird,
- Empfangen der ausgelesenen Attribute durch die Kontrollkomponente von dem Personalisierungsserver über den zweiten verschlüsselten Unterkanal innerhalb des verschlüsselten Kommunikationskanals,
- Speichern der empfangenen Attribute durch die Kontrollkomponente auf dem mobilen Endgerät, wobei das ID-Anwendungsprogramm dazu konfiguriert ist, die Attribute zum Nachweis einer Identität des Nutzers gegenüber einem weiteren Computersystem zu verwenden.

Ausführungsformen umfassen ein System. Das System umfasst ein mobiles Endgerät nach einer der vorangehend beschriebenen Ausführungsformen eines mobilen Endgeräts sowie einen Personalisierungsserver. Der Personalisierungsserver ist konfiguriert zum Ausführen einer Remote-Sicherheitsinspektion der Sicherheitsinfrastruktur des mobilen Endgeräts über das Netzwerk, zum Empfangen der Zertifikatsanfrage mit dem von dem Sicherheitselement des mobilen Endgeräts erzeugten ersten öffentlichen kryptographischen Schlüssel, zum Empfangen des von dem Sicherheitselement des mobilen Endgeräts erzeugten zweiten öffentlichen kryptographischen Schlüssel, zum Erstellen eines Zertifikats mit dem ersten öffentlichen kryptographischen Schlüssel, zum Bereitstellen eines Wurzelzertifikats einer Wurzelinstanz einer PKI, und zum Auslesen von Attributen aus einem ID-Token über das mobile Endgerät und zum Personalisieren des ID-Anwendungsprogramms des mobilen Endgeräts.

Nach Ausführungsformen ist das System dazu konfiguriert, jede der vorangehend beschriebenen Ausführungsformen des Verfahrens zum Erstellen der kryptographisch abgesicherten elektronischen Identität des Nutzers auf dem mobilen Endgerät umzusetzen.

Nach Ausführungsformen umfasst das System ferner den ID-Token, in welchem die auszulesenden Attribute gespeichert sind.

Nach Ausführungsformen umfasst das System ferner einen ID-Provider-Server. Der ID-Provider-Server ist konfiguriert zum Erstellen einer Leseanfrage zum Auslesen von ein oder mehreren der Attribute der von dem ID-Anwendungsprogramm bereitgestellten elektronischen Identität, zum Senden der Leseanfrage an das mobile Endgerät zum Authentisieren gegenüber der ID-Anwendungsprogramm, zum Authentifizieren des ID-Anwendungsprogramms und zum Auslesen der auszulesenden Attribute aus dem mobilen Endgerät über das Netzwerk.

Im Weiteren werden Ausführungsformen der Erfindung mit Bezugnahme auf die Zeichnungen näher erläutert. Es zeigen:
- Figur 1: ein schematisches Diagramm eines exemplarischen mobilen Endgeräts,
- Figur 2: ein schematisches Diagramm eines exemplarischen Systems,
- Figur 3: ein Flussdiagramm eines exemplarischen Verfahrens zum Provisionieren eines ID-Anwendungsprogramms auf dem mobilen Endgerät,
- Figur 4: ein Flussdiagramm eines exemplarischen Verfahrens zum Provisionieren des ID-Anwendungsprogramms auf dem mobilen Endgerät,
- Figur 5: ein Flussdiagramm eines exemplarischen Verfahrens zum Personalisieren des ID-Anwendungsprogramms auf dem mobilen Endgerät,
- Figur 6: ein schematisches Diagramm exemplarischer verschlüsselter Kanäle,
- Figur 7: ein Flussdiagramm eines exemplarischen Verfahrens zum Personalisieren des ID-Anwendungsprogramms auf dem mobilen Endgerät,
- Figur 8: ein Flussdiagramm eines exemplarischen Verfahrens zum Auslesen von Attributen aus dem mobilen Endgerät, und
- Figur 9: ein Flussdiagramm eines exemplarischen Verfahrens zum Auslesen von Attributen aus dem mobilen Endgerät.

Elemente der nachfolgenden Ausführungsformen, die einander entsprechen, werden mit denselben Bezugszeichen gekennzeichnet.

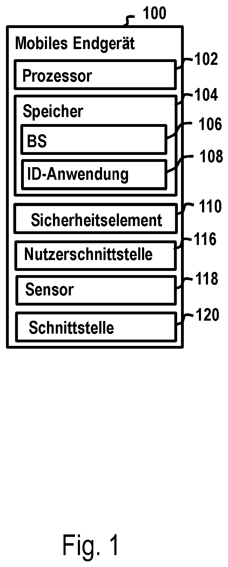

Figur 1 zeigt ein exemplarisches mobiles Endgerät 100, beispielsweise ein Smartphone, welches einen Speicher 104 mit Programminstruktionen umfasst, welche von einem Prozessor 102 ausgeführt werden. Die Programminstruktionen können beispielsweise ein auf dem mobiles Endgerät 100 installiertes Betriebssystems 106 und ein ID-Anwendungsprogramms 108 umfassen. Das ID-Anwendungsprogramm 108, ist dazu konfiguriert in personalisiertem Zustand Attribute bzw. Identitätsattribute eines Nutzers zu verwalten. Diese Attribute bilden eine elektronische Identität des Nutzers und werden von dem ID-Anwendungsprogramm 108 beispielsweise zum Nachweis der Identität des Nutzers gegenüber einem weiteren Computersystem, wie etwa einem ID-Provider-Server, bereitzustellen. Ferner umfasst das ID-Anwendungsprogramm 108 beispielsweise eine Kontrollkomponente, welche ein Erstellen der elektronischen Identität durch das ID-Anwendungsprogramm 108 kontrolliert. Zudem kontrolliert die Kontrollkomponente beispielsweise das Verwenden der elektronischen Identität, etwa ein Auslesen der Attribute der elektronischen Identität durch einen ID-Provider-Server. Ferner umfasst das ID-Anwendungsprogramm 108 beispielsweise eine Provisionierungskomponente, welche ein Provisionieren des ID-Anwendungsprogramm 108 mit kryptographischen Schlüsseln steuert. Ferner umfasst das ID-Anwendungsprogramm 108 beispielsweise Personalisierungskomponente, welche eine Personalisierung des ID-Anwendungsprogramm 108 steuert, d.h. ein Einbringen von Attributen in das mobile Endgerät 100. Insbesondere steuert die Personalisierungskomponente beispielsweise einen Aufbau von verschlüsselten Kanälen zur Kommunikation im Zuge einer entsprechenden Personalisierung. Die entsprechenden Attribute sind Teil bzw. bilden eine von dem ID-Anwendungsprogramms 108 verwaltete elektronische Identität des Nutzers, welche dieser mittels des mobilen Endgeräts 100 nutzen kann. Ferner umfasst das mobile Endgerät 100 beispielsweise ein Sicherheitselemente 110, welches beispielsweise als Hardwarekomponente in das mobile Endgerät 100 eingebettete ist. Das Sicherheitselement 110 ist beispielweise als ein kryptographisch gesicherter Co-Prozessor mit einem hardwarebasierten Schlüsselmanager implementiert sein, welcher durch die Isolation von dem Hauptprozessor 102 des mobilen Endgeräts eine zusätzliche Sicherheitsebene ermöglicht und bereitstellt. Das Sicherheitselement 110 mit dem Co-Prozessor kann verwendet werden, um symmetrische kryptographische Schlüssel und/oder asymmetrische kryptographische Schlüsselpaare für das mobile Endgerät 100, insbesondere für das Anwendungsprogramm 108 zu erzeugen. Der Sicherheitselement 110 stellt beispielsweise Identifikatoren bereit, mit welchen die erzeugten kryptographischen Schlüssel identifiziert werden können. Unter Verwendung der Identifikatoren kann das Sicherheitselement 110, etwa von dem ID-Anwendungsprogramm 108, aufgefordert werden, stellvertretend für das ID-Anwendungsprogramm 108 mit den für das ID-Anwendungsprogramm 108 erzeugten kryptographischen Schlüsseln kryptographische Operationen, wie etwa Verschlüsselungen und/oder Entschlüsselungen, auszuführen. Beispielsweise kann das Sicherheitselement 110 eine TEE oder Secure Enclave bereitstellen, welche eine sichere bzw. vertrauenswürdige Laufzeitumgebung für Applikationen zur Verfügung stellt. Das Sicherheitselement 110 ist beispielsweise dem Betriebssystem 106 zugeordnet und stellt für dieses kryptographische Mittel bereit, wie beispielsweise kryptographische Schlüssel, kryptographische Funktionen und/oder kryptographische Protokolle. Beispielsweise stellt das Sicherheitselement 110 einen Key Store bzw. Schlüsselspeicher zum Speichern von kryptographischen Schlüsseln bereit, wie etwa symmetrischer, öffentlicher und/oder privater kryptographischer Schlüssel, und von Zertifikaten, wie beispielsweise Lesezertifikate, Public-Key-Zertifikate und/oder Attributzertifikate. Die von dem Sicherheitselement 110 bereitgestellten kryptographischen Mittel versetzten das Betriebssystem 106 dazu in die Lage, beispielsweise ein Challenge Response-Verfahrens auszuführen bzw. an diesem teilzunehmen. Ferner stellt das Sicherheitselement 110 kryptographische Mittel für das ID-Anwendungsprogramm 108 bereit, wie beispielsweise kryptographische Schlüssel, kryptographische Funktionen und/oder kryptographische Protokolle. Die von dem Sicherheitselement 110 bereitgestellten kryptographischen Mittel versetzten ID-Anwendungsprogramm 108 dazu in die Lage, beispielsweise ein Challenge Response-Verfahrens auszuführen bzw. an diesem teilzunehmen.

Ferner umfasst das mobile Endgerät 100 eine Nutzerschnittelle 116, welche beispielsweise ein Display, insbesondere ein Touchscreen umfasst. Unter Verwendung des Nutzerschnittelle 116, kann der Nutzer mit dem mobiles Endgerät 100 interagieren. Beispielsweise kann der Nutzer zum Bereitstellen von Authentifizierungsfaktoren bzw. Authentifizierungsmerkmalen aufgefordert werden. Zum Erfassen von Authentifizierungsdaten der Authentifizierungsfaktoren des Nutzers umfasst das mobile Endgerät 100 einen Authentifizierungssensor 118, welcher beispielsweise in die Nutzerschnittstelle 116 integriert oder als eigenständige Komponente implementiert sein kann. Schließlich umfasst das mobile Endgerät 100 eine Kommunikationsschnittstelle bzw. Antenne 120, welche konfiguriert ist für eine kabellose Kommunikation, beispielsweise über ein Netzwerk.

Unter Verwendung der Kommunikationsschnittstelle 120 kann das mobile Endgerät 100 beispielsweise mit einem Personalisierungsserver zum Zwecke der Provisionierung des ID-Anwendungsprogramms 108 kommunizieren. Ferner kann das mobile Endgerät 100 mit dem Personalisierungsserver unter Verwendung der Kommunikationsschnittstelle 120 beispielsweise zum Zwecke der Personalisierung des ID-Anwendungsprogramms 108 kommunizieren. Ferner ist die Kommunikationsschnittstelle 120 beispielsweise zu einer kabellosen Kommunikation mit einem ID-Token konfiguriert, welcher die Attribute des Nutzers zum Zwecke der Personalisierung bereitstellt. Für unterschiedliche Kommunikationsverfahren umfasst die Kommunikationsschnittstelle 120 beispielsweise unterschiedliche Kommunikationskomponenten.

Das mobile Endgerät 100 mit der Kommunikationsschnittstelle 120 kann mithin als Transceiver eine Kommunikation zwischen dem ID-Token und dem Personalisierungsserver zum Auslesen der Attribute durch den Personalisierungsserver aus dem ID-Token ermöglichen. Dabei baut das mobile Endgerät 100 unter Verwendung des Sicherheitselements 110 einen verschlüsselten Kommunikationskanal zu dem Personalisierungsserver über ein Netzwerk auf. Der entsprechende Kommunikationskanal beispielsweise mittels Ende-zu-Ende-Verschlüsselung verschlüsselt. Innerhalb des verschlüsselten Kommunikationskanal wird ein erster verschlüsselter Unterkanal zwischen dem ID-Token und dem Personalisierungsserver unter Vermittlung des mobilen Endgeräts 100 bzw. einer Personalisierungskomponente des ID-Anwendungsprogramms 108 aufgebaut. Der entsprechende erste Unterkanal ist beispielsweise ebenfalls mittels Ende-zu-Ende-Verschlüsselung verschlüsselt. Dieser erste verschlüsselte Unterkanal dient beispielsweise einer Kommunikation zwischen dem ID-Token und dem Personalisierungsserver, beispielsweise zum Auslesen der von dem ID-Token bereitgestellten Attribute durch den Personalisierungsserver. Ferner kann innerhalb des verschlüsselten Kommunikationskanal ein zweiter verschlüsselter Unterkanal zwischen dem zu personalisierenden ID-Anwendungsprogramm 108 und dem Personalisierungsserver aufgebaut werden. Der Aufbau erfolgt beispielsweise wiederum unter Vermittlung des Personalisierungskomponente des ID-Anwendungsprogramms 108. Der entsprechende zweite Unterkanal ist beispielsweise ebenfalls mittels Ende-zu-Ende-Verschlüsselung verschlüsselt. Dieser zweite verschlüsselte Unterkanal dient beispielsweise einer Kommunikation zwischen dem ID-Anwendungsprogramms 108, etwa der Personalisierungskomponente u des ID-Anwendungsprogramms 108nd dem Personalisierungsserver, beispielsweise zum Personalisieren des ID-Anwendungsprogramms 108 mit den aus dem ID-Token ausgelesenen Attributen durch den Personalisierungsserver.

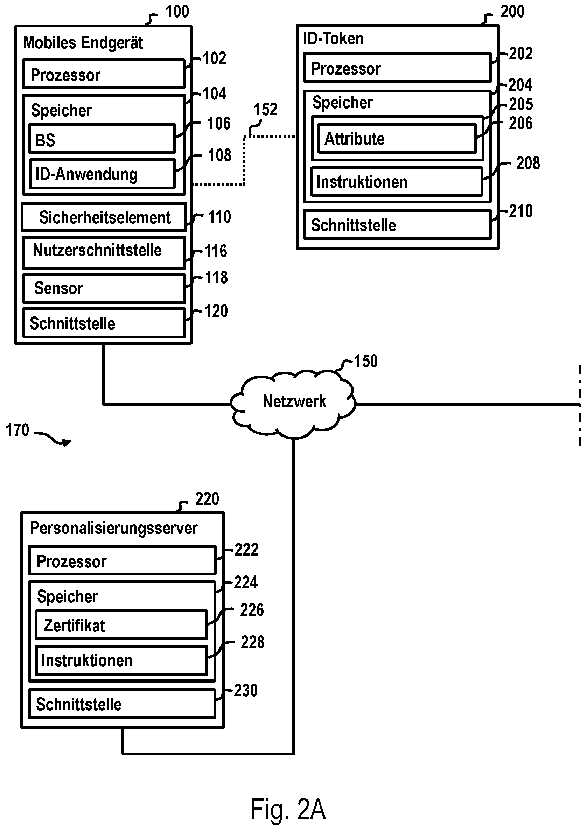

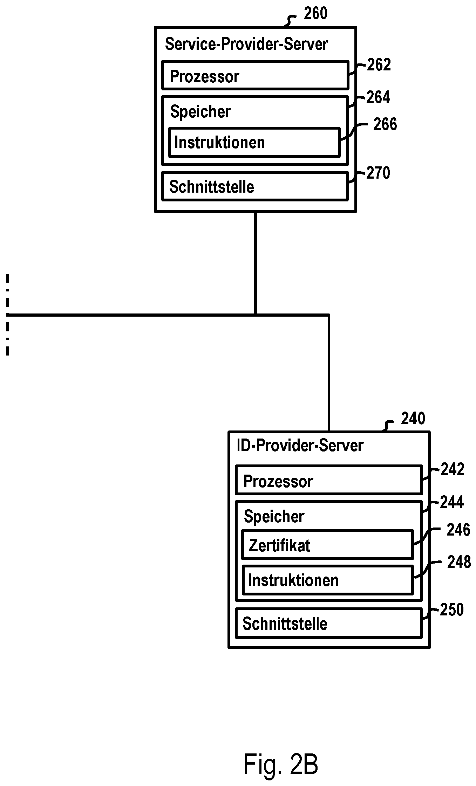

Figur 2 zeigt ein exemplarisches System 170, welches ein mobiles Endgerät 100 umfasst, das über ein Netzwerk 150, beispielsweise das Internet, mit einem Personalisierungsserver 220 verbunden ist. Zudem kann das mobile Endgerät 100 über das Netzwerk 150 beispielsweise mit einem ID-Provider-Server 240 und/oder einem Service-Provider-Server 260 kommunizieren. Ferner ist das mobile Endgerät 100 beispielsweise über eine kabellose direkte Kommunikationsverbindung 152 mit einem ID-Token 200 verbindbar. Das mobile Endgerät 100 ist beispielsweise wie in Figur 1 beschrieben aufgebaut und weist die entsprechenden Funktionalitäten auf.

Der Personalisierungsserver 220 ist beispielsweise dazu konfiguriert im Zuge eines Provisionierens des mobiles Endgeräts 100 bzw. des ID-Anwendungsprogramms 108 verwendet zu werden. Der Personalisierungsserver 220 umfasst einen Prozessor 222, einen Speicher 224 und eine Kommunikationsschnittstelle 230. In dem Speicher 204 sind Programminstruktionen 228 gespeichert, bei deren Ausführung der Prozessor 222 den Personalisierungsserver 220 beispielsweise zum Ausführen einer externen Sicherheitsinspektion veranlasst. Eine Kontrollkomponente des ID-Anwendungsprogramms 108 sendet beispielsweise eine Sicherheitsinspektionsanfrage an den Personalisierungsserver 220 beispielsweise zum Ausführen einer externen Sicherheitsinspektion bzw. einer Remote-Sicherheitsinspektion. Initiiert wird die Sicherheitsinspektionsanfrage beispielsweise von einer Provisionierungskomponente des ID-Anwendungsprogramms 108. Diese Sicherheitsinspektionsanfrage wird beispielsweise über die Kontrollkomponente an den Personalisierungsserver 220 gesendet. Die Kontrollkomponente erfasst beispielsweise Prüfparameter der Sicherheitsinfrastruktur des mobilen Endgeräts 100, welche der Personalisierungsserver 220 im Zuge der externen Sicherheitsinspektion auswertet. Das Ergebnis der Remote-Sicherheitsinspektion sendet der Personalisierungsserver 220 an die Kontrollkomponente des ID-Anwendungsprogramms 108, welche dieses an die Provisionierungskomponente des ID-Anwendungsprogramms 108 weiterleitet. Die Sicherheitsinspektion umfasst beispielsweise ein Prüfen der Software und/Hardware des mobilen Endgeräts 100. Hierbei kann das mobile Endgerät 100 beispielsweise auf Manipulationen, Modifikationen und/oder Sicherheitslücken geprüft werden. Dabei kann die Integrität des mobilen Endgeräts 100 validiert werden, um sicherzustellen, dass das mobile Endgerät 100 nicht gefährdet ist und eine gesicherte Umgebung zum Erstellen einer elektronischen Identität bietet. Insbesondere kann beispielsweise geprüft werden, ob die Sicherheitsinfrastruktur, wie etwa das Sicherheitselement 110 und die von diesem implementierten Sicherheitsfunktionen, wie etwa Verschlüsselungen und /oder Zugriffsbeschränkungen, des mobilen Endgeräts 100 einen vordefinierten Satz von Sicherheitsanforderungen erfüllt. Auf ein positives Ergebnis der Remote-Sicherheitsinspektion hin, beginnt die Provisionierungskomponente mit der eigentlichen Provisionierung.

Im Zuge des Provisionierens erzeugt das Sicherheitselement 110 auf Anfrage der Provisionierungskomponente des ID-Anwendungsprogramms 108 hin beispielsweise zwei asymmetrische Schlüsselpaare für das ID-Anwendungsprogramms 108 und stellt der Provisionierungskomponente zwei öffentliche kryptographische Schlüssel der beiden asymmetrische Schlüsselpaare zur weiteren Verwendung bereit. Die zugehörigen privaten kryptographische Schlüssel werden von dem Sicherheitselement 110 beispielswiese nicht ausgegeben, sondern auf Anfrage des ID-Anwendungsprogramms 108 von dem Sicherheitselement stellvertretend für das ID-Anwendungsprogramm 108 verwendet. Beispielsweise ist eine erfolgreiche Nutzerauthentifizierung eines registrierten Nutzers des mobilen Endgeräts 100 durch das Sicherheitselement 110 eine notwendige Voraussetzung für die Erzeugung eines und/oder beider asymmetrischer Schlüsselpaare des ID-Anwendungsprogramms 108. Beispielsweise kann so eine Bindung zwischen dem registrierten Nutzer und einem und/oder beiden asymmetrischen Schlüsselpaare implementiert werden. Beispielswiese ist das Sicherheitselement 110 dazu konfiguriert, dass eine Verwendung eines und/oder beider privater kryptographischer Schlüssel der beiden asymmetrischen Schlüsselpaare des mobilen Endgeräts jeweils eine erfolgreiche Nutzerauthentifizierung eines registrierten Nutzers des mobilen Endgeräts 100 durch das Sicherheitselement 110 voraussetzt.

Von dem Personalisierungsserver 220 wird ferner beispielsweise ein Zertifikat bereitgestellt, welches einen ersten öffentlichen kryptographischen Schlüssel einer ersten asymmetrischen Schlüsselpaars der beiden im Zuge des Provisionierens erzeugten asymmetrischen Schlüsselpaare umfasst. Hierzu sendet das mobile Endgerät 100 bzw. das ID-Anwendungsprogramm 108 den ersten öffentlichen kryptographischen Schlüssel an den Personalisierungsserver 220. Voraussetzung für die Zertifikatsausstellung ist beispielsweise eine Schlüsselattestierung bzw. Key Attestation, welche bescheinigt, dass der erste öffentlichen kryptographischen Schlüssel unter Einhaltung eines vordefinierten Satzes von Sicherheitsanforderungen erstellt wurde und/oder dass das den ersten öffentlichen kryptographischen Schlüssel erstellende Sicherheitselement 110 den vordefinierten Satz von Sicherheitsanforderungen erfüllt. Mit einer Zertifikatsanfrage werden von dem mobilen Endgerät 100 beispielsweise Attestierungsinformationen zu dem ersten öffentlichen kryptographischen Schlüssel zur Prüfung an den Personalisierungsserver 220 gesendet. Die Attestierungsinformationen belegen beispielsweise, welche Sicherheitsanforderung von dem Sicherheitselement 110 im Zuge der Erzeugung des ersten asymmetrischen Schlüsselpaars eingehalten wurden. Ferner wird im Zuge des Provisionierens beispielsweise auch der zweite öffentliche kryptographische Schlüssel von dem mobile Endgerät 100 bzw. dem ID-Anwendungsprogramm 108 an den Personalisierungsserver 220 gesendet. Ferner werden von dem mobilen Endgerät 100 beispielsweise Attestierungsinformationen zu dem zweiten öffentlichen kryptographischen Schlüssel zur Prüfung an den Personalisierungsserver 220 gesendet. Die Attestierungsinformationen belegen beispielsweise, welche Sicherheitsanforderung von dem Sicherheitselement 110 im Zuge der Erzeugung des zweiten asymmetrischen Schlüsselpaars eingehalten wurden. Auf eine erfolgreiche Schlüsselattestierung durch den Personalisierungsserver 220 hin, werden die beiden attestierten öffentlichen kryptographischen Schlüssel des ID-Anwendungsprogramms 108 beispielsweise auf dem Personalisierungsserver 220 gespeichert. Beispielsweise wird der erste öffentliche kryptographische Schlüssel in Form des von dem Personalisierungsserver 220 erzeugten Zertifikats gespeichert. Das Zertifikat wird von dem Personalisierungsserver 220 in Antwort auf die Zertifikatsanfrage über das Netzwerk 150 an das mobile Endgerät 100 bzw. das ID-Anwendungsprogramm 108 gesendet. Beispielsweise sendet der Personalisierungsserver 220 zudem ein oder mehrere Wurzelsignaturprüfschlüssel, etwa CVCA Schlüssel einer Country Verifying Certificate Authority, d.h. einer nationalen Zertifikats-Autorität für Verifizierung, an das mobile Endgerät 100 bzw. das ID-Anwendungsprogramm 108. Diese Wurzelsignaturprüfschlüssel dienen zum Verifizieren von Zertifikatsignaturen ein oder mehrerer Wurzelinstanzen dienen. Ferner werden von dem Personalisierungsserver 220 beispielsweise die Ergebnisse der Schlüsselattestierungen an das mobile Endgerät 100 bzw. das ID-Anwendungsprogramm 108 gesendet.

Zum Personalisieren des ID-Anwendungsprogramms 108 werden beispielsweise Attribute 206 verwendet, welche ein ID-Token 200 bereitstellt. Der ID-Token 200 umfasst einen Prozessor 202 und einen Speicher 204. In einem geschützten Speicherbereich 205 des Speichers 204 sind die Attribute 206 gespeichert, bei welchen es sich um Identitätsattribute des Inhabers des ID-Tokens 200 handelt. Ferner sind in dem Speicher 204 Programminstruktionen 208 gespeichert, deren Ausführen durch den Prozessor 202 den Prozessor dazu veranlasst ein Auslesen der Attribute 206 durch eine dazu berechtigte Instanz, wie etwa den Personalisierungsserver 220, zu ermöglichen. Hierzu stellt der ID-Token 200 beispielsweise unter Verwendung seiner Kommunikationsschnittstelle 210 eine kabellose Direktverbindung 152 mit dem mobilen Endgerät 100, über welche der Personalisierungsserver 220 die Attribute 206 auslesen kann.

Bei einem Ausführen der in dem Speicher 204 des Personalisierungsserver 220 gespeicherten Programminstruktionen 228 steuert der Prozessor 222 den Personalisierungsserver 220 zum Aufbau verschlüsselter Kanäle mit dem mobilen Endgerät 100, dem ID-Token 200 über das mobile Endgerät 100 sowie mit dem ID-Anwendungsprogramm 108 des mobilen Endgeräts 100 steuert. Diese Kanäle verwendet der Personalisierungsserver 220 zum Auslesen von Attributen 206 aus dem ID-Token 200 und Einbringen der ausgelesenen Attribute 206 in das mobile Endgerät 100 zur Verwendung durch das ID-Anwendungsprogramm 108 im Zuge der Personalisierung. Zum Nachweis einer Leseberechtigung der Attribute 206 aus dem ID-Token 200 sowie einer Schreibberechtigung zum Schreiben der ausgelesenen Attribute 206 in das mobile Endgerät 100 verwendet der Personalisierungsserver 220 beispielsweise entsprechende Zertifikate 226.

Ferner umfasst das System beispielsweise einen Service-Provider-Server 260. Der Service-Provider-Server 260 umfasst einen Prozessor 262, einen Speicher 264 und eine Kommunikationsschnittstelle 270. In dem Speicher 264 sind Programminstruktionen 268 gespeichert, bei deren Ausführung der Prozessor 262 den Service-Provider-Server 260 zum Bereitstellen von Dienstleistungen steuert, welche beispielsweise von dem mobilen Endgerät 100 über das Netzwerk 150 angefragt und/oder genutzt werden können. Eine Inanspruchnahme von Dienstleistungen des Service-Provider-Server 260 setzt beispielsweise ein Bereitstellen und/oder Nachweis eines oder mehrerer Identitätsattribute des Nutzers voraus. Auf eine Anfrage einer Dienstleistung des Service-Provider-Servers 260 durch das mobile Endgerät 100 sendet das Service-Provider-Servers 260 eine Identitätsattributsanfrage nach Identitätsattributen des Nutzers des mobilen Endgeräts 100 an einen ID-Provider-Server 240. Die Identitätsattributsanfrage kann von dem Service-Provider-Servers 260 beispielsweise direkt oder über das mobile Endgerät 100 an den ID-Provider-Server 240 gesendet werden.

Der ID-Provider-Server 240 umfasst einen Prozessor 242, einen Speicher 244 und eine Kommunikationsschnittstelle 250. In dem Speicher 244 sind Programminstruktionen 248 gespeichert, bei deren Ausführung der Prozessor 242 den Service-Provider-Server 240 zum Auslesen der in der Identitätsattributsanfrage spezifizierten Identitätsattribute aus einem Speicher des mobilen Endgeräts 100. Hierzu baut der ID-Provider-Server 240 einen kryptographisch gesicherten Kommunikationskanal mit dem mobilen Endgerät 100 auf. Bei dem einen kryptographisch gesicherten Kommunikationskanal kann es sich beispielsweise um einen Ende-zu-Ende-verschlüsselten Kommunikationskanal handeln. Beispielsweise setzt dies eine gegenseitiges Authentifizieren von ID-Provider-Server 240 und mobilem Endgerät 100 voraus. Für einen Lesezugriff auf die Identitätsattribute verwendet der ID-Provider-Server 240 ein ID-Anwendungsprogramm 108 auf dem mobilen Endgerät 100, welches die Identitätsattribute verwaltet. Eine Leseberechtigung zum Auslesen der in der Identitätsattributsanfrage spezifizierten Identitätsattribute weist der ID-Provider-Server 240 beispielsweise mit dem Lesezertifikat 248 nach. Ferner setzt ein Lesezugriff des ID-Provider-Server 240 auf die in der Identitätsattributsanfrage spezifizierten Identitätsattribute eine Zustimmung des Nutzers des mobilen Endgeräts 100 voraus. Hierzu muss sich der Nutzer gegenüber dem ID-Anwendungsprogramm 108 erfolgreich authentisieren. Beispielsweise wird dem Nutzer über eine Anzeigevorrichtung der Nutzerschnittstelle 116 angezeigt, welche Identitätsattribut an den ID-Provider-Server 240 gesendet werden sollen, und dem Nutzer ermöglicht diese Auswahl zu bearbeiten. Beispielsweise kann der Nutzer selektieren, welche der angefragten Identitätsattribute tatsächlich gesendet werden. Auf einen erfolgreichen Nachweis der Leseberechtigung und eine erfolgreiche Nutzerauthentifizierung werden dem ID-Provider-Server 240 die freigegebenen Identitätsattribute zugesendet. Der ID-Provider-Server 240 signiert die empfangenen Identitätsattribute beispielsweise und sendet diese an den Service-Provider-Server 260.

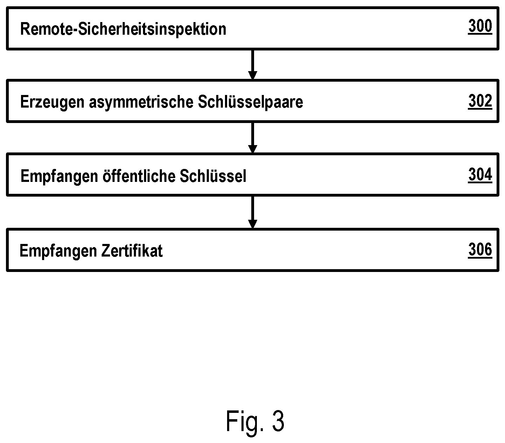

Figur 3 zeigt ein exemplarisches Verfahren zum Provisionieren eines auf einem mobilen Endgerät installierten ID-Anwendungsprogramms. Das ID-Anwendungsprogramm umfasst beispielsweise eine Provisionierungskomponente, welche das Provisionieren auf Seiten des mobilen Endgeräts steuert, sowie eine Kontrollkomponente, welche zum Kontrollieren des Erstellens und/oder Verwendens der von dem ID-Anwendungsprogramm verwalteten elektronischen Identität konfiguriert ist. Das mobile Endgerät umfasst ein Sicherheitselement, welche kryptographische Funktionen und/oder kryptographische Schlüssel bereitstellt. In Block 300 wird auf eine Sicherheitsinspektionsanfrage der Provisionierungskomponente hin, eine Remote-Sicherheitsinspektion der Sicherheitsinfrastruktur des mobilen Endgeräts durch einen Personalisierungsserver über ein Netzwerk ausgeführt. Hierzu wird beispielsweise die Kontrollkomponente des ID-Anwendungsprogramms verwendet. Die Kontrollkomponente erfasst beispielsweise Prüfparameter der Sicherheitsinfrastruktur des mobilen Endgeräts und sendet diese an den Personalisierungsserver. Der Personalisierungsserver wertet die empfangene Prüfparameter im Zuge der externen Sicherheitsinspektion aus und sendet ein Ergebnis der Remote-Sicherheitsinspektion an die Kontrollkomponente des ID-Anwendungsprogramms, welche dieses an die Provisionierungskomponente weiterleitet. Die Sicherheitsinspektion umfasst beispielsweise ein Prüfen der Software und/Hardware des mobilen Endgeräts. Hierbei kann das mobile Endgerät beispielsweise auf Manipulationen, Modifikationen und/oder Sicherheitslücken geprüft werden. Dabei kann die Integrität des mobilen Endgeräts validiert werden, um sicherzustellen, dass das mobile Endgerät nicht gefährdet ist und eine gesicherte Umgebung zum Erstellen einer elektronischen Identität bietet. Insbesondere kann beispielsweise geprüft werden, ob die Sicherheitsinfrastruktur, wie etwa das Sicherheitselement und die von diesem implementierten Sicherheitsfunktionen, wie etwa Verschlüsselungen und /oder Zugriffsbeschränkungen, des mobilen Endgeräts einen vordefinierten Satz von Sicherheitsanforderungen erfüllt. Auf ein positives Ergebnis der Remote-Sicherheitsinspektion hin, beginnt die Provisionierungskomponente mit der eigentlichen Provisionierung. In Block 302 sendet die Provisionierungskomponente eine Schlüsselerzeugungsanfrage an die Kontrollkomponente. Die Kontrollkomponente fragt daraufhin bei dem Sicherheitselement ein Erzeugen eines ersten asymmetrischen Schlüsselpaars für das ID-Anwendungsprogramm an. Ferner fragt die Kontrollkomponente bei dem Sicherheitselement ein Erzeugen eines zweiten asymmetrischen Schlüsselpaars für das ID-Anwendungsprogramm an. In Antwort auf die Schlüsselerzeugungsanfragen erzeugt das Sicherheitselement zwei asymmetrische Schlüsselpaare für das ID-Anwendungsprogramm. Das Sicherheitselement erzeugt ein dem ID-Anwendungsprogramm zugeordnetes erstes asymmetrisches Schlüsselpaar sowie ein dem ID-Anwendungsprogramm zugeordnetes zweites asymmetrisches Schlüsselpaar. Das erste asymmetrische Schlüsselpaar umfasst einen ersten privaten kryptographischen Schlüssel und einen ersten öffentlichen kryptographischen Schlüssel. Ebenso umfasst das zweite asymmetrische Schlüsselpaar einen zweiten privaten kryptographischen Schlüssel und einen zweiten öffentlichen kryptographischen Schlüssel. Das mobile Endgerät umfasst ferner ein oder mehrere Authentifizierungssensoren zum Erfassen von ein oder mehreren Authentifizierungsfaktoren eines Nutzers des mobilen Endgeräts. Voraussetzung für das Erzeugen des ersten asymmetrischen Schlüsselpaars in Block 302 ist beispielsweise eine erfolgreiche Authentisierung des Nutzers gegenüber dem Sicherheitselement. Mit der Authentisierung stimmt der Nutzer der Erzeugung des ersten asymmetrischen Schlüsselpaars zu. Zugleich wird eine Verwendung eines ersten privaten kryptographischen Schlüssels des ersten asymmetrischen Schlüsselpaars beispielsweise an eine erfolgreiche Authentisierung des Nutzers und damit den Nutzer des mobilen Endgeräts gebunden. In Block 304 empfängt die Kontrollkomponente von dem Sicherheitselement jeweils die den öffentlichen kryptographischen Schlüssel der angefragten Schlüsselpaare. Diese öffentlichen kryptographischen Schlüssel werden von der Kontrollkomponente an die Provisionierungskomponente weiterleitet.

In Block 306 empfängt die Provisionierungskomponente auf eine über ein Netzwerk an einen Personalisierungsserver gesendete Zertifikatsausstellungsanfrage ein von dem Personalisierungsserver ausgestelltes Zertifikat des ID-Anwendungsprogramms. Dieses Zertifikat umfasst den ersten öffentlichen kryptographischen Schlüssel. Hierbei kann es sich beispielsweise um ein X.509 Zertifikat handeln. Beispielsweise ist eine Voraussetzung für das Erzeugen eine erfolgreiche Schlüsselattestierung. Beispielsweise sendet die Provisionierungskomponente mit der Zertifikatsausstellungsanfrage die beiden öffentlichen kryptographischen Schlüssel des ID-Anwendungsprogramms sowie Attestierungsinformationen zu den beiden öffentlichen kryptographischen Schlüssel zur Prüfung an den Personalisierungsserver. Die Attestierungsinformationen belegen beispielsweise, welche Sicherheitsanforderung von dem Sicherheitselement im Zuge der Erzeugung der beiden asymmetrischen Schlüsselpaare eingehalten wurden. Auf eine erfolgreiche Schlüsselattestierung durch den Personalisierungsserverhin, werden die beiden attestierten öffentlichen kryptographischen Schlüssel des ID-Anwendungsprogramms beispielsweise auf dem Personalisierungsserver gespeichert. Beispielsweise wird der erste öffentliche kryptographische Schlüssel in Form des von dem Personalisierungsserver erzeugten Zertifikats gespeichert. Zusammen mit dem Zertifikat des ID-Anwendungsprogramms sendet der Personalisierungsserver zudem beispielsweise ein oder mehrere Wurzelsignaturprüfschlüssel, etwa CVCA Schlüssel einer Country Verifying Certificate Authority, d.h. einer nationalen Zertifikats-Autorität für Verifizierung, an die Provisionierungskomponente. Diese Wurzelsignaturprüfschlüssel dienen zum Verifizieren von Zertifikatsignaturen ein oder mehrerer Wurzelinstanzen dienen. Ferner werden von dem Personalisierungsserver beispielsweise die Ergebnisse der Schlüsselattestierungen an die Provisionierungskomponente des ID-Anwendungsprogramms gesendet.

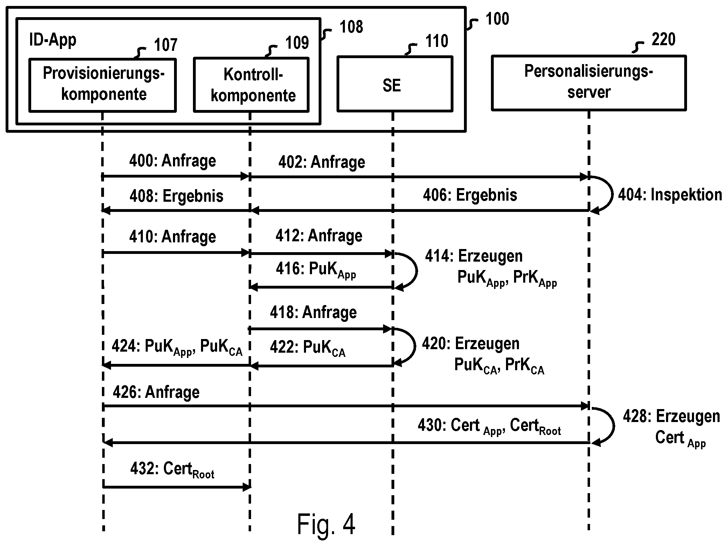

Figur 4 zeigt ein exemplarisches Verfahren zum Provisionieren eines auf einem mobilen Endgerät 100 installierten ID-Anwendungsprogramms 108 mit kryptographischen Schlüsseln. Das ID-Anwendungsprogramms 108 umfasst beispielsweise eine Provisionierungskomponente 107 zum Steuern des Provisionierens auf Seiten des mobilen Endgeräts sowie eine Kontrollkomponente 109 zum Kontrollieren des Erstellens und/oder Verwendens der von dem ID-Anwendungsprogramm 108 verwalteten elektronischen Identitäten. Beispielsweise ist die Provisionierungskomponente 107 dazu konfiguriert, einen initialen Kompatibilitätscheck auszuführen, in welchem geprüft wird, ob das mobile Endgerät 100 die zum Ausführen der Provisionierung und/oder des weiteren Verfahrens notwendigen Systemkomponenten umfasst. Die notwendigen Systemkomponenten umfassen beispielsweise Sicherheitselement 110 und Kommunikationsschnittstellen, etwa zur Kommunikation mit dem externen Personalisierungsserver 220. In Schritt 400 wird eine Anfrage für eine Sicherheitsinspektion der Sicherheitsinfrastruktur des mobilen Endgeräts 100 von der Provisionierungskomponente 107 an die Kontrollkomponente 109 gesendet. In Schritt 402 sendet die Kontrollkomponente 109 eine Sicherheitsinspektionsanfrage zum Ausführen einer Remote-Sicherheitsinspektion an den Personalisierungsserver 220. In Schritt 404 führt der Personalisierungsserver 220 eine Remote-Sicherheitsinspektion aus. Die Sicherheitsinspektion umfasst beispielsweise ein Prüfen der Software und/Hardware des mobilen Endgeräts 100. Hierbei kann das mobile Endgerät 100 beispielsweise auf Manipulationen, Modifikationen und/oder Sicherheitslücken geprüft werden. Dabei kann die Integrität des mobilen Endgeräts 100 validiert werden, um sicherzustellen, dass das mobile Endgerät 100 nicht gefährdet ist und eine gesicherte Umgebung zum Erstellen einer elektronischen Identität bereitstellt. Insbesondere kann beispielsweise geprüft werden, ob die Sicherheitsinfrastruktur, wie etwa das Sicherheitselement und die von diesem implementierten Sicherheitsfunktionen, wie etwa Verschlüsselungen und /oder Zugriffsbeschränkungen, des mobilen Endgeräts 100 einen vordefinierten Satz von Sicherheitsanforderungen erfüllt. Die Kontrollkomponente 109 erfasst beispielsweise Prüfparameter der Sicherheitsinfrastruktur des mobilen Endgeräts 100 und sendet diese an den Personalisierungsserver 220. Der Personalisierungsserver 220 wertet die empfangene Prüfparameter im Zuge der Remote-Sicherheitsinspektion aus und sendet in Schritt 406 ein Ergebnis der Remote-Sicherheitsinspektion an die Kontrollkomponente 109 des ID-Anwendungsprogramms 108, welche das Ergebnis in Schritt 408 an die Provisionierungskomponente 107 weiterleitet.

Auf ein positives Ergebnis der Remote-Sicherheitsinspektion hin, sendet die Provisionierungskomponente 107 in Schritt 410 eine Schlüsselerzeugungsanfrage zum Erzeugen zweier asymmetrischer Schlüsselpaare für das ID-Anwendungsprogramm 108 an die Kontrollkomponente 109. In Schritt 412 fragt die Kontrollkomponente 109 bei dem Sicherheitselement 110 beispielsweise ein erstes asymmetrisches Schlüsselpaar für das ID-Anwendungsprogramm 108 an. In Schritt 414 erzeugt das Sicherheitselement 110 ein dem ID-Anwendungsprogramm 108 zugeordnetes erstes asymmetrisches Schlüsselpaar mit einem ersten öffentlichen kryptographischen Schlüssel PuK_{App} und einem ersten privaten kryptographischen Schlüssel PrK_{App}. Das mobile Endgerät 100 umfasst ferner beispielsweise ein oder mehrere Authentifizierungssensoren zum Erfassen von ein oder mehreren Authentifizierungsfaktoren eines Nutzers des mobilen Endgeräts 100. Voraussetzung für das Erzeugen des ersten asymmetrischen Schlüsselpaars PuK_{App}, PrK_{App} in Schritt 414 ist beispielsweise eine erfolgreiche Authentisierung des Nutzers gegenüber dem Sicherheitselement 110. Mit der Authentisierung stimmt der Nutzer der Erzeugung des ersten asymmetrischen Schlüsselpaars zu. Zugleich wird eine Verwendung eines ersten privaten kryptographischen Schlüssels PrK_{App} des ersten asymmetrischen Schlüsselpaars beispielsweise an eine erfolgreiche Authentisierung des Nutzers und damit den Nutzer des mobilen Endgeräts 100 gebunden. Das ersten asymmetrische Schlüsselpaar dient mithin beispielsweise zum Bestätigen einer Nutzerauthentifizierung eines Nutzers des mobilen Endgeräts 100 durch das Sicherheitselement 110 bzw. einer Zustimmung des Nutzers des mobilen Endgeräts 100 im Zuge einer Verwendung des ID-Anwendungsprogramms 108. In Schritt 416 sendet das Sicherheitselement 110 den ersten öffentlichen kryptographischen Schlüssels PuKₐₚₚ des ersten asymmetrischen Schlüsselpaars an die Kontrollkomponente 109.

In Schritt 418 fragt die Kontrollkomponente 109 bei dem Sicherheitselement 110 beispielsweise ein zweites asymmetrisches Schlüsselpaar für das ID-Anwendungsprogramm 108 an. In Schritt 420 erzeugt das Sicherheitselement 110 ein dem ID-Anwendungsprogramm 108 zugeordnetes zweites asymmetrisches Schlüsselpaar mit einem zweiten öffentlichen kryptographischen Schlüssel PuK_{CA} und einem ersten privaten kryptographischen Schlüssel PrK_{CA}. Das zweite asymmetrische Schlüsselpaar dient beispielsweise als asymmetrisches Schlüsselpaar des ID-Anwendungsprogramms 108 zum Authentisieren des ID-Anwendungsprogramms 108 gegenüber anderen Computersystemen, wie beispielsweise gegenüber dem Personalisierungsserver 220. In Schritt 422 sendet das Sicherheitselement 110 den zweiten öffentlichen kryptographischen Schlüssels PuK_{CA} des zweiten asymmetrischen Schlüsselpaars an die Kontrollkomponente 109. In Schritt 424 leitete die Kontrollkomponente die beiden von dem Sicherheitselement 110 empfangenen öffentlichen kryptographischen Schlüssel PuK_{App}, PuK_{CA} an die Provisionierungskomponente 107 weiter.

In Schritt 426 sendet die Provisionierungskomponente 107 des ID-Anwendungsprogramms 108 über ein Netzwerk eine Zertifikatsausstellungsanfrage an den Personalisierungsserver 220 zum Ausstellen eines Zertifikats mit dem ersten öffentlichen kryptographischen Schlüssel PuK_{App}. Die Kommunikation mit dem Personalisierungsserver 220 erfolgt beispielsweise über eine verschlüsselte Kommunikationsverbindung, beispielsweise eine HTTPS-Verbindung. Die Zertifikatsausstellungsanfrage umfasst beispielsweise den ersten öffentlichen kryptographischen Schlüssel PuK_{App} sowie Attestierungsinformationen zu dem ersten öffentlichen kryptographischen Schlüssel PuK_{App}. Die Attestierungsinformationen bescheinigen, dass der erste öffentlichen kryptographischen Schlüssel PuK_{App} unter Einhaltung eines vordefinierten Satz von Sicherheitsanforderungen erstellt wurde und/oder dass das den ersten öffentlichen kryptographischen Schlüssel PuK_{App} erstellende Sicherheitselement 110 den vordefinierten Satz von Sicherheitsanforderungen erfüllt. Zusätzlich sendet die Provisionierungskomponente 107 beispielsweise den zweit öffentlichen kryptographischen Schlüssel PuK_{CA} sowie Attestierungsinformationen zu dem zweiten öffentlichen kryptographischen Schlüssel PuK_{CA} an den Personalisierungsserver 220. Die Attestierungsinformationen zu dem zweiten öffentlichen kryptographischen Schlüssel PuK_{CA} bescheinigen, dass der zweite öffentlichen kryptographischen Schlüssel PuK_{CA} unter Einhaltung eines vordefinierten Satzes von Sicherheitsanforderungen erstellt wurde und/oder dass das den zweiten öffentlichen kryptographischen Schlüssel PuK_{CA} erstellende Sicherheitselement 110 den vordefinierten Satz von Sicherheitsanforderungen erfüllt. In Schritt 428 prüft der Personalisierungsserver 220 die Attestierungsinformationen zu dem ersten öffentlichen kryptographischen Schlüssel PuK_{App} und erzeugt auf eine erfolgreiche Prüfung hin ein Zertifikat Cert_{App} für das ID-Anwendungsprogramms 108 mit dem ersten öffentlichen kryptographischen Schlüssel PuK_{App}. Bei dem Zertifikat Cert_{App} handelt es sich beispielsweise um ein X.509 Zertifikat. Das Zertifikat Cert_{App} wird von dem Personalisierungsserver 220 gespeichert. Ferner prüft der Personalisierungsserver 220 die Attestierungsinformationen zu dem zweiten öffentlichen kryptographischen Schlüssel PuK_{CA} und speichert auf eine erfolgreiche Prüfung hin den zweiten öffentlichen kryptographischen Schlüssel PuK_{CA} zusammen mit dem Zertifikat Cert_{App}. In Schritt 430 sendet der Personalisierungsserver 220 das Zertifikat Cert_{App} an die Provisionierungskomponente 107. Ferner sendet der Personalisierungsserver 220 beispielsweise die Ergebnisse der Prüfung der Attestierungsinformationen zu den beiden öffentlichen kryptographischen Schlüssel PuK_{App}, PuK_{CA} an die Provisionierungskomponente 107. Zudem sendet der Personalisierungsserver 220 beispielsweise einen Wurzelsignaturprüfschlüssel, etwa CVCA Schlüssel einer Country Verifying Certificate Authority, d.h. einer nationalen Zertifikats-Autorität für Verifizierung, als Bestandteil eines Wurzelzertifikats Cert_{Root} an die Provisionierungskomponente 107. Mit dem Wurzelsignaturprüfschlüssel des Wurzelzertifikats Cert_{Root} können beispielsweise Signaturen, insbesondere Zertifikatsignaturen, einer Wurzelinstanz verifiziert werden, welcher das Wurzelzertifikat Cert_{Root} zugeordnet ist. In Schritt 432 wird schließlich das Wurzelzertifikat Cert_{Root} zum Speichern von der Provisionierungskomponente 107 an die Kontrollkomponente 109 weitergeleitet. Zudem kann das Verfahren eine Validierung des empfangenen Zertifikats Cert_{App} umfassen, wobei sich das ID-Anwendungsprogramm 108 bzw. die Provisionierungskomponente 107 des ID-Anwendungsprogramms 108 unter Verwendung des Zertifikats Cert_{App} bzw. des von dem Zertifikat Cert_{App} umfassten ersten öffentlichen kryptographischen Schlüssel PuK_{App} gegenüber dem Personalisierungsserver 220 authentisiert. Im Zuge dieses Authentisierens sendet die Provisionierungskomponente 107 beispielsweise eine unter Verwendung des ersten privaten kryptographischen Schlüssels PrK_{App} erstellte Signatur, etwa eine Response auf eine Challenge des Personalisierungsservers 220, an den Personalisierungsserver 220. Eine Signatur mit dem ersten privaten kryptographischen Schlüssels PrK_{App} wird beispielsweise von dem Sicherheitselement 110 für die Provisionierungskomponente 107, gegebenenfalls unter Vermittlung der Kontrollkomponente 109, erstellt.

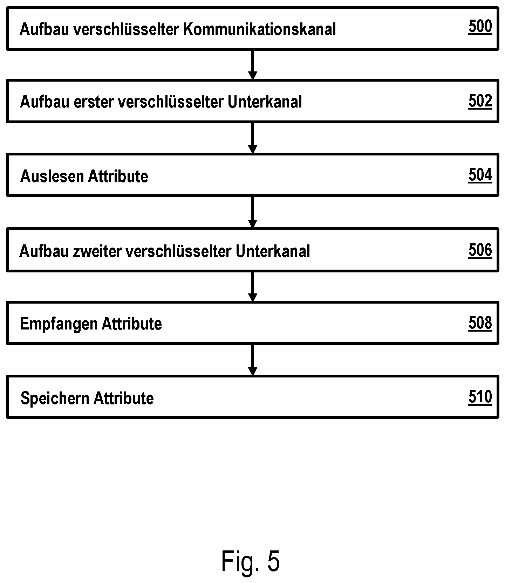

Figur 5 zeigt ein exemplarisches Verfahren zum Personalisieren eines ID-Anwendungsprogramms. Das zu personalisierende ID-Anwendungsprogramms ist auf einem mobilen Endgerät mit einem Sicherheitselement installiert. Die Personalisierung erfolgt unter Verwendung eines ID-Tokens, auf welchem Attribute eines Nutzers gespeichert sind, und eines Personalisierungsservers, welcher eine Berechtigung zum Auslesen der Attribute aus dem ID-Token besitzt und die ausgelesenen Attribute zum Zwecke einer Personalisierung des ID-Anwendungsprogramms bzw. zur Erstellung einer von dem ID-Anwendungsprogramm verwalteten elektronischen Identität in das mobile Endgerät einbringt. Die entsprechenden Berechtigungen weist der Personalisierungsserver unter Verwendung eines Zertifikats und/oder dem Besitz und der Verwendung bestimmter kryptographischer Schlüssel nach.

Das Personalisieren umfasst in Block 500 ein Aufbauen eines verschlüsselten Kommunikationskanals zwischen dem mobilen Endgerät und dem Personalisierungsserver über ein Netzwerk. Hierbei wird beispielsweise das ID-Anwendungsprogramm bzw. eine Personalisierungskomponente des ID-Anwendungsprogramm verwendet, welche den Aufbau steuert. Im Zuge des Aufbaus erfolgt beispielsweise eine gegenseitige Authentifizierung von mobilem Endgerät und Personalisierungsserver, etwa unter Verwendung von Challenge-Response-Verfahren. Ferner wird beispielsweise ein erster kanalspezifischer ephemerer symmetrischer kryptographischer Sitzungsschlüssel zum Verschlüsseln des Kommunikationskanals zwischen dem mobilen Endgerät und dem Personalisierungsserver ausgehandelt.

In Block 502 wird ein erster verschlüsselter Unterkanal zwischen dem ID-Token und dem Personalisierungsserver innerhalb des verschlüsselten Kommunikationskanals über das mobile Endgerät aufgebaut. Hierbei wird beispielsweise das ID-Anwendungsprogramm bzw. eine Personalisierungskomponente des ID-Anwendungsprogramm verwendet, welche den Aufbau steuert. Im Zuge des Aufbaus erfolgt beispielsweise eine gegenseitige Authentifizierung von ID-Token und Personalisierungsserver, etwa unter Verwendung von Challenge-Response-Verfahren. Ferner wird beispielsweise ein zweiter kanalspezifischer ephemerer symmetrischer kryptographischer Sitzungsschlüssel zum Verschlüsseln des ersten Unterkanals zwischen dem ID-Token und dem Personalisierungsserver ausgehandelt. In Block 504 werden ein oder mehreren der Attribute aus dem ID-Token durch den Personalisierungsserver über den ersten verschlüsselten Unterkanal innerhalb des verschlüsselten Kommunikationskanals ausgelesen.

Ferner wird in Block 506 ein zweiter verschlüsselter Unterkanal zwischen der Kontrollkomponente des ID-Anwendungsprogramms und dem Personalisierungsserver innerhalb des verschlüsselten Kommunikationskanals aufgebaut. Hierbei wird beispielsweise die Personalisierungskomponente des ID-Anwendungsprogramm verwendet zum Steuern des Aufbaus. Im Zuge des Aufbaus erfolgt beispielsweise eine gegenseitige Authentifizierung von dem ID-Anwendungsprogramm bzw. der Kontrollkomponente des ID-Anwendungsprogramms und dem Personalisierungsserver, etwa unter Verwendung von Challenge-Response-Verfahren. Ferner wird beispielsweise ein dritter kanalspezifischer ephemerer symmetrischer kryptographischer Sitzungsschlüssel zum Verschlüsseln des zweiten Unterkanals zwischen der Kontrollkomponente und dem Personalisierungsserver ausgehandelt.

In Block 508 empfängt die Kontrollkomponente die ausgelesenen Attribute von dem Personalisierungsserver über den zweiten verschlüsselten Unterkanal innerhalb des verschlüsselten Kommunikationskanals. Die Attribute werden beispielsweise als CBOR-Struktur in das mobile Endgerät eingebracht. Ferner können über den zweiten verschlüsselten Unterkanal auch weitere kryptographische Elemente, wie etwa Wurzelsignaturprüfschlüssel übertragen werden. Bei den Wurzelsignaturprüfschlüssel handelt es sich beispielsweise um CVCA Schlüssel. Diese weiteren kryptographischen Elemente können beispielsweise ebenfalls Bestandteil der CBOR-Struktur mit den Attributen sein. Ferner kann über den zweiten verschlüsselten Unterkanal ein Erzeugen von attributspezifischen und damit identitätsspezifischen kryptographischen Schlüsseln auf dem Sicherheitselement initiiert werden, welche der im Zuge der Personalisierung auf dem mobilen Endgerät hinterlegten abgeleiteten elektronischen Identität des Nutzers des mobilen Endgeräts zugeordnet sind. Beispielsweise wird ein drittes asymmetrisches kryptographisches Schlüsselpaar durch das Sicherheitselement erzeugt, welches den eingebrachten Attributen bzw. der erstellten Identität zugeordnet ist. Beispielsweise wird der dritte öffentliche kryptographische Schlüssel zusammen mit Attributen bzw. mit der elektronischen Identität gespeichert. Mit diesem öffentlichen kryptographischen Schlüssel können beispielsweise mit dem dritten öffentlichen kryptographischen Schlüssel als Signaturschlüssel erstellte attributspezifische bzw. identitätsspezifische Signaturen verifiziert werden.

In Block 510 speichert die Kontrollkomponente die empfangenen Attribute, womit das ID-Anwendungsprogramm dem entsprechenden Nutzer zugeordnet bzw. personalisiert ist. Beispielsweise werden die Attribute in verschlüsselter Form auf dem mobilen Endgerät gespeichert zur Verwendung durch das ID-Anwendungsprogramm, gegebenenfalls unter Verwendung des Sicherheitselement. Das ID-Anwendungsprogramm ist dazu konfiguriert, die gespeicherten Attribute zum Nachweis einer elektronischen Identität des entsprechenden Nutzers gegenüber einem weiteren Computersystem, etwa einem ID-Provider-Server zu verwenden

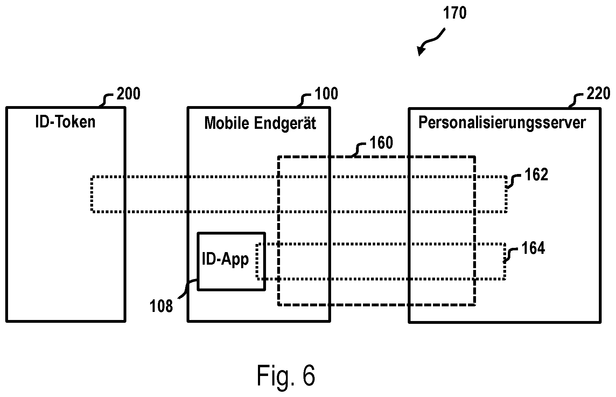

Figur 6 zeigt exemplarische verschlüsselte Kanäle 160, 162, 164, welche im Zuge der Personalisierung des ID-Anwendungsprogramms 108 auf dem mobilen Endgerät 100 aufgebaut werden. Zwischen dem mobilen Endgerät 100 und dem Personalisierungsserver 220 wird ein verschlüsselter Kommunikationskanal 160 aufgebaut. Dieser dient der Sicherung der Kommunikation zwischen dem mobilen Endgerät 100 und dem Personalisierungsserver 220. Zugleich wird durch diesen das mobile Endgerät 100 im Zuge der Kommunikation an den Personalisierungsserver 220 gebunden. Der Personalisierungsserver 220 kann somit sicherstellen, dass sämtliche Kommunikation über den verschlüsselten Kommunikationskanal 160 über dasselbe mobile Endgerät 100 erfolgt. Dabei wird beispielsweise dasselbe mobile Endgerät 100 zum Auslesen von Attributen aus dem ID-Token verwendet, welches nachfolgend mit den ausgelesenen Attributen personalisiert wird.

Im Zuge der weiteren Personalisierung erfolgt die Kommunikation zwischen dem mobilen Endgerät 100 und dem Personalisierungsserver 220 über den ein verschlüsselter Kommunikationskanal 160. Dies schließt auch eine Kommunikation zwischen dem Personalisierungsserver 220 und dem ID-Token 200 ein, welche über das mobile Endgerät 100 erfolgt. Der verschlüsselte Kommunikationskanal 160 ist beispielsweise mittels Ende-zu-Ende-Verschlüsselung verschlüsselt. Das Verschlüsseln und entschlüsseln der Kommunikation erfolgt auf Seiten des mobilen Endgeräts 100 beispielsweise mittels des Sicherheitselements des Betriebssystems des mobilen Endgeräts 100. Innerhalb des verschlüsselten Kommunikationskanals 160 wird ferner ein erster verschlüsselter Unterkanal 162 zwischen dem ID-Token 200 und dem Personalisierungsserver 220 unter Vermittlung des mobilen Endgeräts 100 bzw. einer Personalisierungskomponente des ID-Anwendungsprogramms aufgebaut. Dieser erste verschlüsselte Unterkanal 162 dient beispielsweise einer Kommunikation zwischen dem ID-Token 200 und dem Personalisierungsserver 220, beispielsweise zum Auslesen der von dem ID-Token 200 bereitgestellten Attribute durch den Personalisierungsserver 220. Der entsprechende erste Unterkanal 162 ist beispielsweise ebenfalls mittels Ende-zu-Ende-Verschlüsselung verschlüsselt. Die Datenübertragung zwischen mobilem Endgerät 100 und Personalisierungsserver220 erfolgt beispielsweise über ein Netzwerk, während die Datenübertragung zwischen mobilem Endgerät 100 und ID-Token 200 beispielsweise über eine direkte Funkverbindung erfolgt.

In diesem Kontext heißt Unterkanal, dass über den entsprechenden Unterkanal zu übertragende Daten zunächst mittels eines kryptographischen Sitzungsschlüssels des entsprechenden Unterkanals verschlüsselt werden. Beispielsweise wird zusätzlich noch ein MAC der Daten unter Verwendung eines kryptographischen Authentisierungsschlüssels des entsprechenden Unterkanals erzeugt und mit den verschlüsselten Daten zusammen übertragen. Zusätzlich werden die zu übertragende Daten mittels eines weiteren kryptographischen Sitzungsschlüssels des Kommunikationskanals verschlüsselt, welcher dem Unterkanal übergeordnet ist. Beispielsweise wird zusätzlich noch ein weiteren MAC der Daten unter Verwendung eines weiteren kryptographischen Authentisierungsschlüssels des entsprechenden Kommunikationskanals erzeugt und mit den verschlüsselten Daten zusammen übertragen. Gelangen die übertragenen Daten ans Ende des Kommunikationskanals, werden zuerst die Verschlüsslung des Kommunikationskanals entschlüsselt. Gelangen die übertragenen Daten dann ans Ende des Unterkanals wird auch noch die Verschlüsslung des Unterkanals entschlüsselt. Bei einer Übertragung über einen verschlüsselten Unterkanal innerhalb eines verschlüsselten Kommunikationskanals handelt es sich mithin um eine doppelte Verschlüsselung mit zwei voneinander unabhängigen Sitzungsschlüsseln. Unabhängig sind die Sitzungsschlüssel insofern, als dass sich aus einem Zugriff auf einen der beiden Sitzungsschlüssel kein automatischer Zugriff auf den anderen Sitzungsschlüssel ergibt.

Innerhalb des verschlüsselten Kommunikationskanals 160 wird ferner ein zweiter verschlüsselter Unterkanal 164 zwischen dem ID-Anwendungsprogramm 108 des mobilen Endgerät 100 und dem Personalisierungsserver 220 unter Vermittlung der Personalisierungskomponente des ID-Anwendungsprogramms aufgebaut. Der entsprechende zweite Unterkanal 164 ist beispielsweise ebenfalls mittels Ende-zu-Ende-Verschlüsselung verschlüsselt. Dieser zweite verschlüsselte Unterkanal 164 dient beispielsweise einer Kommunikation zwischen dem ID-Anwendungsprogramm 108, beispielsweise einer Kontrollkomponente des ID-Anwendungsprogramms 108, und dem Personalisierungsserver 220, beispielsweise zum Personalisieren des ID-Anwendungsprogramms 108 mit den aus dem ID-Token 200 ausgelesenen Attributen durch den Personalisierungsserver 220.

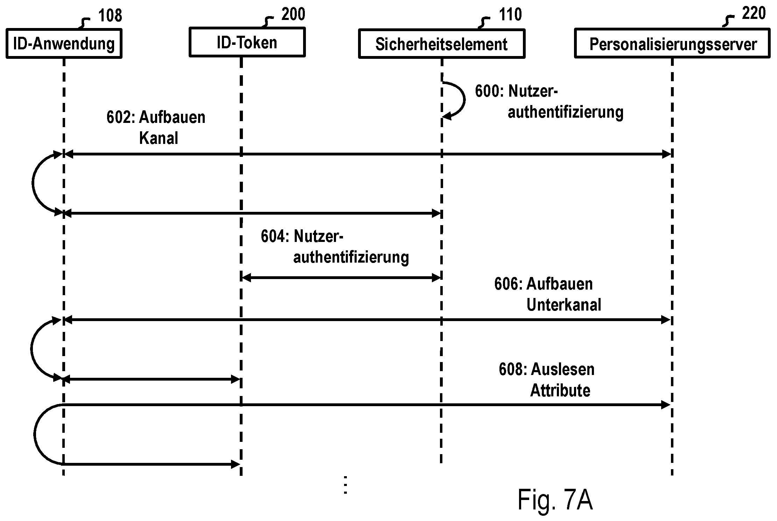

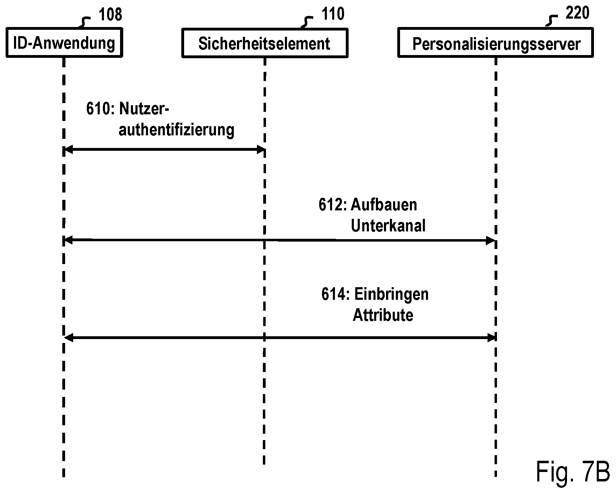

Figur 7 zeigt ein exemplarisches Verfahren zum Personalisieren eines ID-Anwendungsprogramms 108 auf einem mobilen Endgerät. Zunächst authentisiert sich ein Nutzer des mobilen Endgeräts in Schritt 600 gegenüber einem dafür konfigurierten Sicherheitselement 110 des mobilen Endgeräts 100. Beispielsweise sind in dem Sicherheitselement 110 Referenzwerte für ein oder mehrere Authentifizierungsfaktoren, wie etwa biometrische Merkmale oder eine PIN, eines auf dem mobilen Endgerät registrierten Nutzes hinterlegt. Im Zuge einer Nutzerauthentifizierung werden ein oder mehrere Authentifizierungsfaktoren des Nutzers erfasst und mit den Referenzwerten abgeglichen. Im Falle einer Übereinstimmung gilt der Nutzer beispielsweise als erfolgreich authentifiziert. In Schritt 602 wird ein verschlüsselter Kommunikationskanal zwischen dem mobilen Endgerät, beispielsweise dem Sicherheitselement 110 und dem Personalisierungsserver 220 aufgebaut. Dies umfasst beispielsweise ein gegenseitiges Authentifizieren von mobilem Endgerät bzw.

Sicherheitselement 110 und Personalisierungsserver 220, etwa mittels Challenge-Response-Verfahrens, sowie ein Aushandeln eines kryptographischen Schlüssels, beispielsweise eines kanalspezifischen ephemeren symmetrischen kryptographischen Sitzungsschlüssels, zum Verschlüsseln des Kommunikationskanals.

Beispielsweise wird zunächst ein erster initialer Zufallswert durch das mobile Endgerät bzw. das Sicherheitselement 110 erzeugt und an den Personalisierungsserver 220 gesendet. Nach dem Empfang des entsprechenden ersten initialen Zufallswerts erzeugt der Personalisierungsserver 220 einen zweiten initialen Zufallswert, welchen er an das mobile Endgerät sendet. Somit verfügen beide Teilnehmer, das mobile Endgerät sowie der Personalisierungsserver 220, über beide initialen Zufallswerte. Ferner sendet der Personalisierungsserver 220 beispielsweise sein Zertifikat an das mobile Endgerät und empfängt von dem mobilen Endgerät nach einer erfolgreichen Prüfung des entsprechenden Zertifikats ein Zertifikat des mobilen Endgeräts. Bei dem Zertifikat des mobilen Endgeräts kann es sich beispielsweise um ein dem ID-Anwendungsprogramm zugeordnetes Zertifikat handeln, etwa ein im Zuge der Provisionierung von dem Personalisierungsserver 220 für das ID-Anwendungsprogramm erstelltes Zertifikat. Das durch den Personalisierungsserver 220 empfangene Zertifikat des mobilen Endgeräts wird ebenfalls verifiziert. Die beiden Zertifikate umfassen dabei jeweils einen öffentlichen kryptographischen Schlüssel, d.h. das Zertifikat des Personalisierungsservers 220 umfasst einen öffentlichen kryptographischen Schlüssel eines asymmetrischen Schlüsselpaars des Personalisierungsservers 220 und das Zertifikat des mobilen Endgeräts umfasst einen öffentlichen kryptographischen Schlüssel eines asymmetrischen Schlüsselpaars des mobilen Endgeräts. Somit verfügen nun beide Teilnehmer jeweils über öffentliche kryptographische Schlüssel der Gegenseite, deren Authentizität jeweils durch ein Zertifikat belegt ist. Daraufhin erzeugt das mobile Endgerät beispielsweise den ersten Zufallswert, welchen es an den Personalisierungsserver 220 sendet. Somit verfügen nun beide Teilnehmer der Kommunikation jeweils über drei Zufallswerte, aus welchen beispielsweise der kanalspezifische ephemere symmetrische kryptographische Sitzungsschlüssel berechnet werden kann. Ferner sendet das mobile Endgerät beispielsweise eine Signatur einer, mehrerer oder aller vorangehenden im Zuge des Kanalaufbaus ausgetauschten Nachrichten an den Personalisierungsserver 220. Durch Prüfung der entsprechenden Signatur unter Verwendung des von dem Zertifikat des mobilen Endgeräts bereitgestellten öffentlichen kryptographischen Schlüssels als Signaturprüfschlüssel kann der Personalisierungsserver 220 das mobile Endgerät und/oder das ID-Anwendungsprogramm authentifizieren. Sendet im Folgenden der Personalisierungsserver 220 eine mit dem ersten kanalspezifischen ephemeren symmetrischen kryptographischen Sitzungsschlüssel verschlüsselte Nachricht an das mobile Endgerät, so wird dadurch auch der Personalisierungsserver 220 gegenüber dem mobilen Endgerät authentifiziert. Der Personalisierungsserver 220 kann den ersten kanalspezifischen ephemeren symmetrischen kryptographischen Sitzungsschlüssel nur berechnen, wenn er über einen privaten kryptographischen Schlüssel verfügt, mit welchem er den von dem mobilen Endgerät empfangenen ersten Zufallswert entschlüsseln kann. Somit ist nur der im Besitz des entsprechenden privaten kryptographischen Schlüssels befindliche Personalisierungsserver 220, welchem das Zertifikat des Personalisierungsservers 220 zugeordnet ist, zu einer verschlüsselten Kommunikation über den verschlüsselten Kommunikationskanal in der Lage.

Zum Freigeben eines Aufbauens eines ersten verschlüsselten Unterkanals wird in Schritt 604 der Nutzer des mobilen Endgeräts durch den ID-Token 200 unter Verwendung des mobilen Endgeräts bzw. des Sicherheitselements 110 authentifiziert. Beispielsweise erfolgt das Authentisieren des Nutzers gegenüber dem ID-Token 200 unter Verwendung des mobilen Endgeräts. Beispielsweise wird unter Verwendung der erfassten Authentifizierungsfaktors des Nutzers ein ephemerer symmetrischer kryptographischer Schlüssel abgeleitet. Das mobile Endgerät empfängt einen Zufallswert von dem ID-Token 200, welcher mit demselben ephemeren symmetrischen kryptographischen Schlüssel verschlüsselt ist. Den entsprechenden ephemeren symmetrischen kryptographischen Schlüssel leitet der ID-Token 200 beispielsweise aus einem Referenzwert für den Authentifizierungsfaktor ab oder der entsprechend abgeleitete ephemere symmetrische kryptographische Schlüssel ist auf dem ID-Token 200 gespeichert. Ist das mobile Endgerät dazu in der Lage, den empfangenen verschlüsselten Zufallswert korrekt zu entschlüsseln, stellt dies einen Nachweis dar, dass dem mobilen Endgerät der korrekte Authentifizierungsfaktor vorliegt. Das mobile Endgerät erzeugt ein ephemeres asymmetrisches Schlüsselpaar, dessen öffentlichen kryptographischen Schlüssel das mobile Endgerät an den ID-Token 200 sendet. Im Gegenzug empfängt das mobile Endgerät den öffentlichen kryptographischen Schlüssel des ID-Tokens 200. An dieser Stelle des Verfahrens sind mithin keine statischen kryptographischen Schlüssel notwendig, sondern es können ausschließlich zufallsbasiert erzeugte ephemere asymmetrische Schlüsselpaar verwendet werden. Das mobile Endgerät erzeugt unter Verwendung des entschlüsselten Zufallswerts, des ephemeren privaten kryptographischen Schlüssels des ID-Anwendungsprogramms sowie des ephemeren öffentlichen kryptographischen Schlüssels des ID-Tokens 200 ein mit dem ID-Token 200 geteiltes Geheimnis. Der ID-Token 200 ist ebenfalls dazu in der Lage, das entsprechende Geheimnis unter Verwendung des von ihm erzeugten Zufallswerts, des ephemeren privaten kryptographischen Schlüssels des ID-Tokens 200 sowie des von dem mobilen Endgerät empfangenen ephemeren öffentlichen kryptographischen Schlüssels des mobilen Endgeräts zu berechnen.

Das mobile Endgerät kann nun das so erzeugte geteilte Geheimnis zum Berechnen eines gemeinsamen Authentisierungsschlüssels zum gegenseitigen Authentisieren von ID-Anwendungsprogramm und ID-Token 200 verwenden. So kann beispielsweise das mobile Endgerät einen ersten Authentisierungstoken unter Verwendung des entsprechenden Authentisierungsschlüssels und des ephemeren öffentlichen kryptographischen Schlüssels des ID-Tokens 200 erzeugen. Der entsprechende Authentisierungstoken kann von dem mobilen Endgerät an das ID-Token 200 gesendet werden, welches den empfangenen Authentisierungstoken unter Verwendung des gemeinsamen Authentisierungsschlüssels und des ephemeren privaten kryptographischen Schlüssels des ID-Tokens 200 verifizieren kann. Somit kann sich das mobile Endgerät gegenüber dem ID-Token 200 authentisieren. Ebenso kann im Gegenzug der ID-Token 200 einen Authentisierungstoken an das mobile Endgerät senden. Das mobile Endgerät empfängt den Authentisierungstoken, welcher beispielsweise unter Verwendung des geteilten Geheimnisses sowie den ephemeren öffentlichen kryptographischen Schlüssel des mobilen Endgeräts erzeugt ist. Unter Verwendung des Authentisierungsschlüssels und des öffentlichen kryptographischen Schlüssels des ID-Anwendungsprogramms kann der Authentisierungstoken verifiziert werden.

In Schritt 606 wird auf eine erfolgreiche Authentifizierung des Nutzers in Schritt 604 hin ein erster verschlüsselter Unterkanal aufgebaut. Der Aufbau des ersten verschlüsselten Unterkanals umfasst beispielsweise ein gegenseitiges Authentisieren von ID-Token 200 und Personalisierungsserver 220 sowie ein Aushandeln eines kryptographischen Schlüssels zum Verschlüsseln des entsprechenden Unterkanals.

Beispielsweise wird zunächst der Personalisierungsserver 220 durch den ID-Token 200 in kryptographisch gesicherter Weise authentifiziert. Hierzu empfängt der ID-Token 200 beispielsweise ein Zertifikat des Personalisierungsservers 220, welches einen öffentlichen kryptographischen Schlüssel des Personalisierungsservers 220 zum Authentifizieren bereitstellt. Der ID-Token 200 verifiziert die Signatur des empfangenen Zertifikats. Beispielsweise wird das entsprechende Zertifikat als Teil einer Zertifikatskette empfangen, für deren Prüfung entsprechende Signaturprüfschlüssel, insbesondere Wurzelsignaturprüfschlüssel, auf dem ID-Token 200 hinterlegt sind. Somit kann der ID-Token 200 die Authentizität des bereitgestellten Zertifikats anhand der Zertifikatskette, beispielsweise einer PKI, verifizieren. Ferner empfängt der ID-Token 200 beispielsweise einen ephemeren öffentlichen kryptographischen Schlüssel des Personalisierungsservers 220. Beispielsweise empfängt der ID-Token 200 den ephemeren öffentlichen kryptographischen Schlüssel des Personalisierungsservers 220 in komprimierter Form. Im Gegenzug zum Empfang des Zertifikats des Personalisierungsservers 220 erzeugt der ID-Token 200 einen Zufallswert, welchen er als Challenge über den verschlüsselten Kommunikationskanal an den Personalisierungsserver 220 sendet. Der Personalisierungsserver 220 erstellt unter Verwendung eines privaten kryptographischen Schlüssels, welcher mit dem öffentlichen kryptographischen Schlüssel des zuvor bereitgestellten Zertifikats ein asymmetrisches Schlüsselpaar bildet, eine Signatur der Challenge als Response auf die Challenge. Beispielsweise wird zum Erzeugen der Response eine Datenkombination signiert, welche den Zufallswert als Challenge und den ephemeren öffentlichen kryptographischen Schlüssel des Personalisierungsservers 220, beispielsweise in komprimierter Form, umfasst. Der ID-Token 200 empfängt die entsprechende Signatur über den verschlüsselten Kommunikationskanal und prüft mit dem zuvor empfangenen öffentlichen kryptographischen Schlüssel des Personalisierungsservers 220 als Signaturprüfschlüssel. Hierzu verwendet der ID-Token 200 beispielsweise ferner den zuvor gesendeten Zufallswert sowie den zuvor als Challenge empfangenen ephemeren öffentlichen kryptographischen Schlüssel des Personalisierungsservers 220.

Anschließend authentisiert sich der ID-Token 200 in kryptographisch gesicherter Weise gegenüber dem Personalisierungsserver 220. Hierzu sendet der ID-Token 200 einen öffentlichen kryptographischen Schlüssel an den Personalisierungsserver 220. Dies erfolgt über den verschlüsselten Kommunikationskanal. Im Gegenzug empfängt der ID-Token 200 einen ephemeren öffentlichen kryptographischen Schlüssel des Personalisierungsservers 220 über den verschlüsselten Kommunikationskanal. Der ID-Token 200 berechnet ein mit dem Personalisierungsserver 220 geteiltes Geheimnis unter Verwendung des privaten kryptographischen Schlüssels des ID-Tokens 200 und des empfangen ephemeren öffentlichen kryptographischen Schlüssels des Personalisierungsservers 220. Der Personalisierungsserver 220 kann dasselbe geteilte Geheimnis unter Verwendung des öffentlichen kryptographischen Schlüssels des ID-Tokens 200 und des ephemeren privaten kryptographischen Schlüssels des Personalisierungsservers 220 berechnen. Der ID-Token 200 erzeugt einen Zufallswert, welchen er zum Berechnen eines gemeinsamen Authentisierungsschlüssels verwendet. Der Authentisierungsschlüssel dient zum Authentisieren von Daten, welche über den verschlüsselten Unterkanal gesendet werden. Den entsprechenden gemeinsamen Authentisierungsschlüssel erzeugt der ID-Token 200 unter Verwendung des Zufallswerts und des geteilten Geheimnisses. Ferner erzeugt der ID-Token 200 einen Authentisierungstoken unter Verwendung des entsprechenden Authentisierungsschlüssels und des ephemeren Schlüssels des Personalisierungsservers 220. Den so erzeugten Authentisierungstoken sendet der ID-Token 200 zusammen mit dem Zufallswert an den Personalisierungsserver 220 im Kommunikationskanal. Der Personalisierungsserver 220 wird durch den Empfang des Zufallswerts dazu in die Lage versetzt, ebenfalls den Authentisierungsschlüssel unter Verwendung des geteilten Geheimnisses zu berechnen. Mit diesem gemeinsamen Authentisierungsschlüssel und dem ephemeren öffentlichen kryptographischen Schlüssel des Personalisierungsservers 220 kann der Personalisierungsserver 220 den empfangenen Authentisierungstoken verifizieren. Ist die Verifikation erfolgreich, so ist auch der ID-Token 200 erfolgreich gegenüber dem Personalisierungsserver 220 authentisiert und eine erfolgreiche gegenseitige Authentisierung von ID-Token 200 und Personalisierungsserver 220 verwirklicht. Ferner kann der so berechnete gemeinsame Authentisierungsschlüssel zum Authentisieren von Daten verwendet werden, welche über den verschlüsselten Unterkanal zwischen ID-Token 200 und Personalisierungsserver 220 ausgetauscht werden.

Ferner können der ID-Token 200 und der Personalisierungsserver 220 jeweils für sich den kanalspezifischen ephemeren symmetrischen kryptographischen Sitzungsschlüssel zum Verschlüsseln des ersten Unterkanals unter Verwendung des geteilten Geheimnisses und des Zufallswerts erzeugen.

Den so aufgebauten ersten verschlüsselten Unterkanal zwischen dem Personalisierungsserver 220 und dem ID-Token 200 innerhalb des verschlüsselten Kommunikationskanal zwischen dem Personalisierungsserver 220 und dem mobilen Endgerät bzw. dem Sicherheitselement 110 verwendet der Personalisierungsserver 220 in Schritt 608 zum Auslesen der Attribute aus dem ID-Token 200 über das mobile Endgerät.

Zum Einbringen der ausgelesenen Attribute wird ein zweiter verschlüsselter Unterkanal zwischen dem ID-Anwendungsprogramm 108 und dem Personalisierungsserver 220 aufgebaut. In Schritt 610 erfolgt beispielsweise eine Authentifizierung des Nutzers durch das Sicherheitselement 110. Diese Authentifizierung des Nutzers durch das Sicherheitselement 110 ist beispielsweise eine Voraussetzung für eine Verwendung des ersten öffentlichen kryptographischen Schlüssels des ID-Anwendungsprogramms 108 im Zuge einer Authentifizierung des ID-Anwendungsprogramm 108 gegenüber dem Personalisierungsserver 220, beispielsweise im Zuge eines Challenge-Response-Verfahrens.

In Schritt 612 wird auf eine erfolgreiche Authentifizierung des Nutzers in Schritt 610 hin ein zweiter verschlüsselter Unterkanal aufgebaut. Beispielsweise kann die Authentifizierung des Nutzers gemäß Schritt 608 Bestandteil des Kanalaufbaus gemäß Schritt 610 sein. Der Aufbau des zweiten verschlüsselten Unterkanals umfasst beispielsweise ein gegenseitiges Authentisieren von ID-Anwendungsprogramm 108 und Personalisierungsserver 220 sowie ein Aushandeln eines kryptographischen Schlüssels zum Verschlüsseln des entsprechenden Unterkanals. Im Zuge des Authentisierens des ID-Anwendungsprogramms 108 ist beispielsweise die Nutzerauthentifizierung durch das Sicherheitselement 110 notwendig.

Zunächst wird beispielsweise der Personalisierungsserver 220 durch eine Kontrollkomponente des ID-Anwendungsprogramms 108 in kryptographisch gesicherter Weise authentifiziert. Hierzu empfängt die Kontrollkomponente des zu personalisierenden ID-Anwendungsprogramms 108 zunächst ein Zertifikat des Personalisierungsservers 220 über den verschlüsselten Kommunikationskanal empfängt. Das entsprechende Zertifikat kann von der Kontrollkomponente verifiziert werden. Beispielsweise wird das entsprechende Zertifikat als Teil einer Zertifikatskette bereitgestellt, welche die Kontrollkomponente mit hinterlegten Wurzelsignaturprüfschlüsseln verifizieren kann. Somit kann die Kontrollkomponente die Authentizität des bereitgestellten Zertifikats anhand der Zertifikatskette, beispielsweise einer PKI, verifizieren. Im Gegenzug zum Empfang des Zertifikats des Personalisierungsservers erzeugt das Sicherheitselement 112 einen Zufallswert und sendet den entsprechenden Zufallswert als Challenge an den Personalisierungsserver 220. In Antwort auf das Senden des Zufallswerts als Challenge empfängt das Sicherheitselement 112 über den verschlüsselten Kommunikationskanal von dem Personalisierungsserver 220 eine Signatur der Challenge als Response. Zum Erstellen der Signatur wird der private kryptographische Schlüssel des Personalisierungsservers 220 verwendet, welcher mit dem öffentlichen kryptographischen Schlüssel des zuvor bereitgestellten Zertifikats ein asymmetrisches Schlüsselpaar bildet. Beispielsweise wird zum Erzeugen der Response eine Datenkombination signiert. Die entsprechende Datenkombination umfasst beispielsweise den zuvor als Challenge gesendeten Zufallswert sowie den ephemeren öffentlichen kryptographischen Schlüssel des Personalisierungsservers 220, beispielsweise in komprimierter Form. Das Sicherheitselement 112 kann unter Verwendung des zuvor empfangenen öffentlichen kryptographischen Schlüssels des Personalisierungsservers 220 als Signaturprüfschlüssel die entsprechende Signatur prüfen. Hierzu verwendet das Sicherheitselement 112 beispielsweise ferner den ephemeren öffentlichen kryptographischen Schlüssel des Personalisierungsservers 220 und den zuvor als Challenge gesendeten Zufallswert. Ist die Signaturprüfung erfolgreich, so gilt der Personalisierungsserver 220 als erfolgreich authentifiziert.

Ferner empfängt die Kontrollkomponente einen ephemeren öffentlichen kryptographischen Schlüssel des Personalisierungsservers 220 und speichert diesen. Beispielsweise empfängt das Sicherheitselement 112 den ephemeren öffentlichen kryptographischen Schlüssel des Personalisierungsservers 220 in komprimierter Form. Beispielsweise empfängt das Sicherheitselement 112 den ephemeren öffentlichen kryptographischen Schlüssel des Personalisierungsservers 220 in nicht komprimierter Form.

Anschließend authentisiert sich das ID-Anwendungsprogramm 108 in kryptographisch gesicherter Weise gegenüber dem Personalisierungsserver 220. Hierzu verwendet das entsprechende zu personalisierende ID-Anwendungsprogramm 108 zunächst den in dem Sicherheitselement hinterlegten zweiten privaten kryptographischen Schlüssel des zweiten asymmetrischen Schlüsselpaars ID-Anwendungsprogramms 108. Der entsprechende zweite private kryptographische Schlüssel wird beispielsweise im Zuge der Provisionierung des ID-Anwendungsprogramms 108 von dem Sicherheitselements 110 erzeugt und gespeichert. Zum Authentisieren ID-Anwendungsprogramms 108 verwendet dieses beispielsweise den zum Zwecke des Authentisierens erzeugten ephemeren öffentlichen kryptographischen Schlüssel von dem Personalisierungsserver 220. Das ID-Anwendungsprogramm 108 sendet den zuvor empfangenen und von der Kontrollkomponente gespeicherten ephemeren öffentlichen kryptographischen Schlüssel des Personalisierungsserver 220 an das Sicherheitselement 110. Das Sicherheitselement 110 berechnet ein geteiltes Geheimnis unter Verwendung des zweiten privaten kryptographischen Schlüssels des ID-Anwendungsprogramms 108 und des empfangenen ephemeren öffentlichen kryptographischen Schlüssels des Personalisierungsservers 220. Das geteilte Geheimnis gibt das Sicherheitselement 110 an die Kontrollkomponente des ID-Anwendungsprogramms 108 aus. Die Kontrollkomponente verwendet einen Zufallswert zum Erzeugen eines gemeinsamen Authentisierungsschlüssels. Zum Erzeugen des entsprechenden gemeinsamen Authentisierungsschlüssels wird ferner das geteilte Geheimnis verwendet. Zudem erzeugt die Kontrollkomponente des ID-Anwendungsprogramms 108 einen Authentisierungstoken. Den entsprechenden Authentisierungstoken erzeugt die Kontrollkomponente unter Verwendung des zuvor empfangenen ephemeren öffentlichen kryptographischen Schlüssels des Personalisierungsservers 220 sowie des zuvor erzeugten gemeinsamen Authentisierungsschlüssels. Diesen Authentisierungstoken sendet die Kontrollkomponente des zu personalisierenden ID-Anwendungsprogramms 108 zusammen dem Zufallswert über den verschlüsselten Kommunikationskanal an den Personalisierungsserver 220. Der Personalisierungsserver 220 kann zunächst ebenfalls das geteilte Geheimnis berechnen. Hierzu verwendet der Personalisierungsserver 220 den zweiten öffentlichen kryptographischen Schlüssel des ID-Anwendungsprogramms 108, welcher dem Personalisierungsserver 220 bekannt ist. Dieser wurde beispielsweise im Zuge der Provisionierung des ID-Anwendungsprogramms 108 auf dem Personalisierungsserver 220 hinterlegt. Ferner verwendet der Personalisierungsserver 220 den ephemeren privaten kryptographischen Schlüssel des Personalisierungsservers 220 zum Berechnen des geteilten Geheimnisses. Mit dem entsprechenden geteilten Geheimnis ist der Personalisierungsserver 220 dazu in der Lage, den gemeinsamen Authentisierungsschlüssel zu berechnen. Hierzu verwendet der Personalisierungsserver 220 den empfangenen Zufallswert und das zuvor berechnete geteilte Geheimnis. Somit kann der Personalisierungsserver 220 den empfangenen Authentisierungstoken verifizieren unter Verwendung des gemeinsamen Authentisierungsschlüssels und des ephemeren öffentlichen kryptographischen Schlüssels des Personalisierungsservers 220.

Ferner können die Kontrollkomponente des ID-Anwendungsprogramms 108 und der Personalisierungsserver 220 jeweils für sich den kanalspezifischen ephemeren symmetrischen kryptographischen Sitzungsschlüssel zum Verschlüsseln des zweiten Unterkanals unter Verwendung des geteilten Geheimnisses und des Zufallswerts erzeugen. Den so aufgebauten zweiten verschlüsselten Unterkanal zwischen dem Personalisierungsserver 220 und dem ID-Anwendungsprogramm 108 innerhalb des verschlüsselten Kommunikationskanal verwendet der Personalisierungsserver 220 in Schritt 614 zum Einbringen der Attribute aus dem ID-Token 200 das in das mobile Endgerät zur Verwendung durch das ID-Anwendungsprogramm 108.

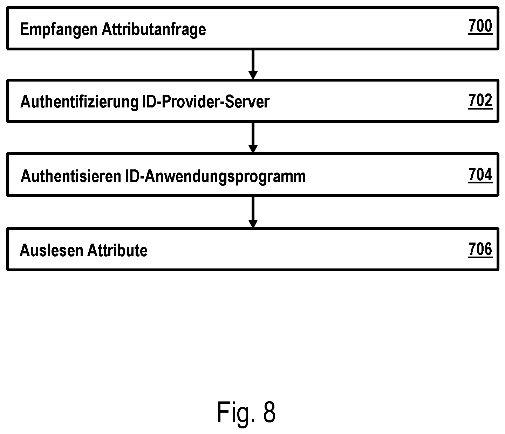

Figur 8 zeigt ein exemplarisches Verfahren zum Auslesen von Attributen einer von einem ID-Anwendungsprogramm auf einem mobilen Endgerät verwalteten elektronischen Identität eines Nutzers durch einen ID-Provider-Server. Im Zuge der Verwendung der elektronischen Identität wird zunächst beispielsweise ein verschlüsselter Kommunikationskanal zwischen dem mobilen Endgerät und dem ID-Provider-Server aufgebaut. In Block 700 empfängt das mobile Endgerät bzw. das ID-Anwendungsprogramm eine Leseanfrage des ID-Providers zum Auslesen ein oder mehrerer Attribute der elektronischen Identität. Beispielsweise identifiziert die Leseanfrage die auszulesenden Attribute. Ferner gibt die Leseanfrage beispielsweise an, wer die entsprechenden Attribute anfragt, d.h. an wen der ID-Provider-Server die entsprechenden Attribute weiterleiten wird, sowie deren Verwendungszweck. Diese Informationen, welche die Leseanfrage bereitstellt, werden beispielsweise auf eine Anzeigevorrichtung des mobilen Endgeräts für den Nutzer angezeigt, sodass dieser die entsprechenden Informationen prüfen kann. Ferner kann dem Nutzer des mobilen Endgeräts die Möglichkeit geboten werden, auszuwählen, welche der angefragten Attribute dem ID-Provider-Server tatsächlich zur Verfügung gestellt werden sollen und/oder weitere Attribute auszuwählen, welche dem ID-Provider-Server zusätzlich zur Verfügung gestellt werden sollen.

Zum kryptographisch gesicherten Auslesen der Attribute erfolgt in Block 702 eine Authentifizierung des ID-Provider-Servers durch das ID-Anwendungsprogramm. Das Authentifizieren des ID-Provider-Servers erfolgt beispielsweise unter Verwendung eines Challenge-Response-Verfahrens. Hierzu sendet die Kontrollkomponente eine Challenge, etwa ein Nonce bzw. einen Zufallswert, über den verschlüsselten Kommunikationskanal an den ID-Provider-Server. Der ID-Provider-Server erstellt eine Response auf die Challenge. Bei der Response handelt es sich um eine unter Verwendung eines privaten kryptographischen Schlüssels eines asymmetrischen Schlüsselpaars des ID-Provider-Servers erstellte Signatur der Challenge. Der ID-Provider-Server sendet die entsprechende Response an das mobile Endgerät, welches die Response empfängt. Die Kontrollkomponente des ID-Anwendungsprogramms verifiziert die empfangene Response unter Verwendung eines öffentlichen kryptographischen Schlüssels des asymmetrischen Schlüsselpaars des ID-Provider-Servers sowie der gesendeten Challenge. Im Zuge des Verifizierens wird geprüft, ob es sich bei der Response tatsächlich um eine Signatur der gesendeten Challenge unter Verwendung des privaten kryptographischen Schlüssels des ID-Provider-Servers handelt. Ferner empfängt das mobile Endgerät beispielsweise einen ephemeren öffentlichen kryptographischen Schlüssel eines ephemeren kryptographischen Schlüsselpaars des ID-Provider-Servers. Ist die Verifikation erfolgreich, d.h. der ID-Provider-Server erfolgreich durch das ID-Anwendungsprogramm authentifiziert, speichert das mobile Endgerät den empfangenen ephemeren öffentlichen kryptographischen Schlüssel des ID-Provider-Servers ab.

In Block 704 wird das ID-Anwendungsprogramm gegenüber dem ID-Provider-Server authentisiert. Für das Authentisieren des ID-Anwendungsprogramms gegenüber dem ID-Provider-Server verwendet eine Kontrollkomponente des ID-Anwendungsprogramm das Sicherheitselement des mobilen Endgeräts, welches die privaten kryptographischen Schlüssel des ID-Anwendungsprogramms verwaltet. Die Kontrollkomponente sendet beispielsweise eine Anfrage an das Sicherheitselement zum Erzeugen eines mit dem ID-Provider-Server geteilten Geheimnisses unter Verwendung des zweiten privaten kryptographischen Schlüssels des ID-Anwendungsprogramms. Mit der Anfrage stellt die Kontrollkomponente dem Sicherheitselement beispielsweise den ephemeren öffentlichen kryptographischen Schlüssel des ID-Provider-Servers zur Verfügung. Diesen ephemeren öffentlichen kryptographischen Schlüssel des ID-Provider-Servers hat die Kontrollkomponente beispielsweise zuvor im Zuge der Authentifizierung des ID-Provider-Servers empfangen. Voraussetzung für Verwenden des zweiten privaten kryptographischen Schlüssels des ID-Anwendungsprogramms und damit das Authentisieren des ID-Anwendungsprogramms des mobilen Endgeräts gegenüber dem ID-Provider-Server durch das Sicherheitselement ist beispielsweise eine erfolgreiche Authentisierung des Nutzers gegenüber dem Sicherheitselement. Der Nutzer erklärt mit der Authentisierung seine Zustimmung zu dem Auslesen der auszulesenden Attribute durch den ID-Provider-Server.

Das Sicherheitselement erzeugt unter Verwendung des zweiten privaten kryptographischen Schlüssels des ID-Anwendungsprogramms sowie des ephemeren öffentlichen kryptographischen Schlüssels des ID-Provider-Servers das angefragte Geheimnis und stellt dieses der Kontrollkomponente zur Verfügung. Die Kontrollkomponente verwendet das geteilte Geheimnis zum Erzeugen eines gemeinsamen Authentisierungsschlüssels zum Authentisieren von Daten, welche mit dem ID-Provider-Server ausgetauscht werden. Bei dem entsprechenden Authentisierungsschlüssel handelt es sich beispielsweise um einen symmetrischen kryptographischen Schlüssel. Zum Erzeugen des Authentisierungsschlüssels verwendet die Kontrollkomponente ferner einen Zufallswert. Dieser Zufallswert wird auf dem mobilen Endgerät, beispielsweise durch die Kontrollkomponente erzeugt. Unter Verwendung des Authentisierungsschlüssels und des ephemeren öffentlichen kryptographischen Schlüssels des ID-Provider-Servers erzeugt die Kontrollkomponente einen Authentisierungstoken. Bei dem Authentisierungsschlüssel handelt es sich beispielsweise um einen kryptographischen Schlüssel zum Erzeugen eines Message Authentication Codes, während es sich bei dem Authentisierungstoken um einen unter Verwendung des Authentisierungsschlüssels erzeugten MAC des ephemeren öffentlichen kryptographischen Schlüssels des ID-Provider-Servers handelt.

Ferner erzeugt die Kontrollkomponente einen ephemeren symmetrischen kryptographischen Sitzungsschlüssel unter Verwendung des geteilten Geheimnisses und des Zufallswerts zum Verschlüsseln der auszulesenden Attribute.

Den so erzeugten Authentisierungstoken sendet die Kontrollkomponente zum Authentisieren des ID-Anwendungsprogramms gegenüber dem ID-Provider-Server zusammen mit dem Zufallswert an den ID-Provider-Server. Unter Verwendung des von dem ID-Anwendungsprogramm bzw. von der Kontrollkomponente empfangenen Zufallswert kann der ID-Provider-Server ebenfalls den Authentisierungsschlüssel erzeugen. Das hierfür notwendige geteilte Geheimnis berechnet der ID-Provider-Server beispielsweise unter Verwendung eines ephemeren privaten kryptographischen Schlüssels des ephemeren asymmetrischen Schlüsselpaars des ID-Provider-Server sowie des öffentlichen kryptographischen Schlüssels des ID-Anwendungsprogramms. Unter Verwendung des Authentisierungsschlüssels sowie seines ephemeren öffentlichen kryptographischen Schlüssels kann der ID-Provider-Server den empfangenen Authentisierungstoken auf seine Gültigkeit hin prüfen.

Auf eine erfolgreiche gegenseitige Authentifizierung hin erfolgt in Block 706 ein Auslesen der auszulesenden Attribute aus dem mobilen Endgerät durch den ID-Provider-Server über das Netzwerk. Hierbei werden die Leseanfrage und/oder die auszulesenden Attribute mit dem erzeugten ephemeren symmetrischen kryptographischen Sitzungsschlüssel verschlüsselt. Mit dem Authentisierungsschlüssels werden Authentisierungstoken erzeugt, welche die Authentizität der Leseanfrage und/oder auszulesenden Attribute belegen. Der ID-Provider-Server kann sodann die ausgelesenen Attribute beispielsweise signieren und einem anfragenden Dienstanbieter zur Verfügung stellen. Der entsprechende Dienstanbieter kann die Authentizität der ihm bereitgestellten Attribute anhand der Signatur des ID-Provider-Servers prüfen.

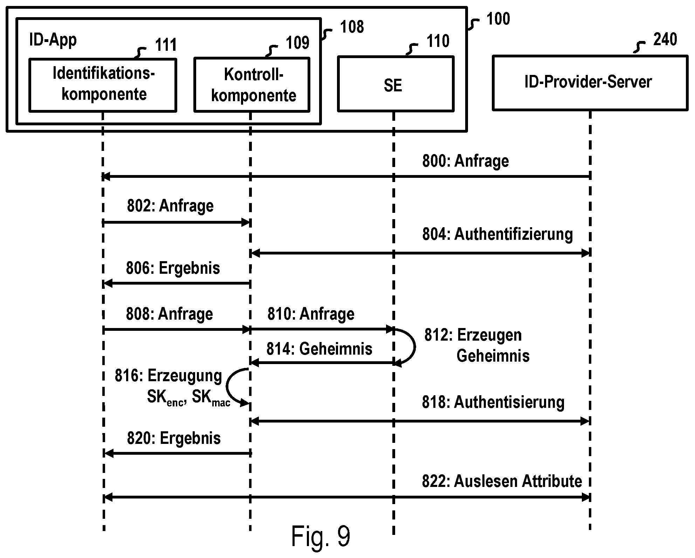

Figur 9 zeigt ein exemplarisches Verfahren zum Auslesen von Attributen einer von einem ID-Anwendungsprogramm 108 auf einem mobilen Endgerät 100 verwalteten elektronischen Identität eines Nutzers durch einen ID-Provider-Server 240. In Schritt 800 sendet ID-Provider-Server 240 eine Leseanfrage zum Auslesen ein oder mehrerer Attribute der elektronischen Identität an eine Identifikationskomponente 111 des ID-Anwendungsprogramms 108. Die Leseanfrage wird beispielsweise über einen zuvor aufgebaute verschlüsselte Kommunikationskanal zwischen dem mobilen Endgerät 100 und dem ID-Provider-Server 240 gesendet. Ferner gibt die Leseanfrage beispielsweise an, wer die entsprechenden Attribute anfragt, d.h. an wen der ID-Provider-Server 240 die entsprechenden Attribute weiterleiten wird, sowie deren Verwendungszweck. Diese Informationen, welche die Leseanfrage bereitstellt, werden beispielsweise auf eine Anzeigevorrichtung des mobilen Endgeräts 100 für den Nutzer angezeigt, sodass dieser die entsprechenden Informationen prüfen kann.

Ferner kann dem Nutzer des mobilen Endgeräts die Möglichkeit geboten werden, auszuwählen, welche der angefragten Attribute dem ID-Provider-Server 240 tatsächlich zur Verfügung gestellt werden sollen und/oder weitere Attribute auszuwählen, welche dem ID-Provider-Server zusätzlich zur Verfügung gestellt werden sollen.

In Schritt 802 sendet die Identifikationskomponente 111 eine Anfrage an eine Kontrollkomponente 109 des ID-Anwendungsprogramms 108 zum Initiieren einer Authentifizierung des ID-Provider-Server 240. In Schritt 804 erfolgt wird der ID-Provider-Server 240 durch die Kontrollkomponente 109 des ID-Anwendungsprogramms 108 authentifiziert. Das Authentifizieren des ID-Provider-Servers 240 erfolgt beispielsweise unter Verwendung eines Challenge-Response-Verfahrens. Hierzu sendet die Kontrollkomponente 109 eine Challenge, etwa ein Nonce bzw. einen Zufallswert, über den verschlüsselten Kommunikationskanal an den ID-Provider-Server 240. Der ID-Provider-Server 240 erstellt eine Response auf die Challenge. Bei der Response handelt es sich um eine unter Verwendung eines privaten kryptographischen Schlüssels eines asymmetrischen Schlüsselpaars des ID-Provider-Servers 240 erstellte Signatur der Challenge. Der ID-Provider-Server 240 sendet die entsprechende Response an das mobile Endgerät 100, welches die Response empfängt. Die Kontrollkomponente 109 des ID-Anwendungsprogramms 108 verifiziert die empfangene Response unter Verwendung eines öffentlichen kryptographischen Schlüssels des asymmetrischen Schlüsselpaars des ID-Provider-Servers 240 sowie der gesendeten Challenge. Im Zuge des Verifizierens wird geprüft, ob es sich bei der Response tatsächlich um eine Signatur der gesendeten Challenge unter Verwendung des privaten kryptographischen Schlüssels des ID-Provider-Servers 240 handelt. Ferner empfängt das mobile Endgerät 100 beispielsweise einen ephemeren öffentlichen kryptographischen Schlüssel eines ephemeren kryptographischen Schlüsselpaars des ID-Provider-Servers 240. Ist die Verifikation erfolgreich, d.h. der ID-Provider-Server 240 erfolgreich durch das ID-Anwendungsprogramm 108 authentifiziert, speichert das mobile Endgerät 100 den empfangenen ephemeren öffentlichen kryptographischen Schlüssel des ID-Provider-Servers 240 ab.

In Schritt 806 sendet die Kontrollkomponente 109 das Ergebnis der Authentifizierung des ID-Provider-Servers 240 an die Identifikationskomponente 111 des ID-Anwendungsprogramms 108. War die Authentifizierung des ID-Provider-Servers 240 erfolgreich, sendet die Identifikationskomponente 111 in Schritt 808 eine Authentisierungsanfrage zum Authentisieren des Anwendungsprogramms 108 and die Kontrollkomponente 109. Für das Authentisieren des ID-Anwendungsprogramms 108 gegenüber dem ID-Provider-Server 240 verwendet die Kontrollkomponente 111 das Sicherheitselement 110 des mobilen Endgeräts 100, welches die privaten kryptographischen Schlüssel des ID-Anwendungsprogramms 108 verwaltet. In Schritt 810 sendet die Kontrollkomponente 111 eine Anfrage an das Sicherheitselement 110 zum Erzeugen eines mit dem ID-Provider-Server 240 geteilten Geheimnisses unter Verwendung des zweiten privaten kryptographischen Schlüssels des ID-Anwendungsprogramms 108. Mit der Anfrage stellt die Kontrollkomponente 111 dem Sicherheitselement 110 beispielsweise den ephemeren öffentlichen kryptographischen Schlüssel des ID-Provider-Servers 240 zur Verfügung. Diesen ephemeren öffentlichen kryptographischen Schlüssel des ID-Provider-Servers 240 hat die Kontrollkomponente 111 beispielsweise zuvor im Zuge der Authentifizierung des ID-Provider-Servers 240 empfangen. Voraussetzung für Verwenden des zweiten privaten kryptographischen Schlüssels des ID-Anwendungsprogramms 108 und damit das Authentisieren des ID-Anwendungsprogramms 108 des mobilen Endgeräts 100 gegenüber dem ID-Provider-Server 240 durch das Sicherheitselement 110 ist beispielsweise eine erfolgreiche Authentisierung des Nutzers gegenüber dem Sicherheitselement 110. Der Nutzer erklärt mit der Authentisierung seine Zustimmung zu dem Auslesen der auszulesenden Attribute durch den ID-Provider-Server 240.

In Schritt 812 erzeugt das Sicherheitselement 110 unter Verwendung des zweiten privaten kryptographischen Schlüssels des ID-Anwendungsprogramms 108 sowie des ephemeren öffentlichen kryptographischen Schlüssels des ID-Provider-Servers 240 das angefragte Geheimnis. In Schritt 814 stellt das Sicherheitselement 110 der Kontrollkomponente 111 zur Verfügung. Die Kontrollkomponente 111 verwendet in Schritt 816 das geteilte Geheimnis zum Erzeugen eines gemeinsamen Authentisierungsschlüssels SK_{mac} zum Authentisieren von Daten, welche mit dem ID-Provider-Server 240 ausgetauscht werden. Bei dem entsprechenden Authentisierungsschlüssel SK_{mac} handelt es sich beispielsweise um einen symmetrischen kryptographischen Schlüssel. Zum Erzeugen des Authentisierungsschlüssels SK_{mac} verwendet die Kontrollkomponente 111 ferner einen Zufallswert. Dieser Zufallswert wird auf dem mobilen Endgerät 110, beispielsweise durch die Kontrollkomponente 111 erzeugt. Ferner erzeugt die Kontrollkomponente 111 einen ephemeren symmetrischen kryptographischen Sitzungsschlüssel SK_{enc} unter Verwendung des geteilten Geheimnisses und des Zufallswerts zum Verschlüsseln der auszulesenden Attribute.

In Schritt 818 verwendet die Kontrollkomponente den Authentisierungsschlüssel SK_{mac} und den ephemeren öffentlichen kryptographischen Schlüssel des ID-Provider-Servers 240 zum Erzeugen eines Authentisierungstoken. Bei dem Authentisierungsschlüssel SK_{mac} handelt es sich beispielsweise um einen kryptographischen Schlüssel zum Erzeugen eines Message Authentication Codes, während es sich bei dem Authentisierungstoken um einen unter Verwendung des Authentisierungsschlüssels erzeugten MAC des ephemeren öffentlichen kryptographischen Schlüssels des ID-Provider-Servers handelt.

Den so erzeugten Authentisierungstoken sendet die Kontrollkomponente 111 zum Authentisieren des ID-Anwendungsprogramms 108 gegenüber dem ID-Provider-Server 240 zusammen mit dem Zufallswert an den ID-Provider-Server 240. Unter Verwendung des von der Kontrollkomponente 111 empfangenen Zufallswert kann der ID-Provider-Server 240 ebenfalls den Authentisierungsschlüssel SK_{mac} erzeugen. Das hierfür notwendige geteilte Geheimnis berechnet der ID-Provider-Server 240 beispielsweise unter Verwendung eines ephemeren privaten kryptographischen Schlüssels des ephemeren asymmetrischen Schlüsselpaars des ID-Provider-Server 240 sowie des öffentlichen kryptographischen Schlüssels des ID-Anwendungsprogramms 108. Unter Verwendung des Authentisierungsschlüssels sowie seines ephemeren öffentlichen kryptographischen Schlüssels kann der ID-Provider-Server 240 den empfangenen Authentisierungstoken auf seine Gültigkeit hin prüfen. Ferner kann der ID-Provider-Server 240 den ephemeren symmetrischen kryptographischen Sitzungsschlüssel SK_{enc} unter Verwendung des geteilten Geheimnisses und des Zufallswerts erzeugen.

In Schritt 820 sendet die Kontrollkomponente 109 das Ergebnis der Authentisierung des ID-Anwendungsprogramms 108 gegenüber dem ID-Provider-Servers 240 an die Identifikationskomponente 111 des ID-Anwendungsprogramms 108. War die Authentisierung des ID-Anwendungsprogramms 108 erfolgreich, werden in Schritt 822 die auszulesenden Attribute von dem ID-Provider-Server 240 aus dem mobilen Endgerät 100 ausgelesen. Hierbei werden die Leseanfrage und/oder die auszulesenden Attribute mit dem erzeugten ephemeren symmetrischen kryptographischen Sitzungsschlüssel SK_{enc} verschlüsselt. Mit dem Authentisierungsschlüssels SK_{mac} werden Authentisierungstoken erzeugt, welche die Authentizität der Leseanfrage und/oder auszulesenden Attribute belegen. Beispielsweise wird die Leseanfrage in Form einer APDU ("Application Protocol Data Unit") gesendet.

Der ID-Provider-Server 240 kann die ausgelesenen Attribute beispielsweise signieren und einem anfragenden Dienstanbieter zur Verfügung stellen. Der entsprechende Dienstanbieter kann die Authentizität der ihm bereitgestellten Attribute anhand der Signatur des ID-Provider-Servers 240 prüfen.

### Bezugszeichenliste

- 100: mobiles Endgerät
- 102: Prozessor
- 104: Speicher
- 106: Betriebssystem
- 107: Provisionierungskomponente
- 108: ID-Anwendungsprogramm
- 109: Kontrollkomponente
- 110: Sicherheitselement
- 111: Identifikationskomponente
- 116: Nutzerschnittstelle
- 118: Authentifizierungssensor
- 120: Kommunikationsschnittstelle
- 150: Netzwerk
- 160: verschlüsselter Kommunikationskanal
- 162: verschlüsselter Unterkanal
- 164: verschlüsselter Unterkanal
- 170: System
- 200: ID-Token
- 202: Prozessor
- 204: Speicher
- 205: geschützter Speicherbereich
- 206: Attribute
- 208: Programminstruktionen
- 210: Kommunikationsschnittstelle
- 220: Personalisierungsserver
- 222: Prozessor
- 224: Speicher
- 226: Zertifikat
- 228: Programminstruktionen
- 230: Kommunikationsschnittstelle
- 240: ID-Provider-Server
- 242: Prozessor
- 244: Speicher
- 246: Zertifikat
- 248: Programminstruktionen
- 250: Kommunikationsschnittstelle
- 260: Service-Provider-Server
- 262: Prozessor
- 264: Speicher
- 266: Programminstruktionen
- 270: Kommunikationsschnittstelle

## Patentansprüche

1. Verfahren zum Erstellen einer kryptographisch abgesicherten elektronischen Identität eines Nutzers auf einem mobilen Endgerät (100), welches ein Sicherheitselement (110) umfasst, wobei auf dem mobilen Endgerät (100) ein ID-Anwendungsprogramm (108) zum Bereitstellen der elektronischen Identität installiert ist, wobei das ID-Anwendungsprogramm (108) eine Kontrollkomponente (109) zum Kontrollieren des Erstellens der elektronischen Identität umfasst, wobei das ID-Anwendungsprogramm (108) ferner eine Provisionierungskomponente (107) zum Ausführen eines Provisionierens des ID-Anwendungsprogramms (108) im Zuge des Erstellens der kryptographisch abgesicherten elektronischen Identität umfasst,
wobei das Provisionieren des ID-Anwendungsprogramms (108) umfasst:
• auf eine Sicherheitsinspektionsanfrage der Provisionierungskomponente (107) hin, Ausführen einer Remote-Sicherheitsinspektion der Sicherheitsinfrastruktur des mobilen Endgeräts (100) unter Verwendung der Kontrollkomponente (109) durch einen Personalisierungsserver (220) über ein Netzwerk (150),
• Empfangen eines Ergebnisses der Remote-Sicherheitsinspektion des Personalisierungsservers (220), welches die Kontrollkomponente (109) an die Provisionierungskomponente (107) weiterleitet,
• auf ein positives Ergebnis der Remote-Sicherheitsinspektion hin, Senden einer Schlüsselerzeugungsanfrage der Provisionierungskomponente (107) an die Kontrollkomponente (109), welche die Kontrollkomponente (109) an das Sicherheitselement (110) weiterleitet,
• in Antwort auf die Schlüsselerzeugungsanfrage, Erzeugen eines dem ID-Anwendungsprogramm (108) zugeordneten ersten asymmetrischen Schlüsselpaars und eines dem ID-Anwendungsprogramm (108) zugeordneten zweiten asymmetrischen Schlüsselpaars durch das Sicherheitselement (110), wobei das erste asymmetrische Schlüsselpaar einen ersten privaten kryptographischen Schlüssel und einen ersten öffentlichen kryptographischen Schlüssel umfasst, wobei das zweite asymmetrische Schlüsselpaar einen zweiten privaten kryptographischen Schlüssel und einen zweiten öffentlichen kryptographischen Schlüssel umfasst, wobei das Sicherheitselement (110) den ersten und zweiten öffentlichen kryptographischen Schlüssel an die Kontrollkomponente (109) sendet, welche die beiden öffentlichen kryptographischen Schlüssel an die Provisionierungskomponente (107) weiterleitet,
• auf einen Empfang der beiden öffentlichen kryptographischen Schlüssel hin, Erstellen einer Zertifikatsanfrage durch die Provisionierungskomponente (107) zum Erstellen eines den ersten öffentlichen kryptographischen Schlüssel umfassenden Zertifikats des ID-Anwendungsprogramms (108), wobei die Zertifikatsanfrage den ersten öffentlichen kryptographischen Schlüssel umfasst,
• Senden der Zertifikatsanfrage durch die Provisionierungskomponente (107) über das Netzwerk (150) an den Personalisierungsserver (220), wobei die Zertifikatsanfrage den ersten öffentlichen kryptographischen Schlüssel umfasst, wobei die Provisionierungskomponente (107) zusätzlich zu der Zertifikatsanfrage den zweiten öffentlichen kryptographischen Schlüssel an den Personalisierungsserver (220) sendet,
• in Antwort auf die Zertifikatsanfrage, Empfangen des von dem Personalisierungsserver (220) erstellten Zertifikats mit dem ersten öffentlichen kryptographischen Schlüssel sowie eines Wurzelzertifikats einer Wurzelinstanz einer PKI durch die Personalisierungskomponente,
• Speichern des Zertifikats des ID-Anwendungsprogramms (108) und des Wurzelzertifikats auf dem mobilen Endgerät (100),
wobei das Verfahren ferner ein Personalisieren des ID-Anwendungsprogramms (108) auf dem mobilen Endgerät (100) unter Verwendung eines ID-Tokens (200) umfasst, wobei das ID-Anwendungsprogramm (108) ferner eine Personalisierungskomponente zum Personalisieren des ID-Anwendungsprogramms (108) umfasst, wobei das Personalisieren umfasst:
• Aufbauen eines ersten verschlüsselten Kommunikationskanals (160) zwischen dem mobilen Endgerät (100) und dem Personalisierungsserver (220) über das Netzwerk (150), wobei zum Aufbauen des ersten verschlüsselten Kommunikationskanals (160) die Personalisierungskomponente verwendet wird,
• Aufbauen eines ersten verschlüsselten Unterkanals (162) zwischen dem ID-Token (200) und dem Personalisierungsserver (220) innerhalb des ersten verschlüsselten Kommunikationskanals (160) über das mobile Endgerät (100), wobei zum Aufbauen des ersten verschlüsselten Unterkanals (162) die Personalisierungskomponente verwendet wird
• Auslesen von ein oder mehreren der Attribute (206) aus dem ID-Token (200) durch den Personalisierungsserver (220) über den ersten verschlüsselten Unterkanal (162) innerhalb des ersten verschlüsselten Kommunikationskanals (160),
• Aufbauen eines zweiten verschlüsselten Unterkanals (164) zwischen der Kontrollkomponente (109) und dem Personalisierungsserver (220) innerhalb des ersten verschlüsselten Kommunikationskanals (160), wobei zum Aufbauen des zweiten verschlüsselten Unterkanals (164) die Personalisierungskomponente verwendet wird,
• Empfangen der ausgelesenen Attribute (206) durch die Kontrollkomponente (109) von dem Personalisierungsserver (220) über den zweiten verschlüsselten Unterkanal (164) innerhalb des ersten verschlüsselten Kommunikationskanals (160),
• Speichern der empfangenen Attribute (206) durch die Kontrollkomponente (109) auf dem mobilen Endgerät (100), wobei das ID-Anwendungsprogramm (108) dazu konfiguriert ist, die Attribute (206) zum Nachweis einer Identität des Nutzers gegenüber einem weiteren Computersystem zu verwenden.

2. Verfahren nach Anspruch 1, wobei die Personalisierungskomponente das Wurzelzertifikat zum Speichern an die Kontrollkomponente (109) weiterleitet und/oder
wobei das mobile Endgerät (100) ferner ein oder mehrere Authentifizierungssensoren (118) zum Erfassen von ein oder mehreren Authentifizierungsfaktoren des Nutzers umfasst, wobei der Nutzer auf dem mobilen Endgerät (100) registriert ist und in dem Sicherheitselement (110) ein oder mehrere Referenzwerte des registrierten Nutzers zum Verifizieren zumindest eines erfassten Authentifizierungsfaktors des registrierten Nutzers gespeichert sind,
wobei das Sicherheitselement (110) dazu konfiguriert ist, dass Voraussetzung für das Erzeugen des ersten asymmetrischen Schlüsselpaars eine erfolgreiche Authentisierung des Nutzers gegenüber dem Sicherheitselement (110) ist, wobei der Nutzer mit der Authentisierung eine Zustimmung zu der Erzeugung des ersten asymmetrischen Schlüsselpaars erklärt,
wobei das Sicherheitselement (110) ferner dazu konfiguriert ist, dass Voraussetzung für ein Verwenden des ersten privaten kryptographischen Schlüssels durch das Sicherheitselement (110) jeweils eine weitere erfolgreiche Authentisierung des Nutzers gegenüber dem Sicherheitselement (110) ist, wobei der Nutzer mit den weiteren Authentisierungen jeweils eine Zustimmung zu der entsprechenden Verwendung des ersten privaten kryptographischen Schlüssels erklärt, und/oder
wobei es sich bei dem Sicherheitselement (110) um ein gerätespezifisches Sicherheitselement (110) handelt, und/oder
wobei der erste verschlüsselte Kommunikationskanal (160) mit einem ersten kanalspezifischen ephemeren symmetrischen kryptographischen Sitzungsschlüssel verschlüsselt ist, wobei der erste verschlüsselte Unterkanal (162) mit einem zweiten kanalspezifischen ephemeren symmetrischen kryptographischen Sitzungsschlüssel verschlüsselt ist, wobei der zweite verschlüsselte Unterkanal (164) mit einem dritten kanalspezifischen ephemeren symmetrischen kryptographischen Sitzungsschlüssel verschlüsselt ist, und/oder
wobei das Personalisieren ferner umfasst:
• Erzeugen eines dem ID-Anwendungsprogramm (108) zugeordneten dritten asymmetrischen Schlüsselpaars durch das Sicherheitselement (110), wobei das dritte asymmetrische Schlüsselpaar einen dritten privaten kryptographischen Schlüssel und einen dritten öffentlichen kryptographischen Schlüssel umfasst, wobei das dritte asymmetrische Schlüsselpaar zu einem Authentisieren des ID-Anwendungsprogramms (108) im Zuge einer Verwendung der Attribute (206) dient, und/oder
wobei das Personalisieren ferner umfasst:
• Empfangen ein oder mehrere Wurzelsignaturprüfschlüssel durch die Kontrollkomponente (109) von dem Personalisierungsserver (220) über den zweiten verschlüsselten Unterkanal (164) innerhalb des ersten verschlüsselten Kommunikationskanals (160),
• Speichern der empfangenen Wurzelsignaturprüfschlüssel durch die Kontrollkomponente (109) auf dem mobilen Endgerät (100), wobei das ID-Anwendungsprogramm (108) dazu konfiguriert ist, die Wurzelsignaturprüfschlüssel zum Verifizieren von Zertifikatsignaturen ein oder mehrerer Wurzelinstanzen zu verwenden, welche Zertifikate aufweisen, die jeweils im Zuge eines Auslesens der Attribute (206) zum Authentisieren eines auslesenden Computersystems gegenüber dem ID-Anwendungsprogramm (108) verwendet werden, und/oder
wobei das Personalisieren ferner umfasst:
• Empfangen einer Signatur der Attribute (206) von dem Personalisierungsserver (220) durch die Kontrollkomponente (109) über den zweiten verschlüsselten Unterkanal (164) innerhalb des ersten verschlüsselten Kommunikationskanals (160), wobei die Signatur als Authentizitätsnachweis der Attribute (206) dient,
• Speichern der empfangenen Signatur der Attribute (206) durch die Kontrollkomponente (109) auf dem mobilen Endgerät (100).

3. Verfahren nach einem der vorangehenden Ansprüche, wobei das Aufbauen des ersten verschlüsselten Kommunikationskanals (160) ein Aushandeln des ersten kanalspezifischen ephemeren symmetrischen kryptographischen Sitzungsschlüssels umfasst.

4. Verfahren nach Anspruch 3, wobei das Aushandeln des ersten kanalspezifischen ephemeren symmetrischen kryptographischen Sitzungsschlüssels umfasst:
• Erzeugen eines ersten Zufallswerts durch das mobile Endgerät (100),
• Erzeugen des ersten kanalspezifischen ephemeren symmetrischen kryptographischen Sitzungsschlüssel unter Verwendung des ersten Zufallswerts durch das mobile Endgerät (100),
• Empfangen eines ersten Zertifikats des Personalisierungsservers (220) mit einem vierten öffentlichen kryptographischen Schlüssel eines vierten asymmetrischen kryptographischen Schlüsselpaars des Personalisierungsservers (220) durch das mobile Endgerät (100) von dem Personalisierungsserver (220),
• Verschlüsseln des ersten Zufallswerts unter Verwendung des empfangenen ersten öffentlichen kryptographischen Schlüssels des Personalisierungsservers (220) durch das mobile Endgerät (100),
• Senden des verschlüsselten ersten Zufallswerts an den Personalisierungsserver (220) durch das mobile Endgerät (100) zum Erzeugen des ersten kanalspezifischen ephemeren symmetrischen kryptographischen Sitzungsschlüssel durch den Personalisierungsserver (220).

5. Verfahren nach Anspruch 4, wobei das Aufbauen des ersten verschlüsselten Kommunikationskanals (160) ferner ein gegenseitiges Authentisieren des ID-Anwendungsprogramms (108) des mobilen Endgeräts (100) und des Personalisierungsservers (220) umfasst,
wobei das Sicherheitselement (110) insbesondere dazu konfiguriert ist, dass Voraussetzung für das Authentisieren des ID-Anwendungsprogramms (108) des mobilen Endgeräts (100) gegenüber dem Personalisierungsserver (220) eine erfolgreiche Authentisierung des Nutzers gegenüber dem Sicherheitselement (110) ist, wobei der Nutzer mit der Authentisierung eine Zustimmung zu dem Personalisieren des ID-Anwendungsprogramms (108) erklärt, und/oder
wobei das mobile Endgerät (100) zum Authentisieren gegenüber dem Personalisierungsserver (220) insbesondere das Zertifikat mit dem ersten öffentlichen kryptographischen Schlüssel des ID-Anwendungsprogramms (108) und eine von dem Sicherheitselement (110) mit dem ersten privaten kryptographischen Schlüssel des ID-Anwendungsprogramms (108) signierte Nachricht an den Personalisierungsserver (220) sendet.

6. Verfahren nach einem der vorangehenden Ansprüche, wobei das Aufbauen des ersten verschlüsselten Unterkanals (162) ein Authentisieren des Nutzers gegenüber dem ID-Token (200) über das mobile Endgerät (100) umfasst,
wobei das Authentisieren des Nutzers gegenüber dem ID-Token (200) insbesondere umfasst:
• Empfangen eines weiteren von den ein oder mehreren Authentifizierungssensoren (118) erfassten Authentifizierungsfaktors des Nutzers durch die Personalisierungskomponente,
• Erzeugen eines symmetrischen kryptographischen Schlüssels unter Verwendung des empfangenen weiteren Authentifizierungsfaktor,
• Empfangen eines verschlüsselten zweiten Zufallswert durch die Personalisierungskomponente von dem ID-Token (200), wobei der verschlüsselte zweite Zufallswert unter Verwendung des symmetrischen kryptographischen Schlüssels verschlüsselt ist, welchen der ID-Token (200) unter Verwendung eines in dem ID-Token (200) zum Verifizieren des weiteren Authentifizierungsfaktors gespeicherten weiteren Referenzwert des registrierten Nutzers erzeugt,
• Entschlüsseln des empfangenen verschlüsselten zweiten unter Verwendung des erzeugten symmetrischen kryptographischen Schlüssels,
• Erzeugen eines ersten ephemeren asymmetrischen kryptographischen Schlüsselpaars des ID-Anwendungsprogramms (108) durch das Sicherheitselement (110), welches einen ersten ephemeren privaten kryptographischen Schlüssel und einen ersten ephemeren öffentlichen kryptographischen Schlüssel des ID-Anwendungsprogramms (108) umfasst,
• Senden des ersten ephemeren öffentlichen kryptographischen Schlüssels des ID-Anwendungsprogramms (108) an den ID-Token (200),
• Empfangen eines ephemeren öffentlichen kryptographischen Schlüssels des ID-Tokens (200),
• Erzeugen eines mit dem ID-Token (200) geteilten ersten Geheimnisses durch das Sicherheitselement (110) unter Verwendung des entschlüsselten zweiten Zufallswerts, des ersten ephemeren privaten kryptographischen Schlüssels des ID-Anwendungsprogramms (108) und des ephemeren öffentlichen kryptographischen Schlüssels des ID-Tokens (200),
• Empfangen des geteilten ersten Geheimnisses durch die Kontrollkomponente (109),
• Erzeugen eines ersten gemeinsamen Authentisierungsschlüssel zum gegenseitigen Authentisieren von ID-Anwendungsprogramm (108) und ID-Token (200) durch die Kontrollkomponente (109) unter Verwendung des geteilten ersten Geheimnisses,
• Erzeugen eines ersten Authentisierungstoken unter Verwendung des ersten Authentisierungsschlüssels und des ersten ephemeren öffentlichen kryptographischen Schlüssels des ID-Tokens (200) durch die Kontrollkomponente (109),
• Senden des durch die Kontrollkomponente (109) erzeugten ersten Authentisierungstoken an den ID-Token (200) durch die Personalisierungskomponente,
• Empfangen eines zweiten Authentisierungstoken von dem ID-Token (200) durch die Personalisierungskomponente, welche das zweite Authentifizierungstoken an die Kontrollkomponente (109) weiterleitet,
• Verifizieren des empfangenen zweiten Authentisierungstoken durch die Kontrollkomponente (109) unter Verwendung des ersten Authentisierungsschlüssels und des ersten ephemeren öffentlichen kryptographischen Schlüssels des ID-Anwendungsprogramms (108).

7. Verfahren nach einem der vorangehenden Ansprüche, wobei das Aufbauen des ersten verschlüsselten Unterkanals (162) ein Authentifizieren des Personalisierungsservers (220) durch den ID-Token (200) über das mobile Endgerät (100) umfasst,
wobei das Authentifizieren des Personalisierungsservers (220) durch den ID-Token (200) insbesondere umfasst:
• Empfangen eines zweiten Zertifikats des Personalisierungsservers (220), welches einen zweiten öffentlichen kryptographischen Schlüssel eines zweiten asymmetrischen kryptographischen Schlüsselpaars des Personalisierungsservers (220) umfasst, über den ersten verschlüsselten Kommunikationskanal (160),
• Verifizieren einer Signatur des empfangenen zweiten Zertifikats des Personalisierungsservers (220),
• Erzeugen eines dritten Zufallswerts durch den ID-Token (200),
• Senden des dritten Zufallswerts als Challenge an den Personalisierungsserver (220) über den ersten verschlüsselten Kommunikationskanal (160),
• Empfangen einer ersten Signatur der Challenge als Response von dem Personalisierungsserver (220) über den ersten verschlüsselten Kommunikationskanal (160), wobei die Challenge unter Verwendung eines zweiten privaten kryptographischen Schlüssels des Personalisierungsservers (220) signiert ist,
• Verifizieren der empfangenen ersten Signatur unter Verwendung des zweiten öffentlichen kryptographischen Schlüssels des Personalisierungsservers (220) und des gesendeten dritten Zufallswerts.

8. Verfahren nach einem der vorangehenden Ansprüche, wobei das Aufbauen des ersten verschlüsselten Unterkanals (162) ein Authentisieren des ID-Tokens (200) gegenüber dem Personalisierungsserver (220) über das mobile Endgerät (100) umfasst,
wobei das Authentisieren des ID-Tokens (200) gegenüber Personalisierungsserver (220) insbesondere umfasst:
• Senden des öffentlichen kryptographischen Schlüssels des ID-Tokens (200) von dem ID-Token (200) über den ersten verschlüsselten Kommunikationskanal (160) an den Personalisierungsserver (220),
• Empfangenen eines zweiten ephemeren öffentlichen kryptographischen Schlüssels des Personalisierungsservers (220) durch den ID-Token (200) von dem Personalisierungsserver (220) über den ersten verschlüsselten Kommunikationskanal (160),
• Erzeugen eines mit dem Personalisierungsserver (220) geteilten zweiten Geheimnisses durch den ID-Token (200) unter Verwendung des privaten kryptographischen Schlüssels des ID-Tokens (200) und des zweiten ephemeren öffentlichen kryptographischen Schlüssels des Personalisierungsservers (220),
• Erzeugen eines vierten Zufallswerts durch den ID-Token (200),
• Erzeugen eines zweiten gemeinsamen Authentisierungsschlüssels zum Authentisieren von über den ersten verschlüsselten Unterkanal (162) gesendeten Daten durch den ID-Token (200), wobei der zweite gemeinsame Authentisierungsschlüssel unter Verwendung des geteilten zweiten Geheimnisses und des vierten Zufallswerts erzeugt wird,
• Erzeugen eines dritten Authentisierungstoken durch den ID-Token (200) unter Verwendung des zweiten Authentisierungsschlüssels und des zweiten ephemeren öffentlichen kryptographischen Schlüssels des Personalisierungsservers (220) zum Authentisieren des ID-Tokens (200) gegenüber dem Personalisierungsserver (220),
• Senden des vierten Zufallswerts zusammen mit dem dritten Authentisierungstoken zum Authentifizieren des ID-Tokens (200) durch den ID-Token (200) über den ersten verschlüsselten Kommunikationskanal (160) an den Personalisierungsserver (220).

9. Verfahren nach einem der vorangehenden Ansprüche, wobei das Aufbauen des zweiten verschlüsselten Unterkanals (164) ferner ein Authentifizieren des Personalisierungsservers (220) durch die Kontrollkomponente (109) umfasst,
wobei das Authentifizieren des Personalisierungsservers (220) durch die Kontrollkomponente (109) insbesondere umfasst:
• Senden einer Challenge der Kontrollkomponente (109) über den ersten verschlüsselten Kommunikationskanal (160) an den Personalisierungsserver (220),
• Empfangen einer Response des Personalisierungsservers (220) durch die Kontrollkomponente (109), wobei es sich bei der Response um eine unter Verwendung eines dritten privaten kryptographischen Schlüssels eines dritten asymmetrischen Schlüsselpaars des Personalisierungsservers (220) erstellte Signatur der Challenge handelt,
• Empfangen eines dritten ephemeren öffentlichen kryptographischen Schlüssels des Personalisierungsservers (220) durch die Kontrollkomponente (109),
• Verifizieren der empfangenen Response unter Verwendung eines dritten öffentlichen kryptographischen Schlüssels dritten asymmetrischen Schlüsselpaars des Personalisierungsservers (220) und der gesendeten Challenge,
• Speichern des dritten ephemeren öffentlichen kryptographischen Schlüssels des Personalisierungsservers (220) durch die Kontrollkomponente (109) auf dem mobilen Endgerät (100).

10. Verfahren nach einem der vorangehenden Ansprüche, wobei das Aufbauen des zweiten verschlüsselten Unterkanals (164) ferner ein Authentisieren der Kontrollkomponente (109) gegenüber dem Personalisierungsserver (220) umfasst.
wobei das Authentisieren des ID-Anwendungsprogramms (108) durch die Kontrollkomponente (109) gegenüber dem Personalisierungsserver (220) insbesondere umfasst:
• Senden einer Anfrage zum Erzeugen eines mit dem Personalisierungsserver (220) geteilten dritten Geheimnisses von der Kontrollkomponente (109) an das Sicherheitselement (110), wobei die Anfrage den dritten ephemeren öffentlichen kryptographischen Schlüssel des Personalisierungsservers (220) umfasst,
• in Antwort auf die Anfrage, Empfangen des von dem Sicherheitselement (110) erzeugten geteilten dritten Geheimnisses durch die Kontrollkomponente (109), wobei die Erzeugung des geteilten dritten Geheimnisses durch das Sicherheitselement (110) unter Verwendung des zweiten privaten kryptographischen Schlüssels des ID-Anwendungsprogramms (108) und des dritten ephemeren öffentlichen kryptographischen Schlüssels des Personalisierungsservers (220) erfolgt,
• Erzeugen eines sechsten Zufallswerts durch die Kontrollkomponente (109),
• Erzeugen eines dritten gemeinsamen Authentisierungsschlüssels zum Authentisieren von über den zweiten verschlüsselten Unterkanal (164) gesendeten Daten durch die Kontrollkomponente (109), wobei der dritte gemeinsame Authentisierungsschlüssel unter Verwendung des geteilten dritten Geheimnisses und des sechsten Zufallswerts erzeugt wird,
• Erzeugen eines vierten Authentisierungstoken durch die Kontrollkomponente (109) unter Verwendung des dritten Authentisierungsschlüssels und des dritten ephemeren öffentlichen kryptographischen Schlüssels des Personalisierungsservers (220) zum Authentisieren des ID-Anwendungsprogramms (108) gegenüber dem Personalisierungsserver (220),
• Senden des sechsten Zufallswerts zusammen mit dem vierten Authentisierungstoken zum Authentisieren des ID-Anwendungsprogramms (108) durch die Kontrollkomponente (109) über den ersten verschlüsselten Kommunikationskanal (160) an den Personalisierungsserver (220).

11. Verfahren nach einem der vorangehenden Ansprüche, wobei das Verfahren ferner ein Verwenden der kryptographisch abgesicherten elektronischen Identität umfasst, wobei ein oder mehrerer der eingebrachten Attribute (206) einem ID-Provider-Server (240) bereitgestellt werden, wobei das Verwenden umfasst:
• Aufbauen eines zweiten verschlüsselten Kommunikationskanals zwischen dem mobilen Endgerät (100) und dem ID-Provider-Server (240) über das Netzwerk (150),
• Empfangen einer Leseanfrage eines ID-Provider-Servers (240) zum Auslesen von ein oder mehreren der Attribute (206) der elektronischen Identität,
• Authentifizieren des ID-Provider-Servers (240) durch das ID-Anwendungsprogramm (108) unter Verwendung der Kontrollkomponente (109),
• Authentisieren des ID-Anwendungsprogramms (108) gegenüber dem ID-Provider-Server (240) durch das Sicherheitselement (110) unter Verwendung der Kontrollkomponente (109),
• Auslesen der auszulesenden Attribute (206) aus dem mobilen Endgerät (100) durch den ID-Provider-Server (240) über das Netzwerk (150) unter Verwendung der Kontrollkomponente (109).

12. Verfahren nach Anspruch 11, wobei das Authentifizieren des ID-Provider-Servers (240) unter Verwendung der Kontrollkomponente (109) umfasst:
• Senden einer Challenge der Kontrollkomponente (109) über den zweiten verschlüsselten Kommunikationskanal an den ID-Provider-Servers (240),
• Empfangen einer Response des ID-Provider-Servers (240) durch die Kontrollkomponente (109), wobei es sich bei der Response um eine unter Verwendung des privaten kryptographischen Schlüssels eines asymmetrischen Schlüsselpaars des ID-Provider-Servers (240) erstellte Signatur der Challenge handelt,
• Empfangen eines vierten ephemeren öffentlichen kryptographischen Schlüssels eines ephemeren Schlüsselpaars des ID-Provider-Servers (240) durch die Kontrollkomponente (109),
• Verifizieren der empfangenen Response unter Verwendung eines öffentlichen kryptographischen Schlüssels des asymmetrischen Schlüsselpaars des ID-Provider-Servers (240) und der gesendeten Challenge,
• Speichern des vierten ephemeren öffentlichen kryptographischen Schlüssels des ID-Provider-Servers (240) durch die Kontrollkomponente (109) auf dem mobilen Endgerät (100), und/oder
wobei das Authentisieren des ID-Anwendungsprogramms (108) gegenüber dem ID-Provider-Servers (240) durch das Sicherheitselement (110) unter Verwendung der Kontrollkomponente (109) umfasst:
• Senden einer Anfrage zum Erzeugen eines mit dem ID-Provider-Server (240) geteilten vierten Geheimnisses von der Kontrollkomponente (109) an das Sicherheitselement (110), wobei die Anfrage den vierten ephemeren öffentlichen kryptographischen Schlüssel des ID-Provider-Servers (240) umfasst,
• in Antwort auf die Anfrage, Empfangen des von dem Sicherheitselement (110) erzeugten geteilten vierten Geheimnisses durch die Kontrollkomponente (109), wobei die Erzeugung des geteilten vierten Geheimnisses durch das Sicherheitselement (110) unter Verwendung des ersten privaten kryptographischen Schlüssels des ID-Anwendungsprogramms (108) und des vierten ephemeren öffentlichen kryptographischen Schlüssels des ID-Provider-Servers (240) erfolgt,
• Erzeugen eines zehnten Zufallswerts durch die Kontrollkomponente (109),
• Erzeugen eines vierten gemeinsamen Authentisierungsschlüssels zum Authentisieren von Daten gegenüber dem ID-Provider-Server (240) durch die Kontrollkomponente (109), wobei der vierte gemeinsame Authentisierungsschlüssel unter Verwendung des geteilten vierten Geheimnisses und des zehnten Zufallswerts erzeugt wird,
• Erzeugen eines fünften Authentisierungstoken durch die Kontrollkomponente (109) unter Verwendung des vierten Authentisierungsschlüssels und des vierten ephemeren öffentlichen kryptographischen Schlüssels des ID-Provider-Servers (240) zum Authentisieren des ID-Anwendungsprogramms (108) gegenüber dem ID-Provider-Server (240),
• Senden des zehnten Zufallswerts zusammen mit dem fünften Authentisierungstoken zum Authentisieren des ID-Anwendungsprogramms (108) durch die Kontrollkomponente (109) über den zweiten verschlüsselten Kommunikationskanal an den ID-Provider-Server (240) , und/oder
wobei das Sicherheitselement (110) dazu konfiguriert ist, dass Voraussetzung für das Authentisieren des ID-Anwendungsprogramms (108) des mobilen Endgeräts (100) gegenüber dem ID-Provider-Server (240) durch das Sicherheitselement (110) eine erfolgreiche Authentisierung des Nutzers gegenüber dem Sicherheitselement (110) ist, wobei der Nutzer mit der Authentisierung eine Zustimmung zu dem Auslesen der auszulesenden Attribute (206) durch den ID-Provider-Server (240) erklärt.

13. Mobiles Endgerät (100), wobei das mobile Endgerät (100) einen Prozessor (102) und einen Speicher (104) umfasst, wobei in dem Speicher (104) ein ID-Anwendungsprogramm (108) zum Bereitstellen einer elektronischen Identität gespeichert ist, wobei der Prozessor (102) dazu konfiguriert ist, ein Verfahren zum Erstellen einer kryptographisch abgesicherten elektronischen Identität eines Nutzers auf einem mobilen Endgerät (100) auszuführen,
wobei das ID-Anwendungsprogramm (108) eine Kontrollkomponente (109) zum Kontrollieren des Erstellens der elektronischen Identität umfasst, wobei das ID-Anwendungsprogramm (108) ferner eine Provisionierungskomponente (107) zum Ausführen eines Provisionierens des ID-Anwendungsprogramms (108) im Zuge des Erstellens der kryptographisch abgesicherten elektronischen Identität umfasst,
wobei das mobile Endgerät (100) ferner ein Sicherheitselement (110) umfasst, wobei das mobile Endgerät (100) ferner eine Kommunikationsschnittstelle (120) zur Kommunikation über ein Netzwerk (150) mit einem Personalisierungsserver (220) umfasst,
wobei das Provisionieren des ID-Anwendungsprogramms (108) umfasst:
• auf eine Sicherheitsinspektionsanfrage der Provisionierungskomponente (107) hin, Ausführen einer Remote-Sicherheitsinspektion der Sicherheitsinfrastruktur des mobilen Endgeräts (100) unter Verwendung der Kontrollkomponente (109) durch einen Personalisierungsserver (220) über ein Netzwerk (150),
• Empfangen eines Ergebnisses der Remote-Sicherheitsinspektion des Personalisierungsservers (220), welches die Kontrollkomponente (109) an die Provisionierungskomponente (107) weiterleitet,
• auf ein positives Ergebnis der Remote-Sicherheitsinspektion hin, Senden einer Schlüsselerzeugungsanfrage der Provisionierungskomponente (107) an die Kontrollkomponente (109), welche die Kontrollkomponente (109) an das Sicherheitselement (110) weiterleitet,
• in Antwort auf die Schlüsselerzeugungsanfrage, Erzeugen eines dem ID-Anwendungsprogramm (108) zugeordneten ersten asymmetrischen Schlüsselpaars und eines dem ID-Anwendungsprogramm (108) zugeordneten zweiten asymmetrischen Schlüsselpaars durch das Sicherheitselement (110), wobei das erste asymmetrische Schlüsselpaar einen ersten privaten kryptographischen Schlüssel und einen ersten öffentlichen kryptographischen Schlüssel umfasst, wobei das zweite asymmetrische Schlüsselpaar einen zweiten privaten kryptographischen Schlüssel und einen zweiten öffentlichen kryptographischen Schlüssel umfasst, wobei das Sicherheitselement (110) den ersten und zweiten öffentlichen kryptographischen Schlüssel an die Kontrollkomponente (109) sendet, welche die beiden öffentlichen kryptographischen Schlüssel an die Provisionierungskomponente (107) weiterleitet,
• auf einen Empfang der beiden öffentlichen kryptographischen Schlüssel hin, Erstellen einer Zertifikatsanfrage durch die Provisionierungskomponente (107) zum Erstellen eines den ersten öffentlichen kryptographischen Schlüssel umfassenden Zertifikats des ID-Anwendungsprogramms (108), wobei die Zertifikatsanfrage den ersten öffentlichen kryptographischen Schlüssel umfasst,
• Senden der Zertifikatsanfrage durch die Provisionierungskomponente (107) über das Netzwerk (150) an den Personalisierungsserver (220), wobei die Zertifikatsanfrage den ersten öffentlichen kryptographischen Schlüssel umfasst, wobei die Provisionierungskomponente (107) zusätzlich zu der Zertifikatsanfrage den zweiten öffentlichen kryptographischen Schlüssel an den Personalisierungsserver (220) sendet,
• in Antwort auf die Zertifikatsanfrage, Empfangen des von dem Personalisierungsserver (220) erstellten Zertifikats mit dem ersten öffentlichen kryptographischen Schlüssel sowie eines Wurzelzertifikats einer Wurzelinstanz einer PKI durch die Personalisierungskomponente,
• Speichern des Zertifikats des ID-Anwendungsprogramms (108) und des Wurzelzertifikats auf dem mobilen Endgerät (100),
wobei das Erstellen der kryptographisch abgesicherten elektronischen Identität ferner ein Personalisieren des ID-Anwendungsprogramms (108) auf dem mobilen Endgerät (100) unter Verwendung eines ID-Tokens (200) umfasst, wobei das ID-Anwendungsprogramm (108) ferner eine Personalisierungskomponente zum Ausführen eines Personalisierens des ID-Anwendungsprogramms (108) im Zuge des Erstellens der kryptographisch abgesicherten elektronischen Identität umfasst,
wobei das Personalisieren umfasst:
• Aufbauen eines verschlüsselten Kommunikationskanals (160) zwischen dem mobilen Endgerät (100) und dem Personalisierungsserver (220) über das Netzwerk (150), wobei zum Aufbauen des verschlüsselten Kommunikationskanals (160) die Personalisierungskomponente verwendet wird,
• Aufbauen eines ersten verschlüsselten Unterkanals (162) zwischen dem ID-Token (200) und dem Personalisierungsserver (220) innerhalb des verschlüsselten Kommunikationskanals (160) über das mobile Endgerät (100), wobei zum Aufbauen des ersten verschlüsselten Unterkanals (162) die Personalisierungskomponente verwendet wird
• Auslesen von ein oder mehreren der Attribute (206) aus dem ID-Token (200) durch den Personalisierungsserver (220) über den ersten verschlüsselten Unterkanal (164) innerhalb des verschlüsselten Kommunikationskanals (160),
• Aufbauen eines zweiten verschlüsselten Unterkanals (164) zwischen der Kontrollkomponente (109) und dem Personalisierungsserver (220) innerhalb des verschlüsselten Kommunikationskanals, wobei zum Aufbauen des zweiten verschlüsselten Unterkanals (164) die Personalisierungskomponente verwendet wird,
• Empfangen der ausgelesenen Attribute (206) durch die Kontrollkomponente (109) von dem Personalisierungsserver (220) über den zweiten verschlüsselten Unterkanal (164) innerhalb des verschlüsselten Kommunikationskanals (160),
• Speichern der empfangenen Attribute (206) durch die Kontrollkomponente (109) auf dem mobilen Endgerät (100), wobei das ID-Anwendungsprogramm (108) dazu konfiguriert ist, die Attribute (206) zum Nachweis einer Identität des Nutzers gegenüber einem weiteren Computersystem zu verwenden.

14. System (170), wobei das System (170) ein mobiles Endgerät (100) nach Anspruch 13 sowie einen Personalisierungsserver (220) umfasst, wobei der Personalisierungsserver (220) konfiguriert ist zum Ausführen einer Remote-Sicherheitsinspektion der Sicherheitsinfrastruktur des mobilen Endgeräts (100) über das Netzwerk (150), zum Empfangen der Zertifikatsanfrage mit dem von dem Sicherheitselement (110) des mobilen Endgeräts (100) erzeugten ersten öffentlichen kryptographischen Schlüssel, zum Empfangen des von dem Sicherheitselement (110) des mobilen Endgeräts (100) erzeugten zweiten öffentlichen kryptographischen Schlüssel, zum Erstellen eines Zertifikats mit dem ersten öffentlichen kryptographischen Schlüssel, zum Bereitstellen eines Wurzelzertifikats einer Wurzelinstanz einer PKI, und zum Auslesen von Attributen (206) aus einem ID-Token (200) über das mobile Endgerät (100) und zum Personalisieren des ID-Anwendungsprogramms (108) des mobilen Endgeräts (100).

15. System (170) nach Anspruch 14, wobei das System (170) ferner den ID-Token (200) umfasst, in welchem die auszulesenden Attribute (206) gespeichert sind, und/oder
wobei das System (170) ferner einen ID-Provider-Server (240) umfasst, wobei der ID-Provider-Server (240) konfiguriert ist zum Erstellen einer Leseanfrage zum Auslesen von ein oder mehreren der Attribute (206) der von dem ID-Anwendungsprogramm (108) bereitgestellten elektronischen Identität, zum Senden der Leseanfrage an das mobile Endgerät (100) zum Authentisieren gegenüber der ID-Anwendungsprogramm (108), zum Authentifizieren des ID-Anwendungsprogramms (108) und zum Auslesen der auszulesenden Attribute (206) aus dem mobilen Endgerät (100) über das Netzwerk (150).

## Claims

1. Method for creating a cryptographically secured electronic identity of a user on a mobile device (100) which comprises a security element (110), wherein an ID application program (108) for providing the electronic identity is installed on the mobile device (100), wherein the ID application program (108) comprises a control component (109) for controlling the creation of the electronic identity, wherein the ID application program (108) further comprises a provisioning component (107) for executing a provisioning of the ID application program (108) in the course of the creation of the cryptographically secured electronic identity,
wherein the provisioning of the ID application program (108) comprises:
• in response to a security inspection request from the provisioning component (107), performing a remote security inspection of the security infrastructure of the mobile device (100) using the control component (109) by a personalization server (220) over a network (150),
• receiving a result of the remote security inspection of the personalization server (220), which the control component (109) forwards to the provisioning component (107),
• upon a positive result of the remote security inspection, sending a key generation request from the provisioning component (107) to the control component (109), which forwards the control component (109) to the security element (110),
• in response to the key generation request, generating by the security element (110) a first asymmetric key pair associated with the ID application program (108) and a second asymmetric key pair associated with the ID application program (108), wherein the first asymmetric key pair comprises a first private cryptographic key and a first public cryptographic key, wherein the second asymmetric key pair comprises a second private cryptographic key and a second public cryptographic key, wherein the security element (110) sends the first and second public cryptographic keys to the control component (109), which forwards the two public cryptographic keys to the provisioning component (107),
• upon receipt of the two public cryptographic keys, generating a certificate request by the provisioning component (107) for generating a certificate of the ID application program (108) comprising the first public cryptographic key, wherein the certificate request comprises the first public cryptographic key,
• sending the certificate request by the provisioning component (107) over the network (150) to the personalization server (220), wherein the certificate request comprises the first public cryptographic key, wherein the provisioning component (107) sends the second public cryptographic key to the personalization server (220) in addition to the certificate request,
• in response to the certificate request, receiving the certificate generated by the personalization server (220) with the first public cryptographic key and a root certificate of a root instance of a PKI by the personalization component,
• storing the certificate of the ID application program (108) and the root certificate on the mobile device (100),
wherein the method further comprises personalizing the ID application program (108) on the mobile device (100) using an ID token (200), wherein the ID application program (108) further comprises a personalization component for personalizing the ID application program (108), wherein the personalizing comprises:
• establishing a first encrypted communication channel (160) between the mobile device (100) and the personalization server (220) over the network (150), wherein the personalization component is used to establish the first encrypted communication channel (160),
• establishing a first encrypted sub-channel (162) between the ID token (200) and the personalization server (220) within the first encrypted communication channel (160) via the mobile device (100), wherein the personalization component is used to establish the first encrypted sub-channel (162)
• reading one or more of the attributes (206) from the ID token (200) by the personalization server (220) via the first encrypted sub-channel (162) within the first encrypted communication channel (160),
• establishing a second encrypted sub-channel (164) between the control component (109) and the personalization server (220) within the first encrypted communication channel (160), wherein the personalization component is used to establish the second encrypted sub-channel (164),
• receiving the read attributes (206) by the control component (109) from the personalization server (220) via the second encrypted sub-channel (164) within the first encrypted communication channel (160),
• storing the received attributes (206) by the control component (109) on the mobile device (100), wherein the ID application program (108) is configured to use the attributes (206) to prove an identity of the user to another computer system.

2. Method according to claim 1, wherein the personalization component forwards the root certificate to the control component (109) for storage, and/or
wherein the mobile device (100) further comprises one or more authentication sensors (118) for detecting one or more authentication factors of the user, wherein the user is registered on the mobile device (100) and one or more reference values of the registered user are stored in the security element (110) for verifying at least one detected authentication factor of the registered user,
wherein the security element (110) is configured such that a prerequisite for the generation of the first asymmetric key pair is a successful authentication of the user to the security element (110), wherein the user declares consent to the generation of the first asymmetric key pair with the authentication,
wherein the security element (110) is further configured so that a prerequisite for use of the first private cryptographic key by the security element (110) is in each case a further successful authentication of the user to the security element (110), wherein the user declares in each case with the further authentications consent to the corresponding use of the first private cryptographic key, and/or
wherein the security element (110) is a device-specific security element (110), and/or
wherein the first encrypted communication channel (160) is encrypted with a first channel-specific ephemeral symmetric cryptographic session key, wherein the first encrypted sub-channel (162) is encrypted with a second channel-specific ephemeral symmetric cryptographic session key, wherein the second encrypted sub-channel (164) is encrypted with a third channel-specific ephemeral symmetric cryptographic session key, and/or
wherein the personalizing further comprises:
• generating, by the security element (110), a third asymmetric key pair associated with the ID application program (108), wherein the third asymmetric key pair comprises a third private cryptographic key and a third public cryptographic key, wherein the third asymmetric key pair is for authenticating the ID application program (108) in the course of using the attributes (206), and/or
wherein the personalizing further comprises:
• receiving, by the control component (109), one or more root signature verification keys from the personalization server (220) via the second encrypted sub-channel (164) within the first encrypted communication channel (160),
• storing the received root signature verification keys by the control component (109) on the mobile device (100), wherein the ID application program (108) is configured to use the root signature verification keys for verifying certificate signatures of one or more root instances having certificates each used in the course of a readout of the attributes (206) for authenticating a readout computer system to the ID application program (108), and/or
wherein the personalizing further comprises:
• receiving a signature of the attributes (206) from the personalization server (220) by the control component (109) via the second encrypted sub-channel (164) within the first encrypted communication channel (160), wherein the signature serves as proof of authenticity of the attributes (206),
• storing the received signature of the attributes (206) by the control component (109) on the mobile device (100).

3. Method according to any one of the preceding claims, wherein establishing the first encrypted communication channel (160) comprises negotiating the first channel-specific ephemeral symmetric cryptographic session key.

4. Method according to claim 3, wherein negotiating the first channel-specific ephemeral symmetric cryptographic session key comprises:
• generating a first random value by the mobile device (100),
• generating the first channel-specific ephemeral symmetric cryptographic session key using the first random value by the mobile device (100),
• receiving a first certificate of the personalization server (220) with a fourth public cryptographic key of a fourth asymmetric cryptographic key pair of the personalization server (220) by the mobile device (100) from the personalization server (220),
• encrypting the first random value using the received first public cryptographic key of the personalization server (220) by the mobile device (100),
• sending the encrypted first random value to the personalization server (220) by the mobile device (100) for generating the first channel-specific ephemeral symmetric cryptographic session key by the personalization server (220).

5. Method according to claim 4, wherein establishing the first encrypted communication channel (160) further comprises a mutual authentication of the ID application program (108) of the mobile device (100) and the personalization server (220),
wherein the security element (110) is configured in particular such that a prerequisite for authenticating the ID application program (108) of the mobile device (100) to the personalization server (220) is a successful authentication of the user to the security element (110), wherein the user declares consent to the personalization of the ID application program (108) with the authentication, and/or
wherein the mobile device (100) for authenticating to the personalization server (220) sends in particular the certificate with the first public cryptographic key of the ID application program (108) and a message signed by the security element (110) with the first private cryptographic key of the ID application program (108) to the personalization server (220).

6. Method according to any one of the preceding claims, wherein establishing the first encrypted sub-channel (162) comprises authenticating the user to the ID token (200) via the mobile device (100),
wherein authenticating the user to the ID token (200) in particular comprises:
• receiving, by the personalization component, a further authentication factor of the user detected by the one or more authentication sensors (118),
• generating a symmetric cryptographic key using the received further authentication factor,
• receiving an encrypted second random value by the personalization component from the ID token (200), wherein the encrypted second random value is encrypted using the symmetric cryptographic key generated by the ID token (200) using a further reference value of the registered user stored in the ID token (200) for verifying the further authentication factor,
• decrypting the received encrypted second random value using the generated symmetric cryptographic key,
• generating a first ephemeral asymmetric cryptographic key pair of the ID application program (108) by the security element (110) comprising a first ephemeral private cryptographic key and a first ephemeral public cryptographic key of the ID application program (108),
• sending the first ephemeral public cryptographic key of the ID application program (108) to the ID token (200),
• receiving an ephemeral public cryptographic key of the ID token (200),
• generating a first secret shared with the ID token (200) by the security element (110) using the decrypted second random value, the first ephemeral private cryptographic key of the ID application program (108) and the ephemeral public cryptographic key of the ID token (200),
• receiving the shared first secret by the control component (109),
• generating a first shared authentication key for mutually authenticating the ID application program (108) and the ID token (200) by the control component (109) using the shared first secret,
• generating a first authentication token using the first authentication key and the first ephemeral public cryptographic key of the ID token (200) by the control component (109),
• sending the first authentication token generated by the control component (109) to the ID token (200) by the personalization component,
• receiving a second authentication token from the ID token (200) by the personalization component, which forwards the second authentication token to the control component (109),
• verifying the received second authentication token by the control component (109) using the first authentication key and the first ephemeral public cryptographic key of the ID application program (108).

7. Method according to any one of the preceding claims, wherein establishing the first encrypted sub-channel (162) comprises authenticating the personalization server (220) by the ID token (200) via the mobile device (100),
wherein authenticating the personalization server (220) by the ID token (200) in particular comprises:
• receiving a second certificate of the personalization server (220), comprising a second public cryptographic key of a second asymmetric cryptographic key pair of the personalization server (220), via the first encrypted communication channel (160),
• verifying a signature of the received second certificate of the personalization server (220),
• generating a third random value by the ID token (200),
• sending the third random value as a challenge to the personalization server (220) via the first encrypted communication channel (160),
• receiving a first signature of the challenge as a response from the personalization server (220) via the first encrypted communication channel (160), wherein the challenge is signed using a second private cryptographic key of the personalization server (220),
• verifying the received first signature using the second public cryptographic key of the personalization server (220) and the sent third random value.

8. Method according to any one of the preceding claims, wherein establishing the first encrypted sub-channel (162) comprises authenticating the ID token (200) to the personalization server (220) via the mobile device (100),
wherein authenticating the ID token (200) to the personalization server (220) in particular comprises:
• sending the public cryptographic key of the ID token (200) from the ID token (200) to the personalization server (220) via the first encrypted communication channel (160),
• receiving the second ephemeral public cryptographic key of the personalization server (220) by the ID token (200) from the personalization server (220) via the first encrypted communication channel (160),
• generating a second secret shared with the personalization server (220) by the ID token (200) using the private cryptographic key of the ID token (200) and the second ephemeral public cryptographic key of the personalization server (220),
• generating a fourth random value by the ID token (200),
• generating a second shared authentication key for authenticating data sent over the first encrypted sub-channel (162) by the ID token (200), wherein the second shared authentication key is generated using the shared second secret and the fourth random value,
• generating a third authentication token by the ID token (200) using the second authentication key and the second ephemeral public cryptographic key of the personalization server (220) to authenticate the ID token (200) to the personalization server (220),
• sending the fourth random value together with the third authentication token for authenticating the ID token (200) by the ID token (200) to the personalization server (220) via the first encrypted communication channel (160).

9. Method according to any one of the preceding claims, wherein establishing the second encrypted sub-channel (164) further comprises authenticating the personalization server (220) by the control component (109),
wherein authenticating the personalization server (220) by the control component (109) in particular comprises:
• sending a challenge from the control component (109) to the personalization server (220) via the first encrypted communication channel (160),
• receiving a response from the personalization server (220) by the control component (109), wherein the response is a signature of the challenge created using a third private cryptographic key of a third asymmetric key pair of the personalization server (220),
• receiving a third ephemeral public cryptographic key of the personalization server (220) by the control component (109),
• verifying the received response using a third public cryptographic key of the third asymmetric key pair of the personalization server (220) and the sent challenge,
• storing the third ephemeral public cryptographic key of the personalization server (220) by the control component (109) on the mobile device (100).

10. Method according to any one of the preceding claims, wherein establishing the second encrypted sub-channel (164) further comprises authenticating the control component (109) to the personalization server (220),
wherein authenticating the ID application program (108) by the control component (109) to the personalization server (220) in particular comprises:
• sending, from the control component (109) to the security element (110), a request to generate a third secret shared with the personalization server (220), wherein the request comprises the third ephemeral public cryptographic key of the personalization server (220),
• in response to the request, receiving by the control component (109) the shared third secret generated by the security element (110), wherein the generation of the shared third secret by the security element (110) is performed using the second private cryptographic key of the ID application program (108) and the third ephemeral public cryptographic key of the personalization server (220),
• generating a sixth random value by the control component (109),
• generating a third shared authentication key for authenticating data sent over the second encrypted sub-channel (164) by the control component (109), wherein the third shared authentication key is generated using the shared third secret and the sixth random value,
• generating a fourth authentication token by the control component (109) using the third authentication key and the third ephemeral public cryptographic key of the personalization server (220) to authenticate the ID application program (108) to the personalization server (220),
• sending the sixth random value together with the fourth authentication token for authenticating the ID application program (108) by the control component (109) to the personalization server (220) via the first encrypted communication channel (160).

11. Method according to any one of the preceding claims, wherein the method further comprises using the cryptographically secured electronic identity, wherein one or more of the contributed attributes (206) are provided to an ID provider server (240), wherein the using comprises:
• establishing a second encrypted communication channel between the mobile device (100) and the ID provider server (240) over the network (150),
• receiving a read request from an ID provider server (240) to read one or more of the attributes (206) of the electronic identity,
• authenticating the ID provider server (240) by the ID application program (108) using the control component (109),
• authenticating the ID application program (108) to the ID provider server (240) by the security element (110) using the control component (109),
• reading out the attributes (206) to be read from the mobile device (100) by the ID provider server (240) via the network (150) using the control component (109).

12. Method according to claim 11, wherein authenticating the ID provider server (240) using the control component (109) comprises:
• sending a challenge from the control component (109) to the ID provider server (240) via the second encrypted communication channel,
• receiving a response from the ID provider server (240) by the control component (109), wherein the response is a signature of the challenge created using the private cryptographic key of an asymmetric key pair of the ID provider server (240),
• receiving a fourth ephemeral public cryptographic key of an ephemeral key pair of the ID provider server (240) by the control component (109),
• verifying the received response using a public cryptographic key of the asymmetric key pair of the ID provider server (240) and the sent challenge,
• storing the fourth ephemeral public cryptographic key of the ID provider server (240) by the control component (109) on the mobile device (100), and/or
wherein authenticating the ID application program (108) to the ID provider server (240) by the security element (110) using the control component (109) comprises:
• sending a request to generate a fourth secret shared with the ID provider server (240) from the control component (109) to the security element (110), wherein the request comprises the fourth ephemeral public cryptographic key of the ID provider server (240),
• in response to the request, receiving by the control component (109) the shared fourth secret generated by the security element (110), wherein the generation of the shared fourth secret by the security element (110) is performed using the first private cryptographic key of the ID application program (108) and the fourth ephemeral public cryptographic key of the ID provider server (240),
• generating a tenth random value by the control component (109),
• generating a fourth shared authentication key for authenticating data to the ID provider server (240) by the control component (109), wherein the fourth shared authentication key is generated using the shared fourth secret and the tenth random value,
• generating a fifth authentication token by the control component (109) using the fourth authentication key and the fourth ephemeral public cryptographic key of the ID provider server (240) to authenticate the ID application program (108) to the ID provider server (240),
• sending the tenth random value together with the fifth authentication token for authenticating the ID application program (108) by the control component (109) to the ID provider server (240) via the second encrypted communication channel, and/or
wherein the security element (110) is configured such that a successful authentication of the user to the security element (110) is a prerequisite for the authentication of the ID application program (108) of the mobile device (100) to the ID provider server (240) by the security element (110), wherein the user declares consent to the reading of the attributes (206) to be read by the ID provider server (240) with the authentication.

13. Mobile device (100), wherein the mobile device (100) comprises a processor (102) and a memory (104), wherein the memory (104) stores an ID application program (108) for providing an electronic identity, wherein the processor (102) is configured to execute a method for creating a cryptographically secured electronic identity of a user on a mobile device (100),
wherein the ID application program (108) comprises a control component (109) for controlling the creation of the electronic identity, wherein the ID application program (108) further comprises a provisioning component (107) for executing provisioning of the ID application program (108) in the course of creating the cryptographically secured electronic identity,
wherein the mobile device (100) further comprises a security element (110), wherein the mobile device (100) further comprises a communication interface (120) for communicating via a network (150) with a personalization server (220),
wherein provisioning the ID application program (108) comprises:
• in response to a security inspection request from the provisioning component (107), performing a remote security inspection of the security infrastructure of the mobile device (100) using the control component (109) by a personalization server (220) over a network (150),
• receiving a result of the remote security inspection of the personalization server (220), which the control component (109) forwards to the provisioning component (107),
• in response to a positive result of the remote security inspection, sending a key generation request from the provisioning component (107) to the control component (109), which the control component (109) forwards to the security element (110),
• in response to the key generation request, generating by the security element (110) a first asymmetric key pair associated with the ID application program (108) and a second asymmetric key pair associated with the ID application program (108), wherein the first asymmetric key pair comprises a first private cryptographic key and a first public cryptographic key, wherein the second asymmetric key pair comprises a second private cryptographic key and a second public cryptographic key, wherein the security element (110) sends the first and second public cryptographic keys to the control component (109), which forwards the two public cryptographic keys to the provisioning component (107),
• upon receipt of the two public cryptographic keys, generating a certificate request by the provisioning component (107) for generating a certificate of the ID application program (108) comprising the first public cryptographic key, wherein the certificate request comprises the first public cryptographic key,
• sending the certificate request by the provisioning component (107) over the network (150) to the personalization server (220), wherein the certificate request comprises the first public cryptographic key, wherein the provisioning component (107) sends the second public cryptographic key to the personalization server (220) in addition to the certificate request,
• in response to the certificate request, receiving the certificate generated by the personalization server (220) with the first public cryptographic key and a root certificate of a root instance of a PKI by the personalization component,
• storing the certificate of the ID application program (108) and the root certificate on the mobile device (100),
wherein creating the cryptographically secured electronic identity further comprises personalizing the ID application program (108) on the mobile device (100) using an ID token (200), wherein the ID application program (108) further comprises a personalization component for performing personalization of the ID application program (108) in the course of creating the cryptographically secured electronic identity,
wherein the personalizing comprises:
• establishing an encrypted communication channel (160) between the mobile device (100) and the personalization server (220) over the network (150), wherein the personalization component is used to establish the encrypted communication channel (160),
• establishing a first encrypted sub-channel (162) between the ID token (200) and the personalization server (220) within the encrypted communication channel (160) via the mobile device (100), wherein the personalization component is used to establish the first encrypted sub-channel (162)
• reading one or more of the attributes (206) from the ID token (200) by the personalization server (220) via the first encrypted sub-channel (164) within the encrypted communication channel (160),
• establishing a second encrypted sub-channel (164) between the control component (109) and the personalization server (220) within the encrypted communication channel, wherein the personalization component is used to establish the second encrypted sub-channel (164),
• receiving the read attributes (206) by the control component (109) from the personalization server (220) via the second encrypted sub-channel (164) within the encrypted communication channel (160),
• storing the received attributes (206) by the control component (109) on the mobile device (100), wherein the ID application program (108) is configured to use the attributes (206) to prove an identity of the user to another computer system.

14. System (170), wherein the system (170) comprises a mobile device (100) according to claim 13 and a personalization server (220), wherein the personalization server (220) is configured to perform a remote security inspection of the security infrastructure of the mobile device (100) via the network (150), to receive the certificate request with the first public cryptographic key generated by the security element (110) of the mobile device (100), for receiving the second public cryptographic key generated by the security element (110) of the mobile device (100), for creating a certificate with the first public cryptographic key, for providing a root certificate of a root instance of a PKI, and for reading attributes (206) from an ID token (200) via the mobile device (100) and for personalizing the ID application program (108) of the mobile device (100).

15. System (170) according to claim 14, wherein the system (170) further comprises the ID token (200) in which the attributes (206) to be read are stored, and/or
wherein the system (170) further comprises an ID provider server (240), wherein the ID provider server (240) is configured for creating a read request for reading one or more of the attributes (206) of the electronic identity provided by the ID application program (108), for sending the read request to the mobile device (100) for authenticating to the ID application program (108), for authenticating the ID application program (108), and for reading the attributes (206) to be read from the mobile device (100) via the network (150).

## Revendications

1. Procédé de création d'une identité électronique cryptographiquement sécurisée d'un utilisateur sur un appareil mobile (100) qui comprend un élément de sécurité (110), dans lequel un programme d'application d'ID (108) destiné à fournir l'identité électronique est installé sur l'appareil mobile (100), dans lequel le programme d'application d'ID (108) comprend un composant de commande (109) destiné à commander la création de l'identité électronique, dans lequel le programme d'application d'ID (108) comprend en outre un composant de provisionnement (107) destiné à exécuter un provisionnement du programme d'application d'ID (108) au cours de la création de l'identité électronique cryptographiquement sécurisée,
dans lequel le provisionnement du programme d'application d'ID (108) comprend les étapes consistant à :
• en réponse à une requête d'inspection de sécurité depuis le composant de provisionnement (107), faire réaliser une inspection de sécurité à distance de l'infrastructure de sécurité de l'appareil mobile (100) en utilisant le composant de commande (109) par un serveur de personnalisation (220) sur un réseau (150),
• recevoir un résultat de l'inspection de sécurité à distance du serveur de personnalisation (220), que le composant de commande (109) transfère au composant de provisionnement (107),
• en cas de résultat positif de l'inspection de sécurité à distance, envoyer une requête de génération de clés depuis le composant de provisionnement (107) au composant de commande (109), qui transfère le composant de commande (109) à l'élément de sécurité (110),
• en réponse à la requête de génération de clés, faire générer par l'élément de sécurité (110) une première paire de clés asymétriques associée au programme d'application d'ID (108) et une deuxième paire de clés asymétriques associée au programme d'application d'ID (108), dans lequel la première paire de clés asymétriques comprend une première clé cryptographique privée et une première clé cryptographique publique, dans lequel la deuxième paire de clés asymétriques comprend une deuxième clé cryptographique privée et une deuxième clé cryptographique publique, dans lequel l'élément de sécurité (110) envoie les première et deuxième clés cryptographiques publiques au composant de commande (109), qui transfère les deux clés cryptographiques publiques au composant de provisionnement (107),
• lors de la réception des deux clés cryptographiques publiques, faire générer une requête de certificat par le composant de provisionnement (107) pour générer un certificat du programme d'application d'ID (108) comprenant la première clé cryptographique publique, dans lequel la requête de certificat comprend la première clé cryptographique publique,
• faire envoyer la requête de certificat par le composant de provisionnement (107) sur le réseau (150) au serveur de personnalisation (220), dans lequel la requête de certificat comprend la première clé cryptographique publique, dans lequel le composant de provisionnement (107) envoie la deuxième clé cryptographique publique au serveur de personnalisation (220) en plus de la requête de certificat,
• en réponse à la requête de certificat, faire recevoir le certificat généré par le serveur de personnalisation (220) avec la première clé cryptographique publique et un certificat racine d'une instance racine d'une PKI par le composant de personnalisation,
• stocker le certificat du programme d'application d'ID (108) et le certificat racine sur l'appareil mobile (100),
dans lequel le procédé comprend en outre une étape consistant à personnaliser le programme d'application d'ID (108) sur l'appareil mobile (100) en utilisant un jeton d'ID (200), dans lequel le programme d'application d'ID (108) comprend en outre un composant de personnalisation destiné à personnaliser le programme d'application d'ID (108), dans lequel l'étape consistant à personnaliser comprend les étapes consistant à :
• établir un premier canal de communication chiffré (160) entre l'appareil mobile (100) et le serveur de personnalisation (220) sur le réseau (150), dans lequel le composant de personnalisation est utilisé pour établir le premier canal de communication chiffré (160),
• établir un premier sous-canal chiffré (162) entre le jeton d'ID (200) et le serveur de personnalisation (220) au sein du premier canal de communication chiffré (160) par l'intermédiaire de l'appareil mobile (100), dans lequel le composant de personnalisation est utilisé pour établir le premier sous-canal chiffré (162)
• faire lire un ou plusieurs des attributs (206) depuis le jeton d'ID (200) par le serveur de personnalisation (220) par l'intermédiaire du premier sous-canal chiffré (162) au sein du premier canal de communication chiffré (160),
• établir un deuxième sous-canal chiffré (164) entre le composant de commande (109) et le serveur de personnalisation (220) au sein du premier canal de communication chiffré (160), dans lequel le composant de personnalisation est utilisé pour établir le deuxième sous-canal chiffré (164),
• faire recevoir les attributs (206) lus par le composant de commande (109) depuis le serveur de personnalisation (220) par l'intermédiaire du deuxième sous-canal chiffré (164) au sein du premier canal de communication chiffré (160),
• faire stocker les attributs (206) reçus par le composant de commande (109) sur l'appareil mobile (100), dans lequel le programme d'application d'ID (108) est configuré pour utiliser les attributs (206) afin de prouver une identité de l'utilisateur à un autre système informatique.

2. Procédé selon la revendication 1, dans lequel le composant de personnalisation transfère le certificat racine au composant de commande (109) pour stockage, et/ou
dans lequel l'appareil mobile (100) comprend en outre un ou plusieurs capteurs d'authentification (118) destinés à détecter un ou plusieurs facteurs d'authentification de l'utilisateur, dans lequel l'utilisateur est enregistré sur l'appareil mobile (100) et une ou plusieurs valeurs de référence de l'utilisateur enregistré sont stockées dans l'élément de sécurité (110) afin de vérifier au moins un facteur d'authentification détecté de l'utilisateur enregistré,
dans lequel l'élément de sécurité (110) est configuré de telle sorte qu'un prérequis pour la génération de la première paire de clés asymétriques est une authentification réussie de l'utilisateur vis-à-vis de l'élément de sécurité (110), dans lequel l'utilisateur déclare consentir à la génération de la première paire de clés asymétriques avec l'authentification,
dans lequel l'élément de sécurité (110) est en outre configuré de telle sorte qu'un prérequis pour l'utilisation de la première clé cryptographique privée par l'élément de sécurité (110) est dans chaque cas une authentification réussie supplémentaire de l'utilisateur vis-à-vis de l'élément de sécurité (110), dans lequel l'utilisateur déclare dans chaque cas avec les authentifications supplémentaires consentir à l'utilisation correspondante de la première clé cryptographique privée, et/ou
dans lequel l'élément de sécurité (110) est un élément de sécurité spécifique d'un appareil (110), et/ou
dans lequel le premier canal de communication chiffré (160) est chiffré avec une première clé de session cryptographique symétrique éphémère spécifique d'un canal, dans lequel le premier sous-canal chiffré (162) est chiffré avec une deuxième clé de session cryptographique symétrique éphémère spécifique d'un canal, dans lequel le deuxième sous-canal chiffré (164) est chiffré avec une troisième clé de session cryptographique symétrique éphémère spécifique d'un canal, et/ou
dans lequel l'étape consistant à personnaliser comprend en outre les étapes consistant à :
• faire générer, par l'élément de sécurité (110), une troisième paire de clés asymétriques associée au programme d'application d'ID (108), dans lequel la troisième paire de clés asymétriques comprend une troisième clé cryptographique privée et une troisième clé cryptographique publique, dans lequel la troisième paire de clés asymétriques est destinée à authentifier le programme d'application d'ID (108) au cours de l'utilisation des attributs (206), et/ou
dans lequel l'étape consistant à personnaliser comprend en outre les étapes consistant à :
• faire recevoir, par le composant de commande (109), une ou plusieurs clés de vérification de signature racine depuis le serveur de personnalisation (220) par l'intermédiaire du deuxième sous-canal chiffré (164) au sein du premier canal de communication chiffré (160),
• faire stocker les clés de vérification de signature racine reçues par le composant de commande (109) sur l'appareil mobile (100), dans lequel le programme d'application d'ID (108) est conçu pour utiliser les clés de vérification de signature racine afin de vérifier les signatures de certificat d'une ou de plusieurs instances racines ayant des certificats utilisés chacun au cours d'une lecture des attributs (206) afin d'authentifier un système informatique de lecture vis-à-vis du programme d'application d'ID (108), et/ou
dans lequel l'étape consistant à personnaliser comprend en outre les étapes consistant à :
• faire recevoir une signature des attributs (206) depuis le serveur de personnalisation (220) par le composant de commande (109) par l'intermédiaire du deuxième sous-canal chiffré (164) au sein du canal de communication chiffré (160), dans lequel la signature sert de preuve d'authenticité des attributs (206),
• faire stocker la signature reçue des attributs (206) par le composant de commande (109) sur l'appareil mobile (100).

3. Procédé selon l'une quelconque des revendications précédentes, dans lequel l'étape consistant à établir le premier canal de communication chiffré (160) comprend une étape consistant à négocier la première clé de session cryptographique symétrique éphémère spécifique d'un canal.

4. Procédé selon la revendication 3, dans lequel l'étape consistant à négocier la première clé de session cryptographique symétrique éphémère spécifique d'un canal comprend les étapes consistant à :
• faire générer une première valeur aléatoire par l'appareil mobile (100),
• faire générer la première clé de session cryptographique symétrique éphémère spécifique d'un canal en utilisant la première valeur aléatoire par l'appareil mobile (100),
• faire recevoir un premier certificat du serveur de personnalisation (220) avec une quatrième clé cryptographique publique d'une quatrième paire de clés cryptographiques asymétriques du serveur de personnalisation (220) par l'appareil mobile (100) depuis le serveur de personnalisation (220),
• faire chiffrer la première valeur aléatoire en utilisant la première clé cryptographique publique reçue du serveur de personnalisation (220) par l'appareil mobile (100),
• faire envoyer la première valeur aléatoire chiffrée au serveur de personnalisation (220) par l'appareil mobile (100) pour faire générer la première clé de session cryptographique symétrique éphémère spécifique d'un canal par le serveur de personnalisation (220).

5. Procédé selon la revendication 4, dans lequel l'étape consistant à établir le premier canal de communication chiffré (160) comprend en outre une authentification mutuelle du programme d'application d'ID (108) de l'appareil mobile (100) et du serveur de personnalisation (220),
dans lequel l'élément de sécurité (110) est configuré en particulier de telle sorte qu'un prérequis pour authentifier le programme d'application d'ID (108) de l'appareil mobile (100) vis-à-vis du serveur de personnalisation (220) est une authentification réussie de l'utilisateur vis-à-vis de l'élément de sécurité (110), dans lequel l'utilisateur déclare consentir à la personnalisation du programme d'application d'ID (108) avec l'authentification, et/ou
dans lequel l'appareil mobile (100) destiné à authentifier le serveur de personnalisation (220) envoie en particulier le certificat avec la première clé cryptographique publique du programme d'application d'ID (108) et un message signé par l'élément de sécurité (110) avec la première clé cryptographique privée du programme d'application d'ID (108) au serveur de personnalisation (220).

6. Procédé selon l'une quelconque des revendications précédentes, dans lequel l'étape consistant à établir le premier sous-canal chiffré (162) comprend une étape consistant à authentifier l'utilisateur vis-à-vis du jeton d'ID (200) par l'intermédiaire de l'appareil mobile (100),
dans lequel l'étape consistant à authentifier l'utilisateur vis-à-vis du jeton d'ID (200) comprend en particulier les étapes consistant à :
• faire recevoir, par le composant de personnalisation, un facteur d'authentification supplémentaire de l'utilisateur détecté par le ou les capteurs d'authentification (118),
• générer une clé cryptographique symétrique en utilisant le facteur d'authentification supplémentaire reçu,
• faire recevoir une deuxième valeur aléatoire chiffrée par le composant de personnalisation depuis le jeton d'ID (200), dans lequel la deuxième valeur aléatoire chiffrée est chiffrée en utilisant la clé cryptographique symétrique générée par le jeton d'ID (200) en utilisant une valeur de référence supplémentaire de l'utilisateur enregistré stockée dans le jeton d'ID (200) pour vérifier le facteur d'authentification supplémentaire,
• faire déchiffrer la deuxième valeur aléatoire chiffrée reçue en utilisant la clé cryptographie symétrique générée,
• faire générer une première paire de clés cryptographiques asymétriques éphémères du programme d'application d'ID (108) par l'élément de sécurité (110) comprenant une première clé cryptographique privée éphémère et une première clé cryptographique publique éphémère du programme d'application d'ID (108),
• envoyer la première clé cryptographique publique éphémère du programme d'application d'ID (108) au jeton d'ID (200),
• recevoir une clé cryptographique publique éphémère du jeton d'ID (200),
• faire générer un premier secret partagé avec le jeton d'ID (200) par l'élément de sécurité (110) en utilisant la deuxième valeur aléatoire déchiffrée, la première clé cryptographique privée éphémère du programme d'application d'ID (108) et la clé cryptographique publique éphémère du jeton d'ID (200),
• faire recevoir le premier secret partagé par le composant de commande (109),
• faire générer une première clé d'authentification partagée pour authentifier mutuellement le programme d'application d'ID (108) et le jeton d'ID (200) par le composant de commande (109) en utilisant le premier secret partagé,
• faire générer un premierjeton d'authentification en utilisant la première clé d'authentification et la première clé cryptographique publique éphémère du jeton d'ID (200) par le composant de commande (109),
• faire envoyer le premier jeton d'authentification généré par le composant de commande (109) au jeton d'ID (200) par le composant de personnalisation,
• faire recevoir un deuxième jeton d'authentification depuis le jeton d'ID (200) par le composant de personnalisation, qui transfère le deuxième jeton d'authentification au composant de commande (109),
• faire vérifier le deuxième jeton d'authentification reçu par le composant de commande (109) en utilisant la première clé d'authentification et la première clé cryptographique publique éphémère du programme d'application d'ID (108).

7. Procédé selon l'une quelconque des revendications précédentes, dans lequel l'étape consistant à établir le premier sous-canal chiffré (162) comprend une étape consistant à faire authentifier le serveur de personnalisation (220) par le jeton d'ID (200) par l'intermédiaire de l'appareil mobile (100),
dans lequel l'étape consistant à faire authentifier le serveur de personnalisation (220) par le jeton d'ID (200) comprend en particulier les étapes consistant à :
• faire recevoir un deuxième certificat du serveur de personnalisation (220), comprenant une seconde clé cryptographique publique d'une seconde paire de clés cryptographiques asymétriques du serveur de personnalisation (220), par l'intermédiaire du premier canal de communication chiffré (160),
• vérifier une signature du deuxième certificat reçu du serveur de personnalisation (220),
• faire générer une troisième valeur aléatoire par le jeton d'ID (200),
• envoyer la troisième valeur aléatoire en tant que question au serveur de personnalisation (220) par l'intermédiaire du premier canal de communication chiffré (160),
• recevoir une première signature de la question en tant que réponse depuis le serveur de personnalisation (220) par l'intermédiaire du premier canal de communication chiffré (160), dans lequel la question est signée en utilisant une deuxième clé cryptographique privée du serveur de personnalisation (220),
• vérifier la première signature reçue en utilisant la deuxième clé cryptographique publique du serveur de personnalisation (220) et la troisième valeur aléatoire envoyée.

8. Procédé selon l'une quelconque des revendications précédentes, dans lequel l'étape consistant à établir le premier sous-canal chiffré (162) comprend une étape consistant à authentifier le jeton d'ID (200) vis-à-vis du serveur de personnalisation (220) par l'intermédiaire de l'appareil mobile (100),
dans lequel l'étape consistant à authentifier le jeton d'ID (200) vis-à-vis du serveur de personnalisation (220) comprend en particulier les étapes consistant à :
• envoyer la clé cryptographique publique du jeton d'ID (200) depuis le jeton d'ID (200) au serveur de personnalisation (220) par l'intermédiaire du premier canal de communication chiffré (160),
• faire recevoir la deuxième clé cryptographique publique éphémère du serveur de personnalisation (220) par le jeton d'ID (200) depuis le serveur de personnalisation (220) par l'intermédiaire du premier canal de communication chiffré (160),
• faire générer un deuxième secret partagé avec le serveur de personnalisation (220) par le jeton d'ID (200) en utilisant la clé cryptographique privée du jeton d'ID (200) et la deuxième clé cryptographique publique éphémère du serveur de personnalisation (220),
• faire générer une quatrième valeur aléatoire par le jeton d'ID (200),
• faire générer une deuxième clé d'authentification partagée pour authentifier les données envoyées sur le premier sous-canal chiffré (162) par le jeton d'ID (200), dans lequel la deuxième clé d'authentification partagée est générée en utilisant le deuxième secret partagé et la quatrième valeur aléatoire,
• faire générer un troisième jeton d'authentification par le jeton d'ID (200) en utilisant la deuxième clé d'authentification et la deuxième clé cryptographique publique éphémère du serveur de personnalisation (220) afin d'authentifier le jeton d'ID (200) vis-à-vis du serveur de personnalisation (220),
• faire envoyer la quatrième valeur aléatoire conjointement au troisième jeton d'authentification pour authentifier le jeton d'ID (200) par le jeton d'ID (200) au serveur de personnalisation (220) par l'intermédiaire du premier canal de communication chiffré (160).

9. Procédé selon l'une quelconque des revendications précédentes, dans lequel l'étape consistant à établir le deuxième sous-canal chiffré (164) comprend une étape consistant à faire authentifier le serveur de personnalisation (220) par le composant de commande (109),
dans lequel l'étape consistant à faire authentifier le serveur de personnalisation (220) par le composant de commande (109) comprend en particulier les étapes consistant à :
• envoyer une question depuis le composant de commande (109) au serveur de personnalisation (220) par l'intermédiaire du premier canal de communication chiffré (160),
• faire recevoir une réponse depuis le serveur de personnalisation (220) par le composant de commande (109), dans lequel la réponse est une signature de la question créée en utilisant une troisième clé cryptographique privée d'une troisième paire de clés asymétriques du serveur de personnalisation (220),
• faire recevoir une troisième clé cryptographique publique éphémère du serveur de personnalisation (220) par le composant de commande (109),
• vérifier la réponse reçue en utilisant une troisième clé cryptographique publique de la troisième paire de clés asymétriques du serveur de personnalisation (220) et la question envoyée,
• faire stocker la troisième clé cryptographique publique éphémère du serveur de personnalisation (220) par le composant de commande (109) sur l'appareil mobile (100).

10. Procédé selon l'une quelconque des revendications précédentes, dans lequel l'étape consistant à établir le deuxième sous-canal chiffré (164) comprend en outre une étape consistant à authentifier le composant de commande (109) vis-à-vis du serveur de personnalisation (220),
dans lequel l'étape consistant à faire authentifier le programme d'application d'ID (108) par le composant de commande (109) vis-à-vis du serveur de personnalisation (220) comprend en particulier les étapes consistant à :
• envoyer, depuis le composant de commande (109) à l'élément de sécurité (110), une requête pour générer un troisième secret partagé avec le serveur de personnalisation (220), dans lequel la requête comprend la troisième clé cryptographique publique éphémère du serveur de personnalisation (220),
• en réponse à la requête, faire recevoir par le composant de commande (109) le troisième secret partagé généré par l'élément de sécurité (110), dans lequel la génération du troisième secret partagé par l'élément de sécurité (110) est réalisée en utilisant la deuxième clé cryptographique privée du programme d'application d'ID (108) et la troisième clé cryptographique publique éphémère du serveur de personnalisation (220),
• faire générer une sixième valeur aléatoire par le composant de commande (109),
• faire générer une troisième clé d'authentification partagée pour authentifier les données envoyées sur le deuxième sous-canal chiffré (164) par le composant de commande (109), dans lequel la troisième clé d'authentification partagée est générée en utilisant le troisième secret partagé et la sixième valeur aléatoire,
• faire générer un quatrième jeton d'authentification par le composant de commande (109) en utilisant la troisième clé d'authentification et la troisième clé cryptographique publique éphémère du serveur de personnalisation (220) pour authentifier le programme d'application d'ID (108) vis-à-vis du serveur de personnalisation (220),
• envoyer la sixième valeur aléatoire conjointement au quatrième jeton d'authentification pour faire authentifier le programme d'application d'ID (108) par le composant de commande (109) vis-à-vis du serveur de personnalisation (220) par l'intermédiaire du premier canal de communication chiffré (160).

11. Procédé selon l'une quelconque des revendications précédentes, dans lequel le procédé comprend en outre une étape consistant à utiliser l'identité électronique cryptographiquement sécurisée, dans lequel un ou plusieurs des attributs (206) apportés sont fournis à un serveur fournisseur d'ID (240), dans lequel l'étape consistant à utiliser comprend les étapes consistant à :
• établir un deuxième canal de communication chiffré entre l'appareil mobile (100) et le serveur fournisseur d'ID (240) sur le réseau (150),
• recevoir une requête de lecture depuis un serveur fournisseur d'ID (240) pour lire un ou plusieurs des attributs (206) de l'identité électronique,
• faire authentifier le serveur fournisseur d'ID (240) par le programme d'application d'ID (108) en utilisant le composant de commande (109),
• faire authentifier le programme d'application d'ID (108) vis-à-vis du serveur fournisseur d'ID (240) par l'élément de sécurité (110) en utilisant le composant de commande (109),
• faire lire les attributs (206) à faire lire depuis l'appareil mobile (100) par le serveur fournisseur d'ID (240) par l'intermédiaire du réseau (150) en utilisant le composant de commande (109).

12. Procédé selon la revendication 11, dans lequel l'étape consistant à identifier le serveur fournisseur d'ID (240) en utilisant le composant de commande (109) comprend les étapes consistant à :
• envoyer une question depuis le composant de commande (109) au serveur fournisseur d'ID (240) par l'intermédiaire du deuxième canal de communication chiffré,
• faire recevoir une réponse depuis le serveur fournisseur d'ID (240) par le composant de commande (109), dans lequel la réponse est une signature de la question créée en utilisant la clé cryptographique privée d'une paire de clés asymétriques du serveur fournisseur d'ID (240),
• faire recevoir une quatrième clé cryptographique publique éphémère d'une paire de clés éphémères du serveur fournisseur d'ID (240) par le composant de commande (109),
• vérifier la réponse reçue en utilisant une clé cryptographique publique de la paire de clés asymétriques du serveur fournisseur d'ID (240) et la question envoyée,
• faire stocker la quatrième clé cryptographique publique éphémère du serveur fournisseur d'ID (240) par le composant de commande (109) sur l'appareil mobile (100), et/ou
dans lequel l'étape consistant à faire authentifier le programme d'application d'ID (108) vis-à-vis du serveur fournisseur d'ID (240) par l'élément de sécurité (110) en utilisant le composant de commande (109) comprend les étapes consistant à :
• envoyer une requête pour générer un quatrième secret partagé avec le serveur fournisseur d'ID (240) depuis le composant de commande (109) à l'élément de sécurité (110), dans lequel la requête comprend la quatrième clé cryptographique publique éphémère du serveur fournisseur d'ID (240),
• en réponse à la requête, faire recevoir par le composant de commande (109) le quatrième secret partagé généré par l'élément de sécurité (110), dans lequel la génération du quatrième secret partagé par l'élément de sécurité (110) est réalisée en utilisant la première clé cryptographique privée du programme d'application d'ID (108) et la quatrième clé cryptographique publique éphémère du serveur fournisseur d'ID (240),
• faire générer une dixième valeur aléatoire par le composant de commande (109),
• faire générer une quatrième clé d'authentification partagée pour authentifier les données vis-à-vis du serveur fournisseur d'ID (240) par le composant de commande (109), dans lequel la quatrième clé d'authentification partagée est générée en utilisant le quatrième secret partagé et la dixième valeur aléatoire,
• faire générer un cinquième jeton d'authentification par le composant de commande (109) en utilisant la quatrième clé d'authentification et la quatrième clé cryptographique publique éphémère du serveur fournisseur d'ID (240) afin d'authentifier le programme d'application d'ID (108) vis-à-vis du serveur fournisseur d'ID (240),
• envoyer la dixième valeur aléatoire conjointement au cinquième jeton d'authentification pour faire authentifier le programme d'application d'ID (108) par le composant de commande (109) vis-à-vis du serveur fournisseur d'ID (240) par l'intermédiaire du deuxième canal de communication chiffré, et/ou
dans lequel l'élément de sécurité (110) est configuré de telle sorte qu'une authentification réussie de l'utilisateur vis-à-vis de l'élément de sécurité (110) est un prérequis pour l'authentification du programme d'application d'ID (108) de l'appareil mobile (100) vis-à-vis du serveur fournisseur d'ID (240) par l'élément de sécurité (110), dans lequel l'utilisateur déclare consentir à la lecture des attributs (206) à faire lire par le serveur fournisseur d'ID (240) avec l'authentification.

13. Appareil mobile (100), dans lequel l'appareil mobile (100) comprend un processeur (102) et une mémoire (104), dans lequel la mémoire (104) stocke un programme d'application d'ID (108) destiné à fournir une identité électronique, dans lequel le processeur (102) est configuré pour exécuter un procédé de création d'une identité électronique cryptographiquement sécurisée d'un utilisateur sur un appareil mobile (100),
dans lequel le programme d'application d'ID (108) comprend un composant de commande (109) destiné à commander la création de l'identité électronique, dans lequel le programme d'application d'ID (108) comprend en outre un composant de provisionnement (107) destiné à exécuter le provisionnement du programme d'application d'ID (108) au cours de la création de l'identité électronique cryptographiquement sécurisée,
dans lequel l'appareil mobile (100) comprend en outre un élément de sécurité (110), dans lequel l'appareil mobile (100) comprend en outre une interface de communication (120) destinée à communiquer par l'intermédiaire d'un réseau (150) avec un serveur de personnalisation (220),
dans lequel le provisionnement du programme d'application d'ID (108) comprend les étapes consistant à :
• en réponse à une requête d'inspection de sécurité depuis le composant de provisionnement (107), faire réaliser une inspection de sécurité à distance de l'infrastructure de sécurité de l'appareil mobile (100) en utilisant le composant de commande (109) par un serveur de personnalisation (220) sur un réseau (150),
• recevoir un résultat de l'inspection de sécurité à distance du serveur de personnalisation (220), que le composant de commande (109) transfère au composant de provisionnement (107),
• en réponse à un résultat positif de l'inspection de sécurité à distance, envoyer une requête de génération de clés depuis le composant de provisionnement (107) au composant de commande (109), que le composant de commande (109) transfère à l'élément de sécurité (110),
• en réponse à la requête de génération de clés, faire générer par l'élément de sécurité (110) une première paire de clés asymétriques associée au programme d'application d'ID (108) et une deuxième paire de clés asymétriques associée au programme d'application d'ID (108), dans lequel la première paire de clés asymétriques comprend une première clé cryptographique privée et une première clé cryptographique publique, dans lequel la deuxième paire de clés asymétriques comprend une deuxième clé cryptographique privée et une deuxième clé cryptographique publique, dans lequel l'élément de sécurité (110) envoie les première et deuxième clés cryptographiques publiques au composant de commande (109), qui transfère les deux clés cryptographiques publiques au composant de provisionnement (107),
• lors de la réception des deux clés cryptographiques publiques, faire générer une requête de certificat par le composant de provisionnement (107) pour générer un certificat du programme d'application d'ID (108) comprenant la première clé cryptographique publique, dans lequel la requête de certificat comprend la première clé cryptographique publique,
• faire envoyer la requête de certificat par le composant de provisionnement (107) sur le réseau (150) au serveur de personnalisation (220), dans lequel la requête de certificat comprend la première clé cryptographique publique, dans lequel le composant de provisionnement (107) envoie la deuxième clé cryptographique publique au serveur de personnalisation (220) en plus de la requête de certificat,
• en réponse à la requête de certificat, faire recevoir le certificat généré par le serveur de personnalisation (220) avec la première clé cryptographique publique et un certificat racine d'une instance racine d'une PKI par le composant de personnalisation,
• stocker le certificat du programme d'application d'ID (108) et le certificat racine sur l'appareil mobile (100),
dans lequel la création de l'identité électronique cryptographiquement sécurisée comprend en outre une étape consistant à personnaliser le programme d'application d'ID (108) sur l'appareil mobile (100) en utilisant un jeton d'ID (200), dans lequel le programme d'application d'ID (108) comprend en outre un composant de personnalisation destiné à réaliser la personnalisation du programme d'application d'ID (108) au cours de la création de l'identité électronique cryptographiquement sécurisée,
dans lequel l'étape consistant à personnaliser comprend les étapes consistant à :
• établir un canal de communication chiffré (160) entre l'appareil mobile (100) et le serveur de personnalisation (220) sur le réseau (150), dans lequel le composant de personnalisation est utilisé pour établir le canal de communication chiffré (160),
• établir un premier sous-canal chiffré (162) entre le jeton d'ID (200) et le serveur de personnalisation (220) au sein du canal de communication chiffré (160) par l'intermédiaire de l'appareil mobile (100), dans lequel le composant de personnalisation est utilisé pour établir le premier sous-canal chiffré (162)
• faire lire un ou plusieurs des attributs (206) depuis le jeton d'ID (200) par le serveur de personnalisation (220) par l'intermédiaire du premier sous-canal chiffré (164) au sein du canal de communication chiffré (160),
• établir un deuxième sous-canal chiffré (164) entre le composant de commande (109) et le serveur de personnalisation (220) au sein du canal de communication chiffré, dans lequel le composant de personnalisation est utilisé pour établir le deuxième sous-canal chiffré (164),
• faire recevoir les attributs (206) lus par le composant de commande (109) depuis le serveur de personnalisation (220) par l'intermédiaire du deuxième sous-canal chiffré (164) au sein du canal de communication chiffré (160),
• faire stocker les attributs (206) reçus par le composant de commande (109) sur l'appareil mobile (100), dans lequel le programme d'application d'ID (108) est configuré pour utiliser les attributs (206) afin de prouver l'identité de l'utilisateur à un autre système informatique.

14. Système (170), dans lequel le système (170) comprend un appareil mobile (100) selon la revendication 13 et un serveur de personnalisation (220), dans lequel le serveur de personnalisation (220) est configuré pour réaliser une inspection de sécurité à distance de l'infrastructure de sécurité de l'appareil mobile (100) par l'intermédiaire du réseau (150), pour recevoir la requête de certificat avec la première clé cryptographique publique générée par l'élément de sécurité (110) de l'appareil mobile (100), pour recevoir la deuxième clé cryptographique publique générée par l'élément de sécurité (110) de l'appareil mobile (100), pour créer un certificat avec la première clé cryptographique publique, pour fournir un certificat racine d'une instance racine d'une PKI, et pour lire les attributs (206) depuis un jeton d'ID (200) par l'intermédiaire de l'appareil mobile (100) et pour personnaliser le programme d'application d'ID (108) de l'appareil mobile (100).

15. Système (170) selon la revendication 14, dans lequel le système (170) comprend en outre le jeton d'ID (200) dans lequel les attributs (206) à faire lire sont stockés, et/ou
dans lequel le système (170) comprend en outre un serveur fournisseur d'ID (240), dans lequel le serveur fournisseur d'ID (240) est configuré pour créer une requête de lecture destinée à lire un ou plusieurs des attributs (206) de l'identité électronique fournie par le programme d'application d'ID (108), à envoyer la requête de lecture à l'appareil mobile (100) pour authentification vis-à-vis du programme d'application d'ID (108), à authentifier le programme d'application d'ID (108) et à lire les attributs (206) à faire lire depuis l'appareil mobile (100) par l'intermédiaire du réseau (150).
